# EUROPÄISCHE PATENTSCHRIFT

(11) **EP 0 554 525 B1**
(45) Veröffentlichungstag und Bekanntmachung des Hinweises auf die Patenterteilung: **30.07.1997**
(21) Anmeldenummer: 92119113.6
(22) Anmeldetag: 07.11.1992
(51) Int. Cl.: H04L 29/06

(54) **Verfahren zum übersichtlichen Betrieb einer Übertragungs-Einrichtung**
Method for the transparent operation of a transmission device
Méthode pour l'exploitation transparante d'un dispositif de transmission

(30) Priorität: 07.02.1992 CH 374/92
(43) Veröffentlichungstag der Anmeldung: 11.08.1993
(73) Patentinhaber: Landis & Gyr Technology Innovation AG, 6301 Zug (CH)
(72) Erfinder: Lippuner, Alain, CH-1400 Yverdon-les-Bains (CH)

(56) Entgegenhaltungen:
- WO-A-88/07293
- US-A- 4 680 773
- PROCEEDINGS OF THE IEEE. Bd. 71, Nr. 12, Dezember 1983, NEW YORK US Seiten 1414 - 1419 D.LEWAN ET AL 'THE OSI FILE SERVICE'
- IEEE TRANSACTIONS ON COMMUNICATION TECHNOLOGY. Bd. 28, Nr. 4, April 1980, NEW YORK US Seiten 455 - 467 D.E.CARLSON 'BIT-ORIENTED DATA LINK CONTROL PROCEDURES'
- PROCEEDINGS OF THE IEEE. Bd. 71, Nr. 12, Dezember 1983, NEW YORK US Seiten 1341 - 1345 P.F.LININGTON 'FUNDAMENTALS OF THE LAYER SERVICE DEFINITIONS AND PROTOCOL SPECIFICATIONS'

## Beschreibung

Die Erfindung bezieht sich auf ein Verfahren zum übersichtlichen Betrieb einer Übertragungs-Einrichtung gemäss dem Oberbegriff des Anspruchs 1.

Die Übertragungs-Einrichtung dient der Übertragung einer grossen Quantität von Informationen und ist vorzugsweise eine öffentliche Telefoneinrichtung oder eine Kredit-Telefoneinrichtung. Das Übertragungs-Netzwerk ist dann ein schaltbares Netzwerk, nämlich das öffentliche Telefonnetz.

Der Erfindung liegt die Aufgabe zugrunde, ein besonders einfaches und übersichtliches sowie ein den neuesten und modernsten Erfordernissen der Übertragungstechnik entsprechendes Verfahren der eingangs genannten Art zu verwirklichen.

Die genannte Aufgabe wird erfindungsgemäss durch die im Kennzeichen des Anspruchs 1 angegebenen Merkmale gelöst.

Vorteilhafte Ausgestaltungen der Erfindung ergeben sich aus den Unteransprüchen.

Ausführungsbeispiele der Erfindung sind in der Zeichnung dargestellt und werden im folgenden näher beschrieben.

Es zeigen:
- Fig. 1: ein vereinfachtes Blockschaltbild einer Übertragungs-Einrichtung,
- Fig. 2: vereinfachte Blockschaltbilder zweier mittels einer Übertragungsverbindung verbundener Teilnehmerstationen,
- Fig. 3: eine schematische Darstellung einer Aufteilung von zu übertragenden Informationen INFO oder Dateiinhalten COFI in Daten-Blöcke,
- Fig. 4: eine schematische Darstellung einer Aufteilung eines Daten-Blocks in Daten-Pakete,
- Fig. 5: eine schematische Darstellung einer HDLC-Codierung eines Daten-Pakets mit anschliessender Aufteilung in Bitgruppen,
- Fig. 6: eine schematische Darstellung einer Aufteilung eines Verfahrensprogramms in Verfahrensstufen mit zugehörigen Daten-Blöcken und Daten-Paketen,
- Fig. 7: ein Blockschaltbild einer Funktionsanordnung,
- Fig. 8: ein Blockschaltbild eines Signalfluss-Diagramms einer ersten Verfahrensstufe zwecks Herstellung einer Übertragungsverbindung,
- Fig. 9: ein Blockschaltbild eines Signalfluss-Diagramms einer weiteren Verfahrensstufe zwecks Übertragung von Informationen,
- Fig.10: ein Blockschaltbild eines Signalfluss-Diagramms einer letzten Verfahrensstufe zwecks Auflösung einer vorhandenen Übertragungsverbindung,
- Fig.11: eine weitere schematische Darstellung einer Aufteilung eines Verfahrensprogramms in Verfahrensstufen mit zugehörigen Daten-Blöcken und Daten-Paketen,
- Fig.12: ein Blockschaltbild eines Signalfluss-Diagramms einer Verfahrensstufe zwecks Übertragung einer Datei und
- Fig.13: ein Blockschaltbild eines Signalfluss-Diagramms einer Verfahrensstufe zum Aufruf einer Datei.

Gleiche Bezugszahlen bezeichnen in allen Figuren der Zeichnung gleiche Teile.

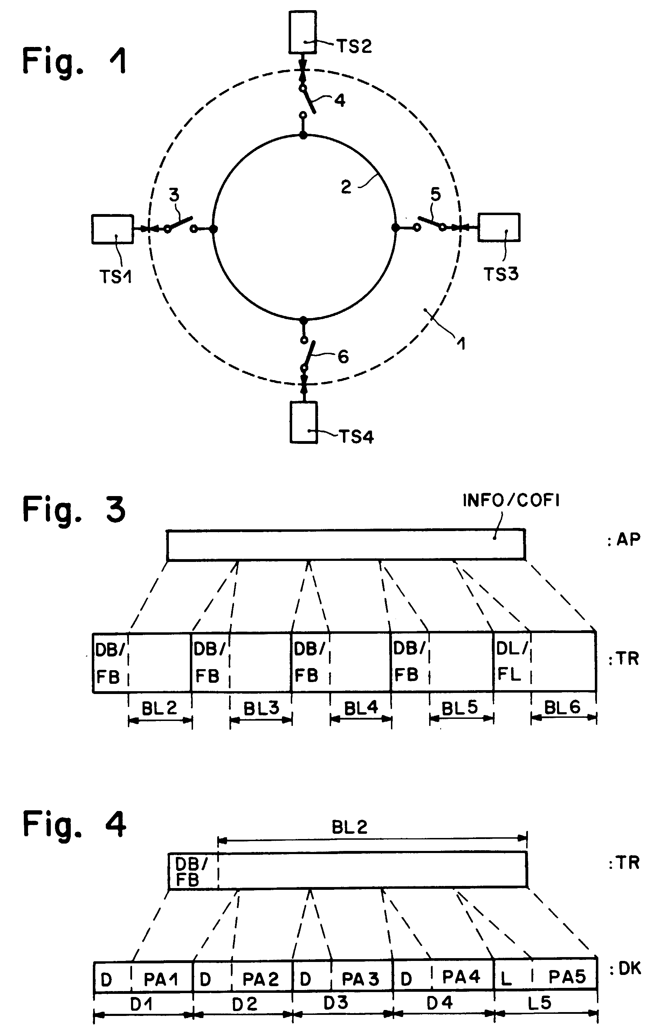

Eine in der Fig. 1 symbolisch dargestellte vereinfachte Übertragungs-Einrichtung besteht aus mehreren, je eine Computer-Anordnung aufweisenden und als Sende/Empfangs-Stationen arbeitenden Teilnehmerstationen, die über ein Übertragungs-Netzwerk 1 miteinander verbunden sind und nachfolgend nur mehr abgekürzt Stationen genannt werden. Das Übertragungs-Netzwerk 1 enthält vorzugsweise eine Vielzahl von Schaltern und/oder Wählern zur Herstellung einer physischen Übertragungsverbindung zwischen zwei der Stationen.

In der Fig. 1 gilt die Annahme, dass vier Stationn TS1, TS2, TS3 und TS4 vorhanden sind und dass ein Schalter 3, 4, 5 bzw. 6 pro Station vorhanden ist, der, wenn er geschlossen ist, jeweils die zugehörige Station mit einer Übertragungsleitung 2, z. B. einer Telefonleitung, verbindet. Die Übertragungsleitung 2 und die vier Schalter 3 bis 6 bilden zusammen das Übertragungs-Netzwerk 1. Die Stationen TS1 bis TS4 sind z. B. alle identisch aufgebaut.

In der Fig. 2 gilt die Annahme, dass Informationen INFO oder Dateiinhalte COFI ("contents file") zwischen den beiden Stationen TS1 und TS2 über das Übertragungs-Netzwerk 1 zu übertragen sind. Aus diesem Grund sind dort nur mehr die beiden Stationen TS1 und TS2 sowie das sie verbindende Übertragungs-Netzwerk 1 dargestellt. Sobald eine physische Übertragungsverbindung zwischen den beiden Stationen TS1 und TS2 hergestellt ist, sind die beiden Schalter 3 und 4 geschlossen. Aus Gründen der Übersichtlickeit wurden in der Fig. 2 die zu den Stationen TS1 und TS2 gehörenden Schalter 3 und 4 sowie weitere der Übertragung dienende Hilfsmittel, wie z. B. Filter und Verstärker, nicht dargestellt. Jede Station TS1 bis TS4 enthält eine Computer-Anordnung 7, ein Modem (Modulator-Demodulator) 8 und einen Sender-Empfänger 9, die in der angegebenen Reihenfolge in Kaskade geschaltet sind. Ein nicht für die Kaskadenschaltung 7;8;9 verwendeter Anschluss 10 des Sender-Empfängers 9 bildet jeweils einen Sende/Empfangs-Anschluss der zugehörigen Station, der mit dem Übertragungs-Netzwerk 1 verbunden ist. Der Anschluss 10 des Sender-Empfängers 9 der Station TS1 ist somit über das Übertragungs-Netzwerk 1 mit dem Anschluss 10 des Sender-Empfängers 9 der Station TS2 verbunden. Die Modeme 8 und die Sender-Empfänger 9 der beiden Stationen TS1 und TS2, das Übertragungs-Netzwerk 1 sowie alle weiteren nicht dargestellten und der Informations-Übertragung dienenden mechanischen und elektrischen Mittel, wie z. B. Filter, Verstärker und die Schalter 3 und 4, bilden zusammen ein physisches Übertragungsmedium PH_{MED}. Die Informations-Übertragung zwischen den beiden Stationen TS 1 und TS2 erfolgt im Halbduplex- oder im Duplex-Verfahren mit einer Übertragungs-Geschwindigkeit von 300 oder 1200 Baud/Sekunden.

Jede Computer-Anordnung 7 besteht aus einem logisch geordneten und logisch zusammengesetzten Satz von Subsystemen. Mehrere gleichrangige Subsysteme bilden zusammen eine Zugriffsebene. Die Zugriffsebenen sind hierarchisch geordnet und werden nachfolgend abgekürzt Ebenen genannt. In der Computer-Anordnung 7 einer jeden Station TS1 bis TS4 sind folgende vier Ebenen vorhanden:
- Eine in der Hierarchie ranghöchste Anwendungs-Ebene AP ("Application Layer"), welche nachfolgend abgekürzt als Ebene AP bezeichnet wird.
- Eine in der Hierarchie zweitranghöchste Transport-Ebene TR ("Transport Layer"), welche nachfolgend abgekürzt als Ebene TR bezeichnet wird.
- Eine in der Hierarchie drittranghöchste Datenverbindungs-Ebene DK ("Data Link Layer"), welche nachfolgend abgekürzt als Ebene DK bezeichnet wird.
- Eine in der Hierarchie rangniedrigste physische Ebene PH ("Physical Layer"), welche nachfolgend abgekürzt als Ebene PH bezeichnet wird.

Die Ebenen AP, TR, DK und PH einer jeden Station sind in der angegebenen Reihenfolge, d. h. in der Reihenfolge ihrer Rangordnung, in Kaskade angeordnet, wobei ein durch einen Eingangs/Ausgangs-Anschluss der Ebene PH gebildeter Anschluss 11 der Kaskadenanordnung AP;TR;DK;PH derjenige Anschluss der Computer-Anordnung 7 ist, der in der betreffenden Station mit einem Anschluss 12 des Modems 8 verbunden ist zwecks Bildung der Kaskadenschaltung 7;8;9. Die Ebenen PH der beiden Stationen TS1 und TS2 sind über das Übertragungsmedium PH_{MED} miteinander verbunden.

Jedes aktive Element einer Ebene arbeitet nur zusammen mit aktiven Elementen einer oder zweier in der Hierarchie und in der Kaskadenanordnung AP;TR;DK;PH unmittelbar benachbarten Ebenen. Die aktiven Elemente einer gleichen Ebene kommunizieren nur über diejenige Ebene miteinander, die der betreffenden Ebene in der Hierarchie und in der Kaskadenanordnung AP;TR;DK;PH unmittelbar untergeordnet ist.

In den Ebenen AP, TR, DK und PH werden jeweils Dienstaufruf-Befehle und Dienstanzeige-Meldungen ausgelöst, die nachfolgend kurz als Befehle ("Request") bzw. als Anzeigen ("Indication") bezeichnet werden. Innerhalb der sie auslösenden Station verläuft die Signalflussrichtung der Befehle jeweils von einer ranghöheren zu einer rangniedrigeren Ebene, während die Signalflussrichtung der Anzeigen jeweils von einer rangniedrigeren zu einer ranghöheren Ebene verläuft. In einer Station TS1 bzw. TS2 (siehe Fig. 2) besitzt somit ein Signalfluss SR_{TS1} bzw. SR_{TS2} der in der Station TS1 bzw. TS2 ausgelösten Befehle eine Richtung, in der angegebenen Reihenfolge, von der Ebene AP über die Ebene TR und die Ebene DK zur Ebene PH. Die von diesen Befehlen in der Station TS2 bzw. TS1 ausgelösten Anzeigen weisen dann dort jeweils einen Signalfluss SI_{TS2} bzw. SI_{TS1} auf. Der Signalfluss SI_{TS2} bzw. SI_{TS1} besitzt dabei in der Station TS2 bzw. TS1 eine Richtung, in der angegebenen Reihenfolge, von der Ebene PH über die Ebene DK und die Ebene TR zur Ebene AP.

Ein Befehl wird jeweils übersetzt in einen Zugang zu einer Primitiven, deren Bezeichnung jeweils mit einer Abkürzung REQ ("request") endet, während eine Anzeige jeweils in einen Zugang zu einer weiteren Primitiven übersetzt wird, deren Bezeichnung jeweils mit einer Abkürzung IND ("indication") endet.

Eine, eine Informations-Übertragung auslösende, erste Station wird als Primärstation und eine mit der Primärstation dann übertragungsmässig verbundene zweite Station als Sekundärstation bezeichnet. Die Primärstation besitzt einen Identifizierer INI ("Initiator Identifier") und die angewählte Sekundärstation eine Adresse ADR. Der Identfizierer INI und die Adresse ADR sind z. B. Telefonnummern. Die Primär- und die Sekundärstation sind dabei jeweils, wie bereits erwähnt, sowohl Sendestation als auch Empfangsstation. Nachfolgend gilt die Annahme, dass die Station TS1 die Primärstation und die Station TS2 die Sekundärstation ist. Die Übertragungsrichtung von der Primärstation TS1 zur Sekundärstation TS2 wird als Senderichtung und diejenige von der Sekundärstation TS2 zur Primärstation TS1 als Rückmelderichtung bezeichnet.

Die ranghöchste Ebene AP dient als Schnittstelle ("interface") zwischen der Informations-Übertragung und der die übertragenen Informationen verwendenden Anwendung. Die Anwender der Übertragungs-Einrichtung und/oder die Anwendungen, in denen die Übertragungs-Einrichtung verwendet wird, besitzen Zugriff nur zu der ranghöchsten Ebene AP, indem sie dort die zu übertragenden Befehle und Informationen eingeben und/oder die dort angesammelten übertragenen Informationen auswerten. Die Ebene AP einer jeden Station ist dabei fähig umfangreichere Informationen in einem Arbeitsgang zu handhaben als die Ebene TR der gleichen Station in einem Arbeitsgang verarbeiten kann. Ihre Aufgabe ist es unter anderem die zu übertragenden Informationen ("informations") und/oder Dateien ("files") in einer übersichtlichen Weise aufzubereiten. Ein Zugang zu den Inhalten der Informationen erfolgt dabei immer unmittelbar, während ein Zugang zu den Dateiinhalten in der Regel vorher einen Aufruf des Betriebssystems ("operating system") erfordert.

Sind die in der Ebene AP einer Station in einem Arbeitsgang zu handhabenden Informationen oder Dateiinhalte umfangreicher als die in der Ebene TR der gleichen Station in einem Arbeitsgang verarbeitbaren Informationen bzw. Dateiinhalte, dann veranlasst die Ebene AP der betreffenden Station, dass die zu übertragenden Informationen bzw. Dateiinhalte in kürzere Informations- bzw. Datei-Blöcke unterteilt werden, die zeitlich nacheinander zu übertragen sind und daher in der Ebene TR der betreffenden Station zeitlich nacheinander verarbeitet werden. Die in einer anderen Station empfangenen Informations- bzw. Datei-Blöcke werden dann in der Reihenfolge ihres dortigen Erscheinens wieder zu den betreffenden Informationen bzw. Dateiinhalten zusammengefügt.

Der Informations- und der Datei-Block werden nachfolgend abgekürzt Daten-Blöcke genannt und weisen eine Blocklänge auf, deren Wert mit L_{TS} bezeichnet wird. Im allgemeinen besitzen die Blöcke jeweils als spezielles Identifizierungs-Merkmal einen Kopfteil ("header"), der aus zwei Buchstaben besteht. Neben den Daten-Blöcken sind zusätzlich noch Befehls- und Kontroll-Blöcke vorhanden, wobei Daten-Blöcke jedoch die eigentliche zu übertragenden Nutzinformationen enthalten.

Jeder Daten-Block besteht aus dem Kopfteil, der von Datenwerten oder von einem Dateiinhalt ("File Content") gefolgt ist. Mindestens der letzte Block der zu übertragenden Informationen bzw. Dateiinhalte wird mit einem besonderen Kennzeichen, z. B. einem Kopfteil DL bzw. FL versehen. Zu diesem Zweck wird unterschieden, ob der betreffende Daten-Block ein letzter oder ein nichtletzter Block der zu übertragenden Informationen bzw. Dateiinhalte ist. Enthält der Daten-Block Datenwerte, dann ist sein Kopfteil vorzugsweise bei einem nichtletzten Block gleich DB ("Data Block") und bei einem letzten Block gleich DL ("Last Data Block"). Enthält der Daten-Block dagegen einen Dateiinhalt, dann ist sein Kopfteil vorzugsweise bei einem nichtletzten Block gleich FB ("File Block") und bei einem letzten Block gleich FL ("Last File Block").

In der Fig. 3 ist schematisch dargestellt, wie die zu übertragenden Informationen INFO oder Dateiinhalte COFI in z. B. fünf gleichgrosse Daten-Blöcke BL2 bis BL6 unterteilt werden, denen je ein Kopfteil DB bzw. FB bei den nichtletzten Daten-Blöcken BL2 bis BL5 oder ein Kopfteil DL bzw. FL beim letzten Daten-Block BL6 vorangestellt wird.

Jeder Befehls-Block besteht aus einem Kopfteil GF oder FH, der von einem Dateinamen gefolgt ist, wobei der Kopfteil GF ("Get File") zu einem Dateiaufrufs-Befehl und der Kopfteil FH ("File Header") zu einem Datei-Befehl gehört.

Jeder Kontroll-Block besitzt als Kopfteil:
- CO ("Connect") bei einem Verbindungsherstellungs-Kontrollblock, der nachfolgend abgekürzt Kontroll-Block CO genannt wird,
- CC ("Connect Confirm") bei einen Verbindungsbestätigungs-Kontrollblock, der nachfolgend abgekürzt Kontroll-Block CC genannt wird,
- FA ("File Acknowledge") bei einem Fehlerfreiheitsbestätigungs-Kontrollblock einer Datei, der nachfolgend abgekürzt Kontroll-Block FA genannt wird,
- FE ("File Error") bei einem Fehlerbestätigungs-Kontrollblock einer Datei, der nachfolgend abgekürzt Kontroll-Block FE genannt wird oder
- DC ("Disconnect") bei einem Verbindungsauflösungs-Kontroll-block, der nachfolgend abgekürzt Kontroll-Block DC genannt wird.

Jeder Kontroll-Block besteht aus dem Kopfteil, der von nichts (im Falle von FA, FE und DC), vom Identifizierer INI der Primärstation TS1 und von einem Wert L_{TS1} einer Blocklänge in der angegebenen Reihenfolge (im Falle von CO) oder von einem Wert L_{TS} einer Blocklänge (im Falle von CC) gefolgt ist.

Die Dateinamen bestehen jeweils aus einem oder mehreren Druckbuchstaben, deren Anzahl vom Betriebssystem abhängig ist. Der Identifizierer INI besteht z. B. aus 1 bis 20 ASCII-Zeichen.

Da die Werte L_{TS} der Blocklängen, die in einem Arbeitsgang in den Ebenen TR der Primär- und der Sekundärstation TS1 und TS2 verarbeitet werden können, unterschiedlich sein können, ist die Wahl des bei einer anstehenden Übertragungs-Session zu verwendenden Wertes L_{TS} der Blocklänge jeweils Gegenstand einer Verhandlung zwischen den beiden betroffenen Stationen TS1 und TS2. Zu diesem Zweck wird zu Beginn, vor der Übertragung der Informationen INFO bzw. Dateiinhalte COFI und vorzugsweise anlässlich der Herstellung der Übertragungsverbindung, jeweils ein von der Primärstation TS1 gewünschter maximaler Wert L_{TS1} der Blocklänge von der Primärstation TS1 zur angewählten Sekundär-station TS2 übertragen. Der in der zugeschalteten Sekundärstation TS2 empfangene, von der Primärstation TS1 gewünschte maximale Wert L_{TS1} der Blocklänge wird in der Sekundärstation TS2 mit einem von der letzteren selber gewünschten maximalen Wert L_{TS2} der Blocklänge verglichen. Die Sekundärstation TS2 wählt den niedrigsten Wert L_{TS} der beiden gewünschten Werte L_{TS1} und L_{TS2} als denjenigen Wert der Blocklänge, der nachfolgend in der Übertragungs-Session zu verwenden ist, und teilt anschliessend, vorzugsweise mittels eines Kontroll-Blocks CC, diesen gewählten Wert L_{TS} der Blocklänge der Primärstation TS1 mit. Die beiden Teilnehmerstationen TS1 und TS2 verwenden dann bei der nachfolgenden Übertragung den gewählten Wert L_{TS} für die Blocklänge der durch ihre Ebene AP jeweils zu erzeugenden Blöcke, welcher dann in jedem Fall gleich oder kleiner als L_{TS1} ist.

Die primitiven in der Ebene AP ausgelösten Befehle und Anzeigen sind:
- APCO-REQ : Befehl "AP-CONNECT-REQUEST" zur Herstellung einer Übertragungsverbindung, mit der Adresse ADR der angewählten Sekundärstation TS2 und dem Identifizierer INI der Primärstation TS1 als Parametern.
- APGETFI-REQ : Befehl "AP-GET-FILE-REQUEST" zur Übertragung eines Dateiaufrufs, mit dem Namen der aufgerufenen Datei als Parameter.
- APSENFI-REQ : Befehl "AP-SEND-FILE-REQUEST" zur Übertragung einer Datei, mit dem Namen der zu übertragenden Datei als Parameter.
- APDA-REQ : Befehl "AP-DATA-REQUEST" zur Übertragung von Informationen, mit den Inhalten der zu übertragenden Informationen als Parametern.
- APDC-REQ : Befehl "AP-DISCONNECT-REQUEST" zur Auflösung einer vorhandenen Übertragungsverbindung, benötigt keinen Parameter.
- APCO-IND : Anzeige "AP-CONNECT-INDICATION" der Herstellung einer Übertragungsverbindung, mit dem Identifizierer INI der Primärstation TS1 als Parameter.
- APGETFI-IND : Anzeige "AP-GET-FILE-INDICATION" des Empfangs eines Dateiaufrufs, mit dem empfangenen aufgerufenen Dateinamen als Parameter.
- APSENFI-IND : Anzeige "AP-SEND-FILE-INDICATION" des Empfangs einer Datei, mit dem Namen der empfangenen Datei als Parameter.
- APDA-IND : Anzeige "AP-DATA-INDICATION" des Empfangs übertragener Informationen, mit den Inhalten der empfangenen Informationen als Parametern.
- APDC-IND : Anzeige "AP-DISCONNECT-INDICATION" der Auflösung einer vorhandenen Übertragungsverbindung, benötigt keinen Parameter.
- APAB-IND : Anzeige "AP-ABORT-INDICATION" eines schwerwiegenden Fehlers oder einer abgelaufenen Wartezeit-Frist, mit einer entsprechenden Fehlernachricht ("Error Message") als Parameter.

Bei einem fehlerlosen Informations-Austausch werden zwischen den Ebenen AP der Primärstation TS1 und der Sekundärstation TS2 z. B. folgende Blöcke in der angegebenen Reihenfolge übertragen:

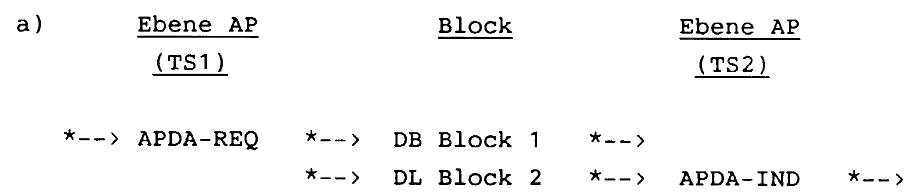

Der Befehl APDA-REQ in der Ebene AP der Primärstation TS1 veranlasst, dass die zu übertragenden Informationen INFO in einen Block 1 und einen Block 2 unterteilt werden, die von der Ebene TR der Primärstation TS1 in der angegebenen Reihenfolge weiterverarbeitet werden und deren Empfang in der Sekundär-station TS2 in deren Ebene AP eine Anzeige APDA-IND auslöst, sobald der letzte durch ein Kopfteil DL gekennzeichnete Block 2 der Informationen INFO empfangen worden ist. Der Informationsinhalt der Anzeige APDA-IND steht anschliessend dem Benutzer der Sekundärstation TS2 zur Verfügung.

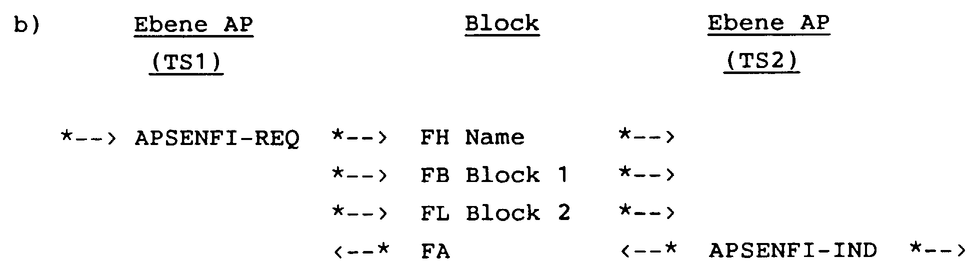

Der Befehl APSENFI-REQ in der Ebene AP der Primärstation TS1 veranlasst, dass eine zu übertragende Datei in einen einen Kopfteil FH aufweisenden Namens-Block der Datei, einen Block 1 und einen Block 2 unterteilt werden, die von der Ebene TR der Primärstation TS1 in der angegebenen Reihenfolge weiterverarbeitet werden und deren Empfang in der Sekundär-station TS2 in deren Ebene AP eine Anzeige APSENFI-IND auslöst, sobald der letzte durch ein Kopfteil FL gekennzeichnete Block 2 der Datei empfangen worden ist, unter gleichzeitiger Zurücksendung zur Primärstation TS1 eines Kontroll-Blocks FA zwecks Bestätigung eines fehlerfreien Empfangs der Datei. Der Informationsinhalt der Anzeige APSENFI-IND steht anschliessend dem Benutzer der Sekundär-station TS2 zur Verfügung.

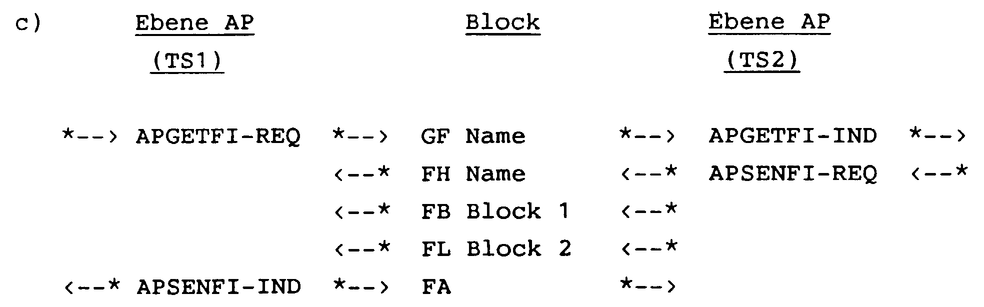

Der Befehl APGETFI-REQ in der Ebene AP der Primärstation TS1 veranlasst, dass ein ein Kopfteil GF aufweisender Namens-Block einer aufgerufenen Datei übertragen wird und dass der Empfang des Dateinamens in der Sekundärstation TS2 in deren Ebene AP eine Anzeige APGETFI-IND und einen Befehl APSENFI-REQ auslöst. Der letztere veranlasst in der Ebene AP der Sekundärstation TS2, dass die betreffende Datei in einen einen Kopfteil FH aufweisenden Namens-Block der Datei, einen Block 1 und einen Block 2 unterteilt werden, die von der Ebene TR der Sekundärstation TS2 in der angegebenen Reihenfolge weiterverarbeitet werden und deren Empfang in der Primärstation TS1 in deren Ebene AP eine Anzeige APSENFI-IND auslöst, sobald der letzte durch ein Kopfteil FL gekennzeichnete Block 2 der Datei empfangen worden ist, unter gleichzeitiger Zurücksendung zur Sekundärstation TS2 eines Kontroll-Blocks FA zwecks Bestätigung eines fehlerfreien Empfangs der Datei.

Bei einem fehlerhaften Informations-Austausch werden zwischen den Ebenen AP der Primärstation TS1 und der Sekundärstation TS2 z. B. folgende Blöcke in der angegebenen Reihenfolge übertragen:

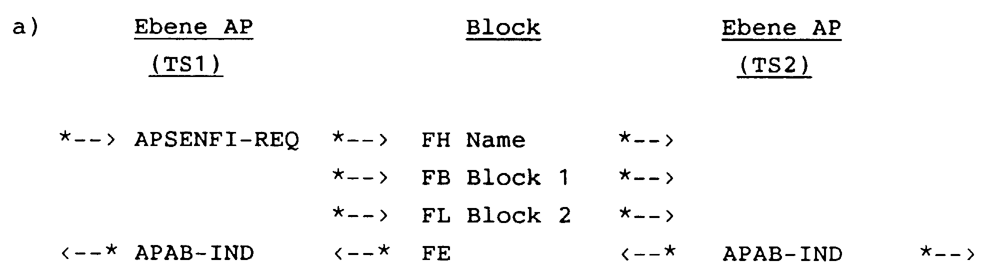

Der Befehl APSENFI-REQ in der Ebene AP der Primärstation TS1 veranlasst, dass eine zu übertragende Datei in einen einen Kopfteil FH aufweisenden Namens-Block der Datei, einen Informations-Block 1 und einen Block 2 unterteilt werden, die von der Ebene TR der Primärstation TS1 in der angegebenen Reihenfolge weiterverarbeitet werden und deren Empfang in der Sekundärstation TS2 in deren Ebene AP, da fehlerhaft, eine Anzeige APAB-IND auslöst, sobald der Fehler entdeckt worden ist, d.h. zum Beispiel sobald der letzte durch ein Kopfteil FL gekennzeichnete Block 2 der Datei empfangen worden ist, unter gleichzeitiger Zurücksendung zur Primärstation TS1 eines Kontroll-Blocks FE zwecks Bestätigung eines fehlerhaften Empfangs der Datei. Der Empfang des Kontroll-Blocks FE in der Primärstation TS1 löst seinerseits dort in der Ebene AP auch eine Anzeige APAB-IND aus. Der Informationsinhalt je einer Anzeige APAB-IND steht nun den Benutzern der Stationen TS1 und TS2 zur Verfügung.

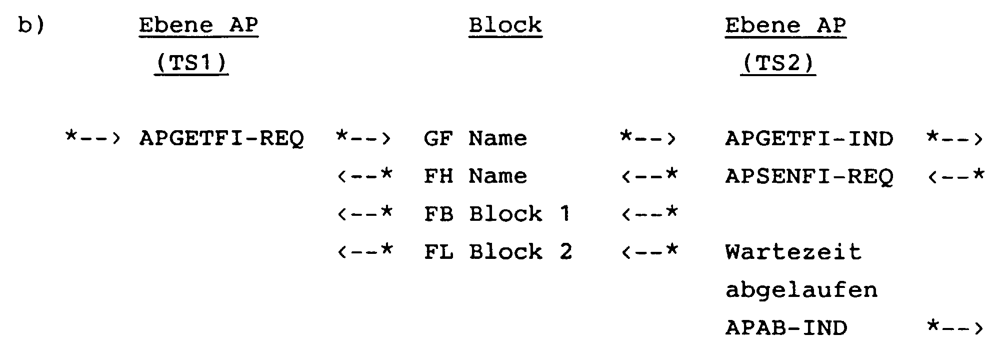

Der Befehl APGETFI-REQ in der Ebene AP der Primärstation TS1 veranlasst, dass ein ein Kopfteil GF aufweisender Namens-Block einer aufgerufenen Datei weiterverarbeitet wird. Der Empfang des Dateinamens in der Sekundärstation TS2 löst in deren Ebene AP eine Anzeige APGETFI-IND und einen Befehl APSENFI-REQ aus. Der letztere veranlasst in der Ebene AP der Sekundärstation TS2, dass die betreffende Datei in einen einen Kopfteil FH aufweisenden Namens-Block der Datei, einen Block 1 und einen Block 2 unterteilt werden, die von der TR-Ebene der Sekundärstation TS2 in der angegebenen Reihenfolge weiterverarbeitet werden. Da eine vorgebene Wartezeit-Frist in der Ebene AP der Sekundärstation TS2 abgelaufen ist bevor die Datei vollständig übertragen wurde, wird in der Ebene AP der Sekundärstation TS2 eine Anzeige APAB-IND ausgelöst, deren Informationsinhalt nun dem Benutzer der Sekundärstation TS2 zur Verfügung steht.

Die Ebene TR veranlasst eine Punkt-zu-Punkt Informations-Übertragung, die unabhängig ist von der Art des verwendeten Transport-Netzwerkes. Sie gewährleistet, dass die Blöcke im richtigen Zustand sowie in der richtigen Reihenfolge weiterverarbeitet werden und behandelt alle Wiedergewinnungs-Probleme, die mit fehlenden oder aussertaktgeratenen Blöcken verbunden sind. Die Übertragungs-Geschwindigkeit in der Ebene TR der Primärstation TS1 wird so festgelegt, dass sie mit der Informations-Empfangsfähigkeit der angewählten Sekundärstation TS2 übereinstimmt. Die Ebene TR einer Station gestattet die volle Ausnutzung der Dienste, die durch die Ebene DK der betreffenden Station zur Verfügung gestellt werden, und erlaubt in übersichtlicher Weise Blocklängen in einem Arbeitsgang zu verarbeiten, die viel grösser als diejenigen sind, die durch die Ebene DK der betreffenden Station in einem Arbeitsgang verarbeitet werden können.

Ein jeder Block enthält mindestens ein Daten-Paket. Verarbeitet die Ebene TR einer Station in einem Arbeitsgang eine Blocklänge, deren Wert L_{TS} grösser ist als derjenige, der durch die Ebene DK der gleichen Station in einem Arbeitsgang verarbeitet werden kann, d. h. ist der Block mitsamt seinem Kennzeichen bzw. Kopfteil DB/DL bzw. FB/FL länger als eine maximal zugelassene Länge eines Daten-Pakets, dann veranlasst die Ebene TR, dass der zu übertragende Block mitsamt seinem Kennzeichen bzw. Kopfteil DB/DL bzw. FB/FL in kürzere Daten-Pakete unterteilt wird, die innerhalb einer dem betreffenden Block zugeordneten Übertragungszeit zeitlich nacheinander zu übertragen sind und daher in der Ebene DK der betreffenden Station zeitlich nacheinander verarbeitet werden. Die in einer anderen Station empfangenen Daten-Pakete werden dann in der Reihenfolge ihres dortigen Erscheinens wieder zum betreffenden Block zusammengefügt. Innerhalb eines jeden Blocks werden dessen Daten-Pakete in ihrer zeitlichen Reihenfolge fortlaufend durchnumeriert und die Daten-Pakete mit der so erhaltenen Paketnummer versehen. Die Paketnummer wird jeweils bei einer Paketübertragung um einen Wert Eins inkrementiert und zu Beginn eines neuen Blocks nicht auf Null zurückgestellt.

Die richtige Reihenfolge in der Zusammenfügung aller empfangenen Daten-Pakete ergibt praktisch automatisch auch eine richtige Reihenfolge aller zusammengefügten Blöcke.

Jedes Daten-Paket besteht aus einem Kopfteil, der in der angegeben Reihenfolge von der Paketnummer und dem Paketinhalt gefolgt ist. Mindestens das letzte Daten-Paket innerhalb eines jeden Blocks wird mit einem speziellen Kennzeichen, z. B. einem Kopfteil L versehen. Die nichtletzten Daten-Pakete eines jeden Blocks besitzen dann vorzugsweise ein Kopfteil D ("Normal Packet"), während das letzte Daten-Paket eines jeden Blocks den Kopfteil L ("Last Packet") aufweist. Die Paketnummer und das Kennzeichen L bzw. Kopfteil D/L werden jeweils zusammen mit dem betreffenden Daten-Paket übertragen.

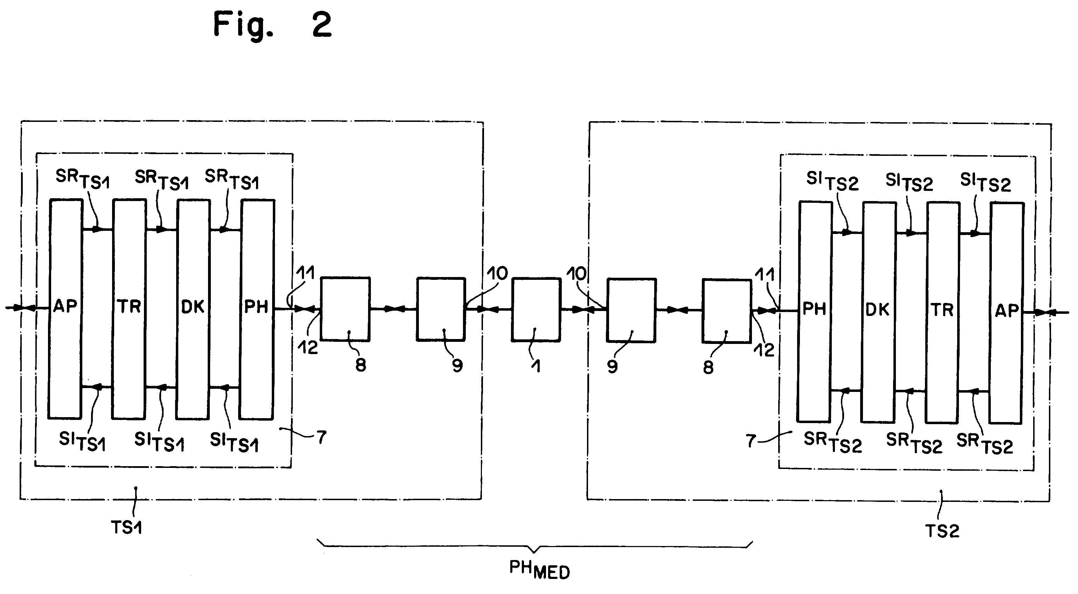

In der Fig. 4 ist schematisch dargestellt, wie ein mit einem Kopfteil DB oder FB versehener Daten-Block BL2 in z. B. fünf gleichgrosse Pakete PA1 bis PA5 unterteilt wird, denen bei den nichtletzten Paketen PA1 bis PA4 je ein Kopfteil D und beim letzten Paket PA5 ein Kopfteil L vorangestellt wird zwecks Bildung der Daten-Pakete D1, D2, D3, D4 und L5.

Die Befehls- und Kontroll-Blöcke sind so kurz, dass sie nur aus einem einzigen Daten-Paket bestehen.

Neben den Daten-Paketen gibt auch noch Kontroll-Pakete, die als spezielles Identifizierungs-Merkmal jeweils ein Kopfteil C, A oder E besitzen. Das Kontroll-Paket besteht aus dem Kopfteil, welcher jeweils von nichts oder von einer Kontroll-Nachricht gefolgt ist, die aus Druckbuchstaben besteht.

Dabei gehört
- das Kopfteil C ("Connection") zu einem Kontroll-Paket C, welches zur Initiierung einer Sekundärstation TS2 dient,
- das Kopfteil A ("Acknowledge") zu einem Kontroll-Paket A, welches zur Bestätigung eines korrekten Empfangs eines aus mehreren Paketen bestehenden Blocks dient, und
- das Kopfteil E ("Error") zu einem Kontroll-Paket E, welches zur Bestätigung eines fehlerhaften oder eines mit einem Verbindungsunterbruch verbundenen Empfangs eines aus mehreren Paketen bestehenden Blocks dient.

Sobald alle Pakete eines Blocks gesendet worden sind, d. h. nachdem ein mit dem Kopfteil L versehenes Paket gesendet worden ist, erwartet die Sendestation jeweils eine Antwort der Empfangsstation bezüglich der Qualität des empfangenen Blocks. Die Empfangsstation kontrolliert dabei jeweils auch die mitübertragene Paketnummer der Pakete. Wenn der Block aus mehreren Paketen besteht und seine Übertragung fehlerfrei erfolgte, dann sendet die betreffende Empfangsstation als Antwort ein Kontroll-Paket A zur Sendestation zurück. Wenn der Block nur aus einem einzigen Paket besteht, dann gilt die Empfangs-Bestätigung des letzteren als Empfangs-Bestätigung für den gesamten Block und eine getrennte zusätzliche Empfangs-Bestätigung des Blocks mittels des Kontroll-Pakets A ist nicht mehr erforderlich, so dass letzteres nicht übertragen werden muss. Beim Vorliegen einer Anomalie in der Informations-Übertragung, wie z. B. beim Vorhandensein eines Paketnummern-Fehlers, erfolgt sofort eine entsprechende Benachrichtung der Sendestation seitens der Empfangsstation und der Informations-Austausch zwischen den beiden Stationen wird unterbrochen.

Die primitiven in der Ebene TR ausgelösten Befehle und Anzeigen sind:
- TRCO-REQ : Befehl "TR-CONNECT-REQUEST" zur Herstellung einer Datenaustausch-Session, mit der Adresse ADR der Sekundärstation TS2 als Parameter.
- TRDA-REQ : Befehl "TR-DATA-REQUEST" zur Übertragung eines Daten-Blocks, mit dem zu übertragenden Daten-Block als Parameter.
- TRDC-REQ : Befehl "TR-DISCONNECT-REQUEST" zur Beendigung einer laufenden Datenaustausch-Session, benötigt keinen Parameter.
- TRDA-IND : Anzeige "TR-DATA-INDICATION" des Empfangs eines übertragenen Daten-Blocks, mit dem empfangenen Daten-Block als Parameter.
- TRAB-IND : Anzeige "TR-ABORT-INDICATION" eines schwerwiegenden Fehlers oder einer abgelaufenen Wartezeit-Frist, mit einer entsprechenden Fehlernachricht ("Error Message") als Parameter. Sie löst in der Regel eine Anzeige APAB-IND in der Ebene AP der gleichen Station aus.

Bei einem fehlerlosen Informationsaustausch werden zwischen den Ebenen TR der Primärstation TS1 und der Sekundärstation TS2 z. B. folgende Pakete in der angegebenen Reihenfolge übertragen:

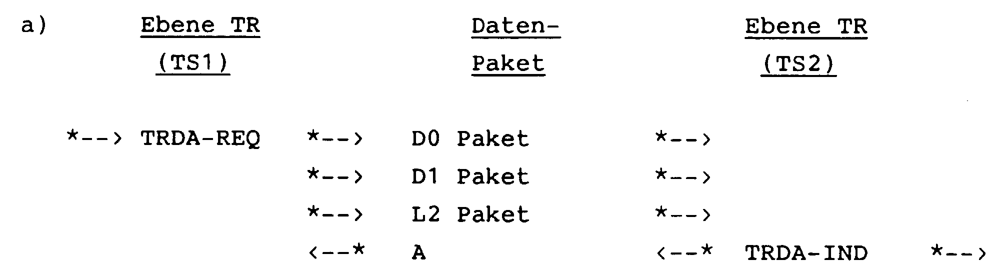

Der Befehl TRDA-REQ in der Ebene TR der Primärstation TS1 veranlasst, dass der zu übertragende Daten-Block in ein Daten-Paket D0, ein Daten-Paket D1 und ein Daten-Paket L2 unterteilt wird, die von der Ebene DK der Primärstation TS1 in der angegebenen Reihenfolge weiterverarbeitet werden und deren Empfang in der Sekundärstation TS2 in deren Ebene TR eine Anzeige TRDA-IND auslöst, sobald das letzte durch ein Kopfteil L gekennzeichnete Daten-Paket L2 des Blocks empfangen worden ist, unter gleichzeitiger Zurücksendung zur Primärstation TS1 eines Kontroll-Pakets A zwecks Bestätigung eines fehlerfreien Empfangs des Daten-Blocks. Der Informationsinhalt der Anzeige TRDA-IND wird seinerseits an die Ebene AP der Sekundärstation TS2 weitergeleitet.

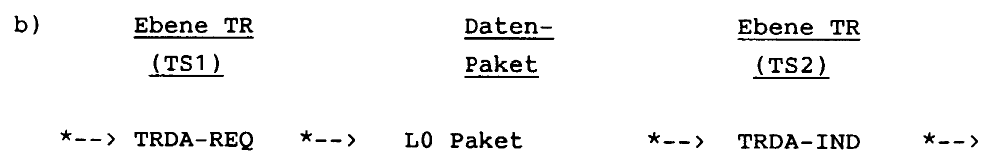

Der Befehl TRDA-REQ in der Ebene TR der Primärstation TS1 veranlasst, dass der zu übertragende Daten-Block, da sehr kurz, als einziges Daten-Paket L0 behandelt wird, welches dann von der Ebene DK der Primärstation TS1 weiterverarbeitet wird und dessen Empfang in der Sekundärstation TS2 in deren Ebene TR eine Anzeige TRDA-IND auslöst, sobald das einzige und letzte, durch ein Kopfteil L gekennzeichnete Daten-Paket L0 des Daten-Blocks empfangen worden ist. Der Informationsinhalt der Anzeige TRDA-IND wird seinerseits an die Ebene AP der Sekundärstation TS2 weitergeleitet. Da der Daten-Block nur aus einem einzigen Daten-Paket L0 besteht, erfolgt keine Zurücksendung eines Kontroll-Pakets A zur Primärstation TS1.

Bei einem fehlerhaften Informations-Austausch werden zwischen den Ebenen TR der Primärstation TS1 und der Sekundärstation TS2 z. B. folgende Daten-Pakete in der angegebenen Reihenfolge übertragen:

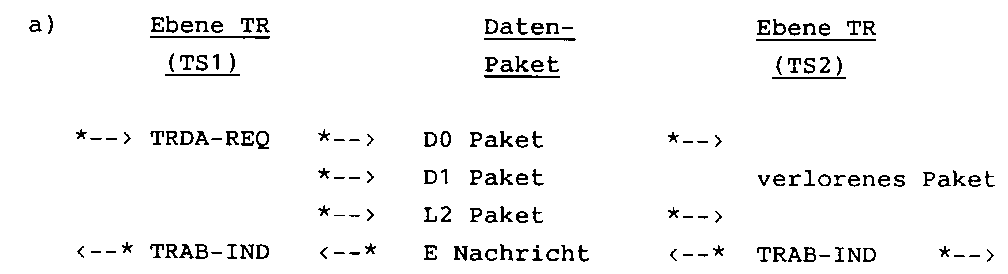

Der Befehl TRDA-REQ in der Ebene TR der Primärstation TS1 veranlasst, dass der zu übertragende Daten-Block in ein Daten-Paket D0, ein Daten-Paket D1 und ein Daten-Paket L2 unterteilt wird, die von der Ebene DK der Primärstation TS1 in der angegebenen Reihenfolge weiterverarbeitet werden. Der Empfang des letzten Daten-Pakets L2 in der Sekundärstation TS2 löst, da das Daten-Paket D1 nicht empfangen wurde, in der Ebene TR der Sekundär-Station TS2 eine Anzeige TRAB-IND aus, unter gleichzeitiger Zurücksendung zur Primärstation TS1 eines Kontroll-Pakets E mit einer Fehler-Nachricht zwecks Bestätigung eines fehlerhaften Empfangs des Daten-Blocks. Der Empfang des Kontroll-Pakets E in der Primärstation TS1 löst dort in der Ebene TR auch eine Anzeige TRAB-IND aus. Der Informationsinhalt einer jeden Anzeige TRAB-IND wird seinerseits an die Ebene AP ihrer jeweiligen Station TS1 bzw. TS2 weitergeleitet.

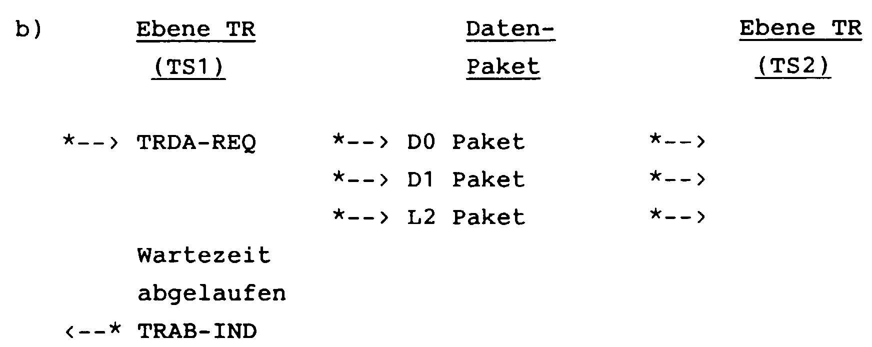

Der Befehl TRDA-REQ in der Ebene TR der Primärstation TS1 veranlasst, dass der zu übertragende Daten-Block in ein Daten-Paket D0, ein Daten-Paket D1 und ein Daten-Paket L2 unterteilt wird, die von der Ebene DK der Primärstation TS1 in der angegebenen Reihenfolge weiterverarbeitet werden. Da die Wartezeit in der Ebene TR der Primärstation TS1 abgelaufen ist bevor die Übertragung des Blocks durch ein Kontroll-Paket A bestätigt wurde, wird in der Ebene TR der Primärstation TS1 eine Anzeige TRAB-IND ausgelöst, deren Informationsinhalt an die Ebene AP der Primärstation TS1 weitergeleitet wird.

Die Ebene DK regelt den Informations-Austausch zwischen zwei mittels des physischen Mediums PH_{MED} miteinander verbundenen Stationen und stellt eine Informations-Übertragungsverbindung zur Verfügung, die relativ unabhängig vom Typ der Ebene PH ist.

Jede Ebene DK veranlasst die Erzeugung von vorzugsweise ISOnormierten HDLC-Sequenzstrukturen ("High level data link control frame structures"). Dabei wird im erfindungsgemässen Verfahren vorzugsweise die sogenannte ABM-Prozedur ("Asynchronous Balanced Mode Procedure") benutzt, die einen asynchronen Informations-Austausch zwischen zwei gleichwertigen Stationen gestattet. Jede Station kann dabei zur beliebigen Zeit Befehle senden und das Senden von Antworten initiieren, ohne dabei zuerst eine Erlaubnis der anderen Station abzuwarten.

Die DK-Ebene einer jeden Sendestation veranlasst, dass alle zu übertragenden Pakete, d. h. alle zu übertragenden Daten-Pakete und alle zu übertragenden Kontroll-Pakete, mitsamt, falls vorhanden, ihrer Paketnummer und ihrem Kennzeichen D oder L, gemäss HDLC-Norm codiert werden zwecks Bildung codierter Informations-Rahmen. Ausserdem veranlasst die DK-Ebene einer jeden Sendestation die Erzeugung von codierten Befehls-Kontroll-Rahmen SABM und DISC sowie die DK-Ebene einer jeden Empfangsstation die Erzeugung von codierten Antwort-Kontroll-Rahmen RR, RNR, FRMR und UA. Alle zu übertragenden Kontroll-Rahmen, d. h. alle zu übertragenden Befehls-Kontroll-Rahmen und alle zu übertragenden Antwort-Kontroll-Rahmen, werden dabei vorzugsweise gemäss der HDLC-Norm codiert.

Die zu übertragenden Pakete mitsamt, falls vorhanden, ihrer Paketnummer und ihren Kennzeichen sowie die zu übertragenden Befehls-Kontroll-Rahmen SABM und DISC werden vor ihrer Übertragung in der Ebene DK einer als Sendestation arbeitenden Teilnehmerstation TS1 bzw. TS2 mit einem fehlerentdeckenden Code versehen zwecks Erzeugung je eines codierten Rahmens. Nach dem Empfang des letzteren in einer als Empfangsstation arbeitenden Teilnehmerstation TS2 bzw. TS1 wird dort in der Ebene DK der empfangene codierte Rahmen decodiert sowie mit Hilfe des fehlerentdeckenden Codes auf vorhandene Fehler kontrolliert. In der Ebene DK der Empfangsstation TS2 bzs. TS1 wird dann eine Anzeige DKDA-IND ausgelöst.

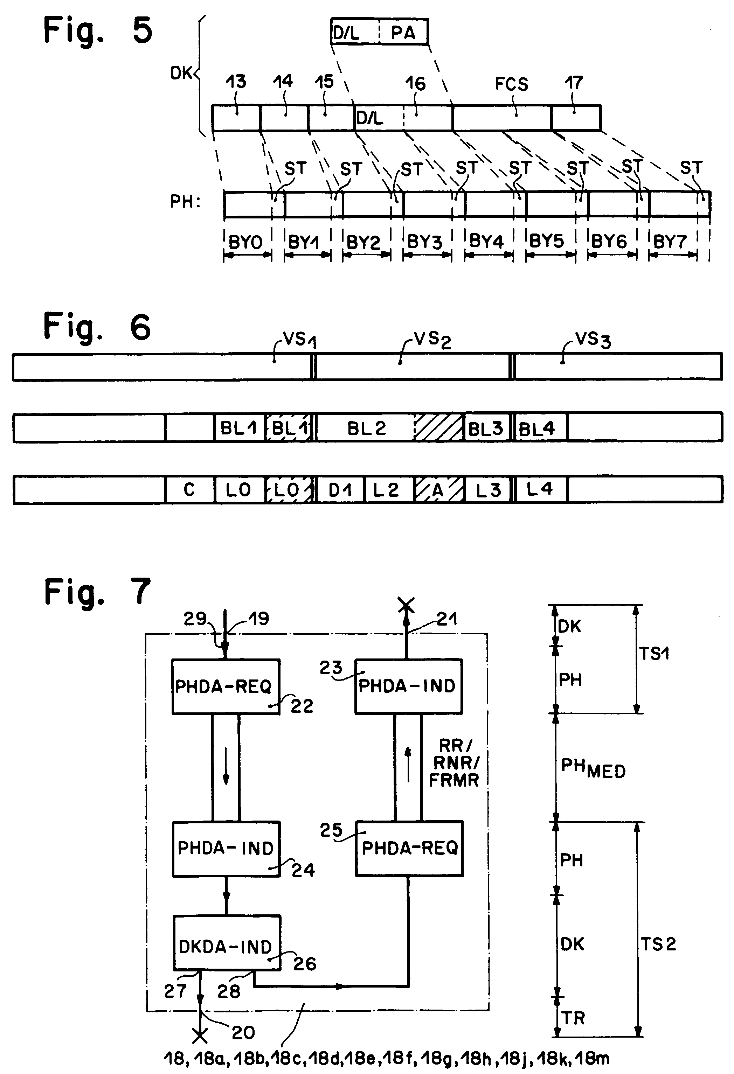

In der Fig. 5 wird gezeigt, wie ein zu übertragendes Paket PA gemäss der HDLC-Norm codiert wird. Das Paket PA ist dabei z. B. ein Daten-Paket und besitzt dann einen Kopfteil D oder L. Durch diese Codierung wird das Paket PA mitsamt seinem Kopfteil in einen normierten und aus mehreren Feldern bestehenden Informations-Rahmen umgewandelt, der gemäss HDLC-Norm in der angegebenen Reihenfolge ein Start-Synchronisierungs-Feld ("Start Flag") 13, ein Adressen-Feld 14, ein Kontroll-Feld 15, ein Informations-Feld 16, ein Rahmenkontroll-Feld FCS ("Frame Checking Sequence") und ein Schluss-Synchronisierungs-Feld ("Stop Flag") 17 enthält. Alle Felder, ausser dem Informations-Feld 16 und dem Rahmenkontroll-Feld FCS, bestehen dabei jeweils aus einem Byte.

Die Start- und Stopp-Synchronisierungs-Felder 13 und 17 sind gemäss HDLC-Norm vorzugsweise identisch und jedes gleich einem Byte 01111110.

Das Informations-Feld 16 enthält das zu übertragende Paket PA mitsamt seinem Kopfteil und besteht z. B. aus einer ganzzahligen Anzal Bytes. In der Fig. 5 wurde angenommen, dass es aus 2 Bytes besteht. Die zugehörigen Werte eines HDLC-Paketzählers sind im Kontroll-Feld 15 des betreffenden Informations-Rahmens enthalten und zwar derjenige Wert des HDLC-Paketzählers des zuletzt gesendeten Informations-Pakets als Wert N(S) in den Bits 2 bis 4 und derjenige Wert des HDLC-Paketzählers des zuletzt empfangenen Informations-Pakets als Wert N(R) in den Bits 6 bis 8, wobei innerhalb N(S) bzw. N(R) das Bit 4 bzw. das Bit 8 jeweils dem MSB entspricht. Das Bit 1 des Kontroll-Feldes 15 eines jeden Informations-Rahmens besitzt einen Logikwert "0" und ist jeweils das erste übertragene Bit des betreffenden Kontroll-Feldes 15.

Die Kontroll-Rahmen sind entweder sogenannte S-Kontroll-Rahmen ("Supervisory Control Frames"), die mit einem laufenden Zählwert versehen sind, oder sogenannte U-Kontroll-Rahmen ("Unnumbered Control Frames"), die keinen laufenden Zählwert besitzen. Der S-Kontroll-Rahmen ist dabei immer ein Antwort-Kontroll-Rahmen RR bzw. RNR, während der U-Kontroll-Rahmen entweder ein Befehls-Kontroll-Rahmen SABM bzw. DISC oder ein Antwort-Kontroll-Rahmen UA bzw. FRMR ist. Alle S- und U-Kontroll-Rahmen, ausser dem Antwort-Kontroll-Rahmen FRMR, besitzen kein Informations-Feld 16. Der in ihnen enthaltene und zu übertragende Informationsinhalt ist im Kontroll-Feld 15 des betreffenden S- bzw. U-Kontroll-Rahmens enthalten.

Die beiden ersten Bits des Kontroll-Feldes 15 der S-Kontroll-Rahmen sind jeweils gleich 10 und diejenigen der U-Kontroll-Rahmen jeweils gleich 11. Das Bit 3 und das Bit 4 des Kontroll-Feldes 15 der S-Kontroll-Rahmen enthalten den Funktionsinhalt der letzteren, während die Bits 6 bis 8 den Wert der laufenden Nummer N(R) des nächst erwarteten Informations-Rahmens enthalten. Das Bit 3 und das Bit 4 sowie das Bit 6 bis Bit 8 des Kontroll-Feldes 15 der U-Kontroll-Rahmen enthalten den Funktionsinhalt der letzteren und das betreffende Kontroll-Feld 15 weist keine laufende Nummer auf.

Die Antwort-Kontroll-Rahmen FRMR besitzen ein Informations-Feld 16, dessen acht erste Bits den Inhalt des Kontroll-Feldes 15 des zugehörigen als schwerwiegend fehlerhaft erkannten übertragenen Informations-Rahmens enthalten. Das neunte Bit besitzt einen Logikwert "0". Die Bits 10 bis 12 enthalten einen Wert N(S) der laufenden Nummer des gesendeten Informations-Rahmens und die Bits 14 bis 16 einen Wert N(R) der laufenden Nummer des empfangenen Informations-Rahmens. Das Bit 13 besitzt einen Logikwert "0", wenn die als fehlerhaft erkannte übertragene Information ein Befehl war, und einen Logikwert "1", wenn diese Information eine Antwort war. In weiteren Bits 17 bis 20 des Informations-Feldes 16 kann die Art des erkannten Fehlers präzisiert werden.

Das Bit 5 des Kontroll-Feldes 15 der Befehls-Kontroll-Rahmen SABM und DISC sowie der in Senderichtung übertragenen Informations-Rahmen wird als P-Bit ("Poll Command Bit") bezeichnet. Das Bit 5 des Kontroll-Feldes 15 der Antwort-Kontroll-Rahmen RR, RNR, FRMR und UA sowie der in Rückmelderichtung übertragenen Informations-Rahmen wird als F-Bit ("Response Final Bit") bezeichnet. Wie in allen Ebenen, wird auch in der Ebene DK das Frage/Antwort-Prinzip verwendet, demzufolge der Empfang eines jeden durch die Sendestation gesendeten und mit einem P-Bit = 1 versehenen Befehls-Kontroll-Rahmens durch die Empfangsstation mit einem mit einem F-Bit = 1 versehenen Antwort-Kontroll-Rahmen bestätigt werden muss, bevor die Ebene DK der ersteren den nächsten mit einem P-Bit = 1 versehenen Befehls-Kontroll-Rahmen senden darf. Dies bedeutet, dass z. B. , wenn das P-Bit des Kontroll-Feldes 15 eines von der Sendestation gesendeten Informations-Rahmens einen Logikwert "1" besitzt, die Empfangsstation dies als Antwort-Aufforderung zwecks unverzüglicher Sendung, im Anschluss an den Empfang des betreffenden Informations-Rahmens, eines Antwort-Kontroll-Rahmens zuhanden der Sendestation betrachten muss. Der Antwort-Kontroll-Rahmen ist dabei entweder ein spezieller Informations-Rahmen I_{R}, in dessen Kontroll-Feld 15 das F-Bit einen Logikwert "1" besitzt, oder einer der Antwort-Kontroll-Rahmen RR, RNR, FRMR oder UA.

Der Antwort-Kontroll-Rahmen RR ("Receive Ready") dient dabei zur Bestätigung der Fehlerfreiheit eines empfangenen übertragenenen Rahmens und ist ein Zeichen, dass die betreffende Empfangsstation wieder für einen neuen Rahmen empfangsbereit ist.

Der Antwort-Kontroll-Rahmen RNR ("Receive Not Ready") dient dagegen zur Bestätigung, dass die betreffende Empfangsstation für einen neuen Informations-Rahmen noch nicht wieder empfangsbereit ist.

Dies kann aus einem der beiden folgenden Gründen der Fall sein:
- Im Pufferspeicher der Empfangsstation ist nicht mehr genügend Speicherplatz vorhanden zum Speichern eines nachfolgend übertragenen Rahmens. In diesem Fall enthält der Antwort-Kontroll-Rahmen RNR die laufende Nummer des letzteren, so dass die Sendestation nach Empfang eines Antwort-Kontroll-Rahmens RNR weiss, dass sie nur nach Ablauf einer vorgegebenen Wartefrist die Übertragung eines neuen Rahmens veranlassen kann, da erst nach Ablauf dieser Wartefrist wieder genügend Pufferspeicherplatz in der Empfangsstation zur Verfügung steht.
- Die Übertragung des zuletzt gesendeten Rahmens war fehlerhaft. In diesem Fall enthält der Antwort-Kontroll-Rahmen RNR nicht die laufende Nummer des nachfolgend zu sendenden Rahmens, sondern die laufende Nummer des zuletzt gesendeten Rahmens, so dass die Sendestation nach Empfang eines Antwort-Kontroll-Rahmens RNR weiss, dass sie nach Ablauf einer vorgegebenen Wartefrist die Sendung des zuletzt gesendeten Rahmens noch einmal wiederholen muss. Dabei ist die Anzahl der Sendewiederholungen z. B. auf drei beschränkt. Ist die dritte Sendewiederholung auch noch fehlerhaft, dann wird die Sendung eines Antwort-Kontroll-Rahmens FRMR ausgelöst.

Der Antwort-Kontroll-Rahmen FRMR ("Frame Response Mode Reject") dient der Bestätigung eines Nichtverständnisses beim Empfang eines übertragenenen Rahmens und ist ein Zeichen, dass ein schwerwiegender Fehler bei der Übertragung des zuletzt übertragenen Rahmens aufgetreten ist und die Übertragungsverbindung in der Regel neu initiiert werden muss. Zu diesem Zweck löst der Empfang eines Antwort-Kontroll-Rahmens FRMR in der Ebene DK eine Anzeige DKAB-IND aus.

Das Kontroll-Feld 15 des Befehls-Kontroll-Rahmens SABM ("Set Asynchronous Balanced Mode") ist vorzugsweise 1111P100 und dasjenige des Befehls-Kontroll-Rahmens DISC ("Diconnect") vorzugsweise 1100P010. Beide Befehls-Kontroll-Rahmen besitzen somit jeweils als fünftes Bit ein P-Bit.

Der Befehls-Kontroll-Rahmen SABM dient der Initiierung der Logikverbindungen in der Sekundärstation TS2, wobei die letztere einen Empfang des Befehls-Kontroll-Rahmens SABM mit einem der drei folgenden Antwort-Kontroll-Rahmen beantworten muss:
- Einem Antwort-Kontroll-Rahmen UA ("Unnumbered Acknowledge"), dessen Kontroll-Feld 15 vorzugsweise aus dem Byte 1100F110 besteht und als fünftes Bit ein F-Bit aufweist, bei einem fehlerfreien Empfang des übertragenenen Befehls-Kontroll-Rahmens SABM.
- Einem Antwort-Kontroll-Rahmen DM ("Disconnect Mode Response"), dessen Kontroll-Feld vorzugsweise aus dem Byte 1111F000 besteht und ebenfalls ein F-Bit als fünftes Bit aufweist, bei einem fehlerhaften Empfang des übertragenenen Befehls-Kontroll-Rahmens SABM als Zeichen dafür, dass die Logikverbindungen der Sekundärstation TS2 immer noch unterbrochen sind.
- Einem Antwort-Kontroll-Rahmen FRMR bei einem unverstandenen Empfang des übertragenenen Befehls-Kontroll-Rahmens SABM als Zeichen dafür, dass die Übertragungsverbindung erneut initiiert werden muss, da der Empfang schwerwiegend fehlerhaft war.

Der Befehls-Kontroll-Rahmen DISC dient der Auflösung der vorhandenen Übertragungsverbindung, wobei die Sekundärstation TS2 einen Empfang des Befehls-Kontroll-Rahmens DISC immer mit einem Antwort-Kontroll-Rahmen UA beantworten muss.

Das Rahmenkontroll-Feld FCS der Rahmen dient der Fehlererkennung und besteht aus zwei Bytes, deren Bitwerte jeweils von den Werten der restlichen Bits des betreffenden Rahmens auf eine in der ISO-Norm 3309 ("International Standard Organisation"-Norm) beschriebene Weise durch Rechnung abgeleitet werden. Der Empfang eines jeden mit einem Fehler empfangenen Informations-Rahmens oder Befehls-Kontroll-Rahmens wird von der Empfangsstation einfach ignoriert.

Die primitiven in der Ebene DK ausgelösten Befehle und Anzeigen sind:
- DKCO-REQ : Befehl "DK-CONNECT-REQUEST" zur Herstellung einer Logik-Verbindung durch die Ebene DK, mit der Adresse ADR der angewählten Sekundärstation TS2 als Parameter.
- DKDA-REQ : Befehl "DK-DATA-REQUEST" zur Übertragung eines Informations-Rahmens, mit dem zu übertragenden Informations-Rahmen als Parameter.
- DKDC-REQ : Befehl "DK-DISCONNECT-REQUEST" zur Auflösung einer vorhandenen Logik-Verbindung in der Ebene DK, benötigt keinen Parameter.
- DKDA-IND : Anzeige "DK-DATA-INDICATION" des Empfangs eines übertragenen Informations-Rahmens, mit dem empfangenen übertragenen Informations-Rahmen als Parameter.
- DKAB-IND : Anzeige "DK-ABORT-INDICATION" eines schwerwiegenden Fehlers, mit einer entsprechenden Fehlernachricht ("Error Message") als Parameter. Sie löst in der Regel in der Ebene TR der gleichen Station eine Anzeige TRAB-IND aus.

Die Ebene PH gestattet die Herstellung einer physischen Übertragungsverbindung, z. B. einer Telefonverbindung, zwischen zwei Stationen, eine Aufrechterhaltung dieser Übertragungsverbindung, eine Auflösung dieser Übertragungsverbindung, eine Anzeige unvorhergesehener Verbindungsunterbrüche und eine Erzeugung einer vollkommen übersichtlichen Informations-Übertragung.

Die Ebene PH der Sendestation veranlasst, dass jeder zu übertragende codierte Rahmen in Bit-Gruppen unterteilt wird, denen je ein nachfolgendes Stopp-Bit und keine Kontroll-Bits hinzugefügt werden, wobei die Bit-Gruppen dann mitsamt ihrem Stopp-Bit innerhalb einer dem codierten Rahmen zugeordneten Übertragungszeit zeitlich nacheinander von der Sendestation über das Übertragungs-Netzwerk 1 zu einer Empfangsstation übertragen werden. Das Stopp-Bit dient dabei als Synchronisierungs-Bit. Die in der Empfangsstation empfangenen Bit-Gruppen BY0, ..., BY7 werden dort in der Reihenfolge ihres Empfangs zu einem codierten Empfangs-Rahmen zusammengefügt. In der Fig. 5 ist dargestellt, wie ein codierter Informations-Rahmen 13;14;15;16;FCS;17 in acht Bit-Gruppen BY0 bis BY7 unterteilt wird, denen am Ende je ein Stopp-Bit ST hinzugefügt wird. Als Bit-Gruppe BY0 bis BY7 wird vorzugsweise ein Byte gewählt, welches dann bei der Übertragung von dem Stopp-Bit ST gefolgt wird.

Die primitiven in der Ebene PH ausgelösten Befehle und Anzeigen sind:
- PHCO-REQ : Befehl "PH-CONNECT-REQUEST" zur Herstellung einer physischen Verbindung durch die Ebene PH, mit der Adresse ADR der angewählten Sekundär-station TS2 als Parameter.
- PHDA-REQ : Befehl "PH-DATA-REQUEST" zur Übertragung von Daten, mit den übertragenen Daten als Parametern.
- PHDC-REQ : Befehl "PH-DISCONNECT-REQUEST" zur Auflösung einer vorhandenen physischen Verbindung in der Ebene PH, benötigt keinen Parameter.
- PHDA-IND : Anzeige "PH-DATA-INDICATION" des Empfangs übertragener Daten, mit den empfangenen Daten als Parametern.
- PHAB-IND : Anzeige "PH-ABORT-INDICATION" eines Verbindungs-Unterbruchs oder eines schwerwiegenden Fehlers, mit einer entsprechenden Fehlernachricht ("Error Message") als Parameter. Sie löst in der DK-Ebene der gleichen Station eine Anzeige DKAB-IND aus und veranlasst, dass die Logik-Verbindungen neu initiiert werden.

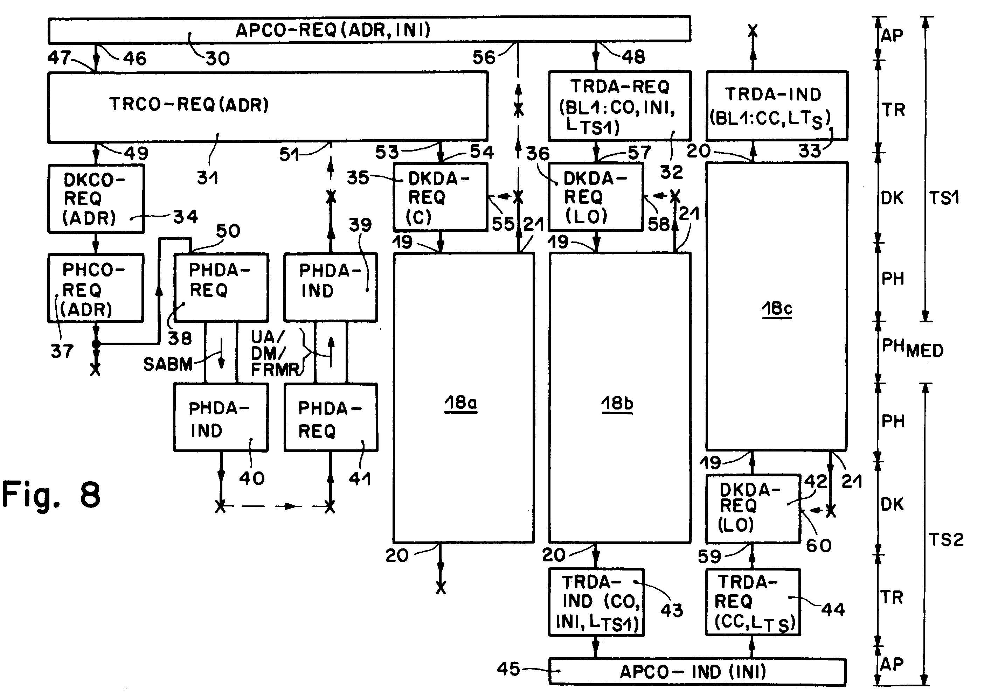

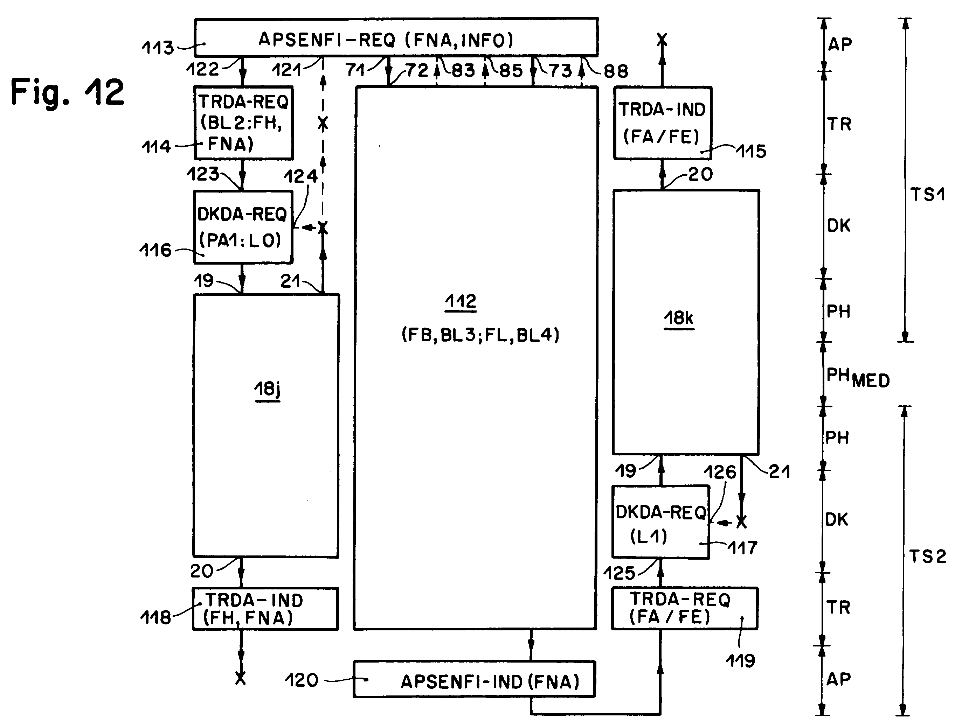

Wenn das Übertragungs-Netzwerk 1 ein schaltbares Netzwerk ist, enthält das erfindungsgemässe Verfahren, wie in der ersten Reihe der Fig. 6 und der Fig. 11 dargestellt, vorzugsweise eine erste Verfahrensstufe VS1, in der, vor der Übertragung der Informationen INFO (siehe Fig. 6) bzw. der Dateiiinhalte COFI (siehe Fig. 11), zuerst einmal die Übertragungsverbindung zwischen der Primärstation TS1 und der Sekundärstation TS2 hergestellt wird. Im Falle der Übertragung von Informationen INFO (siehe Fig. 6) werden anschliessend in mindestens einer weiteren Verfahrensstufe VS2 des erfindungsgemässen Verfahrens die eigentlich zu übertragenden Informationen INFO von der Sendestation TS1 zur Empfangsstation TS2 übertragen. In einer letzten Verfahrensstufe VS3 des erfindungsgemässen Verfahrens wird schliesslich die vorhandene Übertragungsverbindung zwischen den beiden Stationen TS1 und TS2 wieder aufgelöst. Die Verfahrensstufen VS1, VS2 und VS3 werden dabei von einem Verfahrens-Programm in der angegebenen Reihenfolge zeitlich durchlaufen.

In der Fig. 6 und der Fig. 11 sind die von der Station TS2 gesendeten Blöcke und Pakete jeweils schraffiert dargestellt.

Nachfolgend gelten folgende Annahmen (siehe Fig. 6):
- Am Ende der ersten Verfahrensstufe VS1 wird ein Kontroll-Paket C übertragen, dann ein aus einem Daten-Paket L0 bestehender CO-Kontroll-Block BL1, der von der Empfangsstation TS2 mit einem aus einem Daten-Paket L0 bestehenden CC-Kontroll-Block BL1 beantwortet wird.
- Während einer einzigen Verfahrensstufe VS2 werden in der angegebenen Reihenfolge die beiden Informations-Blöcke BL2 und BL3 zeitlich nacheinander übertragen, wobei der Informations-Block BL2 aus zwei Informations-Paketen D1 und L2 besteht, während der Informations-Block BL3 ein einziges Informations-Paket L3 enthält. Da der Informations-Block BL2 mehrere Informations-Pakete D1 und L2 enthält, muss die Empfangsstation TS2, nach Empfang des letzten Informations-Paketes L2 des Informations-Blocks BL2, den korrekten Empfang des letzteren durch Rücksendung eines Kontroll-Paketes A bestätigen.
- Zu Beginn der letzten Verfahrensstufe VS3 wird ein aus einem einzigen Daten-Paket L4 bestehender Kontroll-Block DC übertragen.

Im Gesamtprogramm besitzen somit das zweite, dritte, fünfte, siebte und achte Paket als letztes Paket ihres jeweiligen Blocks je ein Kopfteil L und sind daher mit L0 (von TS1), L0 (von TS2), L2, L3 oder L4 bezeichnet. Das vierte Paket ist dagegen kein letztes Paket seines Blocks BL2 und besitzt daher ein Kopfteil D. Es ist daher mit D1 bezeichnet.

In nachfolgend verwendeten Verfahrensstufen werden Funktionsanordnungen 18a, 18b, 18c, 18d, 18e, 18f, 18g, 18h, 18j, 18k und 18m benötigt, die alle identisch aufgebaut sind wie eine in der Fig. 7 dargestellte Funktionsanordnung 18.

Die Funktionsanordnung 18 besitzt einen Eingang 19, einen ersten Ausgang 20 sowie einen zweiten Ausgang 21 und besteht aus zwei Funktionsblöcken 22 und 23 der Ebene PH der Primärstation TS1, aus zwei Funktionsblöcken 24 und 25 der Ebene PH der Sekundärstation TS2 sowie aus einem Funktionsblock 26 der Ebene DK der Sekundärstation TS2. Der letztere besitzt einen ersten Ausgang 27 und einen zweiten Ausgang 28.

Ein Befehl 29 der Ebene DK der Primärstation TS1 erreicht über den Eingang 19 einen Eingang des Funktionsblocks 22, in dem er einen Befehl PHDA-REQ auslöst. Der letztere veranlasst, dass ein gemäss HDLC-Norm codierter Rahmen in Bit-Gruppen BY0 bis BY7 über das Übertragungs-Medium PH_{MED} zur Sekundärstation TS2 übertragen wird, wo sein Empfang im Funktionsblock 24 der Ebene PH eine Anzeige PHDA-IND auslöst. Die letztere löst ihrerseits im Funktionsblock 26 der Ebene DK der Sekundärstation TS2 eine Anzeige DKDA-IND aus, deren Informationsinhalt HDLC-mässig interpretiert über den ersten Ausgang 27 des Funktionsblocks 26 und den ersten Ausgang 20 der Funktionsanordnung 18 der Ebene TR der Sekundärstation TS2 zugeleitet wird. Die Anzeige DKDA-IND löst ausserdem eine Empfangs-Bestätigung aus, indem sie über den zweiten Ausgang 28 des Funktionsblocks 26 im Funktionsblock 25 der Ebene PH der Sekundärstation TS2 einen Befehl PHDA-REQ auslöst, welcher veranlasst, dass ein Antwort-Kontroll-Rahmen RR, RNR oder FRMR in Bit-Gruppen BY0 bis BY7 über das Übertragungsmedium PH_{MED} zur Primärstation TS1 übertragen wird, wo sein Empfang im Funktionsblock 23 der PH-Ebene eine Anzeige PHDA-IND auslöst, deren Informationsinhalt über den zweiten Ausgang 21 der Funktionsanordnung 18 an die DK-Ebene der Primärstation TS1 weitergeleitet wird, wo er HDLC-mässig interpretiert wird.

Die Übertragung eines jeden codierten Rahmens 13;14;15;16;FCS;17 in Bit-Gruppen BY0 bis BY7 erfolgt jeweils, indem im Funktionsblock 22 der Ebene PH der Sendestation TS1 bzw. TS2 der Befehl PHDA-REQ ausgelöst wird, zwecks Unterteilung des codierten Rahmens 13;14;15;16;FCS;17 in den Bit-Gruppen BY0 bis BY7. Die in der Empfangsstation TS2 bzw. TS1 empfangenen Bit-Gruppen BY0 bis BY7 werden dort jeweils in der Reihenfolge ihres Empfangs zu einem codierten Empfangs-Rahmen zusammengefügt und lösen dann im Funktionsblock 24 der PH-Ebene der Empfangsstation TS2 bzw. TS1 eine Anzeige PHDA-IND aus. Nach der Kontrolle auf vorhandene Fehler wird jeweils im Funktionsblock 25 der Ebene PH der Empfangsstation TS2 bzw. TS1 ein Befehl PHDA-REQ ausgelöst zwecks Übertragung über das Übertragungs-Netzwerk 1 eines als Empfangs-Bestätigung dienenden Antwort-Kontroll-Rahmens RR, RNR oder FRMR, dessen Empfang dann im Funktionsblock 23 der Ebene PH eine Anzeige PHDA-IND auslöst, worauf der Informationsinhalt des zuletzt von der Sendestation TS1 bzw. TS2 zur Empfangsstation TS2 bzw. TS1 übertragene Pakets als korrekt empfangen gilt, wenn der Anwort-Kontroll-Rahmen ein Antwort-Kontroll-Rahmen RR ist, als fehlerhaft empfangen gilt, wenn der Antwort-Kontroll-Rahmen ein Antwort-Kontroll-Rahmen RNR ist, und als schwerwiegend fehlerhaft empfangen gilt, wenn der Kontroll-Antwortrahmen ein Kontroll-Antwort-Rahmen FRMR ist.

Im in der Fig. 8 dargestellten Signalfluss-Diagramm der ersten Verfahrensstufe VS1 sind vorhanden:
- Ein Funktionsblock 30 in der Ebene AP der Primärstation TS1,
- drei Funktionsblöcke 31, 32 und 33 in der Ebene TR der Primärstation TS1,
- drei Funktionsblöcke 34, 35 und 36 in der Ebene DK der Primärstation TS1,
- drei Funktionsblöcke 37, 38 und 39 in der Ebene PH der Primärstation TS1,
- zwei Funktionsblöcke 40 und 41 in der Ebene PH der Sekundärstation TS2,
- ein Funktionsblock 42 in der Ebene DK der Sekundärstation TS2,
- zwei Funktionsblöcke 43 und 44 in der Ebene TR der Sekundärstation TS2,
- ein Funktionsblock 45 in der Ebene AP der Sekundärstation TS2 und
- drei Funktionsanordnungen 18a, 18b und 18c.

Ein erster Ausgang 46 des Funktionsblocks 30 ist auf einen ersten Eingang 47 des Funktionsblocks 31 und ein zweiter Ausgang 48 auf den Eingang des Funktionsblocks 32 geführt. Ein erster Ausgang 49 des Funktionsblocks 31 ist in der angegebenen Reihenfolge über die Funktionsblöcke 34 und 37 mit dem physischen Medium PH_{MED} verbunden. Das letztere ist mit einem ersten Eingang 50 des Funktionsblocks 38 verbunden, dessen Ausgang über das physische Medium PH_{MED} auf den Eingang des Funktionsblocks 40 geführt ist, dessen Ausgang mit der Ebene DK der Sekundärstation TS2 verbunden ist. Die letztere Ebene DK ist mit dem Eingang des Funktionsblocks 41 verbunden, dessen Ausgang über das physische Medium PH_{MED} auf den Eingang des Funktionsblocks 39 geführt ist. Der Ausgang des letzteren ist mit der Ebene DK der Primärstation TS1 verbunden. Diese Ebene DK ist auf einen zweiten Eingang 51 des Funktionsblocks 31 geführt. Ein zweiter Ausgang 53 des Funktionsblocks 31 ist mittels eines ersten Eingangs 54 des Funktionsblocks 35 über den letzteren auf den Eingang 19 der Funktionsanordnung 18a geführt, deren erster Ausgang 20 mit der Ebene TR der Sekundärstation TS2 und deren zweiter Ausgang 21 mit der Ebene DK der Primärstation TS1 verbunden ist. Die letztere Ebene DK ist ihrerseits mit einem zweiten Eingang 55 des Funktionsblocks 35 und einem Eingang 56 des Funktionsblocks 30 verbunden. Der Ausgang des Funktionsblocks 32 ist mittels eines ersten Eingangs 57 des Funktionsblocks 36 über den letzteren auf den Eingang 19 der Funktionsanordnung 18b geführt, deren erster Ausgang 20 mit dem Eingang des Funktionsblocks 43 und deren zweiter Ausgang 21 über die DK-Ebene der Primärstation TS1 mit einem zweiten Eingang 58 des Funktionsblocks 36 verbunden ist. Der Ausgang des Funktionsblocks 43 ist auf den Eingang des Funktionsblocks 45 und der Ausgang des letzteren auf den Eingang des Funktionsblocks 44 geführt. Der Ausgang des letzteren ist mit einem ersten Eingang 59 des Funktionsblocks 42 verbunden, dessen Ausgang auf den Eingang 19 der Funktionsanordnung 18c geführt ist. Der erste Ausgang 20 der letzteren ist über den Funktionsblock 33 mit der Ebene AP der Primärstation TS1 und der zweite Ausgang 21 mit der Ebene DK der Sekundärstation TS2 verbunden. Diese Ebene DK ist ihrerseits mit einem zweiten Eingang 60 des Funktionsblocks 42 verbunden.

Die erste Verfahrensstufe VS1 enthält folgende Verfahrensschritte:

In einem ersten Verfahrensschritt wählt der Benutzer der Primärstation TS1 eine Adresse ADR einer anzuwählenden Sekundärstation TS2 und löst dadurch im Funktionsblock 30 der Ebene AP der Primärstation TS1 einen ersten Befehl APCO-REQ aus zur Herstellung einer Übertragungsverbindung (z. B. einer Telefonverbindung) zwischen den beiden Stationen TS1 und TS2.

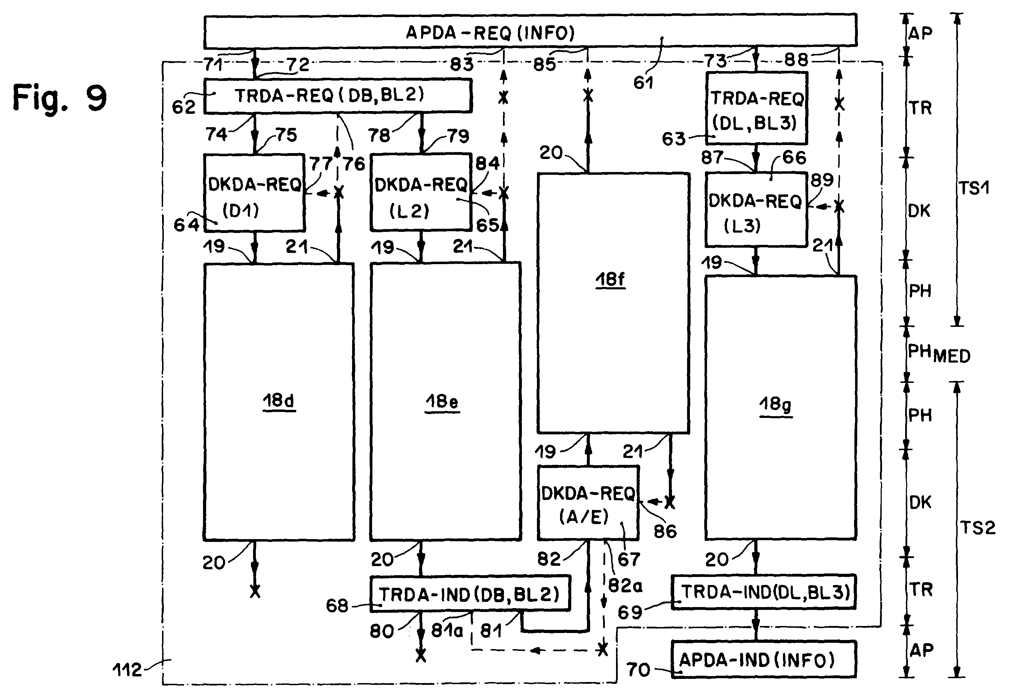

Der erste Befehl APCO-REQ löst seinerseits eine Übertragung der Adresse ADR der Sekundärstation TS2 und des Identifizierers INI der Primärstation TS1 aus, indem er in der Ebene TR der Primärstation TS1 jeweils einen zweiten Befehl TRCO-REQ im Funktionsblock 31 und nach dessen Ausführung einen dritten Befehl TRDA-REQ im Funktionsblock 32 auslöst.
- Der zweite Befehl TRCO-REQ veranlasst einen Start einer Übertragungs-Session, in der als erstes die Adresse ADR der Sekundärstation TS2 übertragen wird. Nach Auslösung dieses zweiten Befehls geht die TR-Ebene der Primärstation TS1 in Wartestellung und wartet auf eine Bestätigung seitens der Sekundärstation TS2 einer korrekten Ausführung des Befehls. Erst nach Empfang dieser Bestätigung löst die Ebene AP der Primärstation TS1 den dritten Befehl TRDA-REQ in der Ebene TR der Primärstation TS1 aus.
- Der dritte Befehl TRDA-REQ veranlasst eine Übertragung eines Kontroll-Blocks CO, in dem der Identifizierer INI der Primärstation TS1 und der von der Primärstation TS1 gewünschte Wert L_{TS1} der Blocklänge enthalten ist. Nach Auslösung dieses dritten Befehls geht die TR-Ebene der Primärstation TS1 wieder in Wartestellung und wartet auf eine Anzeige TRDA-IND im Funktionsblock 33 des Empfangs eines Kontroll-Blocks CC, in dem der Primärstation TS1 von der Sekundärstation TS2 der definitive Wert L_{TS} der Blocklänge mitgeteilt wird. Erst nach Erscheinen der Anzeige TRDA-IND löst die Ebene AP der Primärstation TS1 den nächsten Befehl in der TR-Ebene der letzteren aus bzw., da kein solcher Befehl mehr ansteht, ist sie bereit den ersten Befehl der Verfahrensstufe VS2 auszuführen (siehe Fig. 9, APDA-REQ in 61).

Der zweite Befehl TRCO-REQ (siehe Funktionsblock 31) löst seinerseits jeweils in der Ebene DK der Primärstation TS1 einen vierten Befehl DKCO-REQ im Funktionsblock 34 und nach dessen Ausführung einen fünften Befehl DKDA-REQ im Funktionsblock 35 aus.
- Der vierte Befehl DKCO-REQ veranlasst, dass einerseits alle benötigten physischen Verbindungen zwischen der Primärstation TS1 und der mit der Adresse ADR versehenen Sekundärstation TS2 hergestellt werden und dass danach andererseits alle benötigten Logik-Verbindungen in der Sekundärstation TS2 hergestellt werden. Nach Auslösung dieses vierten Befehls geht die Ebene DK der Primärstation TS1 in Wartestellung und wartet auf eine Bestätigung eines korrekten Empfangs dieses Befehls seitens der Sekundärstation TS2. Erst nach Erhalt dieser Bestätigung löst die Ebene TR der Primärstation TS1 den fünften Befehl DKDA-REQ in der Ebene DK der Primärstation TS1 aus.
- Der fünfte Befehl DKDA-REQ veranlasst, dass ein Kontroll-Paket C von der Primärstation TS1 über das Übertragungs-Netzwerk 1 zur Sekundärstation TS2 übertragen wird zwecks Initiierung der letzteren. Nach Auslösung dieses fünften Befehls geht die Ebene DK der Primärstation TS1 wieder in Wartestellung und wartet auf eine Bestätigung eines korrekten Empfangs dieses Befehls seitens der Sekundärstation TS2. Erst nach Erhalt dieser Bestätigung löst die Ebene TR der Primärstation TS1 den nächsten Befehl in der Ebene DK der letzteren aus bzw., da kein solcher Befehl mehr ansteht, gibt sie der Ebene AP die Bestätigung, dass diese den dritten Befehl TRDA-REQ in der Ebene TR der Primärstation TS1 auslösen kann.

Der vierte Befehl DKCO-REQ (siehe Funktionsblock 34) löst seinerseits im Funktionsblock 37 der Ebene PH der Primärstation TS1 einen Befehl PHCO-REQ aus zur Herstellung je einer physischen Verbindung durch die Ebenen PH der beiden Stationen TS1 und TS2 sowie durch das Übertragungsmedium PH_{MED} zwecks Verwirklichung der benötigten physischen Verbindungen zu der die Adresse ADR aufweisenden Sekundärstation TS2.

Nach Ausführung des Befehls PHCO-REQ wird im Funktionsblock 38 der Ebene PH der Primärstation TS1 ein Befehl PHDA-REQ ausgelöst zur Übertragung in Bit-Gruppen BY0 bis BY7 eines Befehls-Kontroll-Rahmens SABM von der Primärstation TS1 über das Übertragungsmedium PH_{MED} zur Sekundärstation TS2, wo sein Empfang im Funktionsblock 40 eine Anzeige PHDA-IND auslöst.

Der Informationsinhalt der Anzeige PHDA-IND wird an die Ebene DK der Sekundärstation TS2 weitergeleitet einerseits zwecks dortiger Verwirklichung der benötigten Logik-Verbindungen und anderseits zwecks dortiger Auslösung einer Empfangs-Bestätigung. Da der empfangene Befehls-Kontroll-Rahmen SABM übertragene Daten enthält, welche anlässlich der Übertragung verfälscht worden sein können, muss der korrekte oder unkorrekte Empfang des Befehls-Kontroll-Rahmen SABM der Primärstation TS1 bestätigt werden. Zu diesem Zweck löst die Ebene DK der Sekundärstation TS2 im Funktionsblock 41 der Ebene PH der Sekundärstation TS2 einen Befehl PHDA-REQ aus, welcher eine Übertragung von der Sekundärstation TS2 über das Übertragungsmedium PH_{MED} zur Primärstation TS1 eines Antwort-Kontroll-Rahmens UA, DM oder FRMR veranlasst. Dessen Empfang in der Primärstation TS1 löst dort im Funktionsblock 39 der Ebene PH eine Anzeige PHDA-IND aus, deren Informationsinhalt anschliessend an die Ebene DK der Primärstation TS1 weitergeleitet wird, wo er beim Empfang eines Antwort-Kontroll-Rahmens UA über den Eingang 51 des Funktionsblocks 31 veranlasst, dass die TR-Ebene den fünften Befehl DKDA-REQ in der Ebene DK der Primärstation TS1 auslöst, da der korrekte Empfang des Befehls-Rahmens SABM als korrekte Ausführung des vierten Befehls DKCO-REQ (siehe Funktionsblock 34) interpretiert wird. Die korrekte Ausführung des letzteren wird somit der Primärstation TS1 indirekt mittels der Übertragung des Antwort-Kontroll-Rahmens UA mitgeteilt.

Der fünfte Befehl DKDA-REQ (siehe Funktionsblock 35) veranlasst dann seinerseits die Übertragung eines Kontroll-Pakets C, indem er innerhalb der Funktionsanordnung 18a (siehe Fig. 7) in deren Funktionsblock 22 einen Befehl PHDA-REQ auslöst zur Übertragung in Bit-Gruppen BY0 bis BY7 des Kontroll-Pakets C. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18a und wird zwecks Initiierung der Sekundärstation TS2 an deren Ebene TR weitergeleitet. Ausserdem erscheint am zweiten Ausgang 21 der Funktionsanordnung 18a eine Empfangs-Bestätigung des Kontroll-Pakets G in Gestalt eines Antwort-Kontroll-Rahmens Antwort-Kontroll-Rahmens RR, RNR oder FRMR. Beim Empfang eines RNR wird über den Eingang 55 im Funktionsblock 35 der Ebene DK der Primärstation TS1 z. B. eine Sendewiederholung des Kontroll-Pakets C ausgelöst. Beim Empfang eines Antwort-Kontroll-Rahmens RR wird dagegen den Ebenen TR und AP der Primärstation TS1 eine Bestätigung einer korrekten Ausführung des zweiten Befehls TRCO-REQ (siehe Funktionsblock 31) gegeben, so dass der Funktionsblock 30 der Ebene AP der Primärstation TS1 im Funktionsblock 32 der Ebene TR den dritten Befehl TRDA-REQ auslösen kann.

Der dritte Befehl TRDA-REQ veranlasst seinerseits die Übertragung eines aus einem einzigen Daten-Paket PA0 bestehenden Kontroll-Blocks CO ("Connect"), der als Informationsinhalt mindestens der Identifizierer INI der Primärstation TS1, jedoch vorzugsweise auch den von der letzteren gewünschten maximalen Wert L_{TS1} der Blocklänge enthält. Der dritte Befehl TRDA-REQ löst im Funktionsblock 36 der Ebene DK der Primärstation TS1 einen sechsten Befehl DKDA-REQ aus zwecks Start der Übertragung von der Primärstation TS1 zur Sekundärstation TS2 des einzigen Daten-Pakets PA0 des Kontroll-Blocks CO, indem er innerhalb der Funktionsanordnung 18b (siehe Fig. 7) in deren Funktionsblock 22 einen Befehl PHDA-REQ auslöst zur Übertragung in Bit-Gruppen BY0 bis BY7 des Daten-Pakets PA0. Auf die anlässlich der Beschreibung der Fig. 7 angegebene Weise erscheint dadurch eine Anzeige DKDA-IND im Funktionsblock 26 (siehe Fig. 7) und diese löst über den ersten Ausgang 20 der Funktionsanordnung 18b im Funktionsblock 43 eine Anzeige TRDA-IND aus, die ihrerseits im Funktionsblock 45 eine Anzeige APCO-IND auslöst. Der Empfang in der Sekundärstation TS2 des Kontroll-Blocks CO löst somit dort sowohl eine Anzeige TRDA-IND in der TR-Ebene als auch eine Anzeige APCO-IND in der AP-Ebene aus. Der Informationsinhalt INI und L_{TS1} des Kontroll-Blocks CO steht damit der Sekundärstation TS2 zur Verfügung. Ausserdem erscheint am zweiten Ausgang 21 der Funktionsanordnung 18b eine Empfangs-Bestätigung in Gestalt eines Antwort-Kontroll-Rahmens RR, RNR oder FRMR. Beim Empfang eines Antwort-Kontroll-Rahmens RNR wird über den Eingang 58 im Funktionsblock 36 der Ebene DK der Primärstation TS1 z. B. eine Sendewiederholung des Daten-Pakets PA0 ausgelöst. Beim Empfang eines Antwort-Kontroll-Rahmens RR wird dagegen der Ebene DK der Primärstation TS1 eine Bestätigung einer korrekten Ausführung des zuletzt in der DK-Ebene ausgelösten Befehls DKDA-REQ gegeben.

Die Sekundärstation TS2 vergleicht den empfangenen Wert L_{TS1} mit dem von ihr selber gewünschten Wert L_{TS2} der Blocklänge und wählt den kleineren der beiden Werte L_{TS1} oder L_{TS2} als definitiven Wert L_{TS} der bei der Übertragung während der laufenden Übertragungs-Session zu verwenden Blocklänge. Dieser gewählte kleinere Wert L_{TS} der Blocklänge wird der Primärstation TS1 anschliessend vorzugsweise auf die folgende Weise mitgeteilt:

Der Empfang des von der Primärstation TS1 gewünschten maximalen Wertes L_{TS1} der Blocklänge löst in der Ebene AP der Sekundärstation TS2 die Anzeige APCO-IND (siehe Funktionsblock 45) aus, die ihrerseits im Funktionsblock 44 der Ebene TR der Sekundärstation TS2 einen Befehl TRDA-REQ auslöst, welcher veranlasst, dass ein Kontroll-Block CC ("Connect Confirm"), der als Informationsinhalt den gewählten kleineren Wert L_{TS} der Blocklänge besitzt, übertragen wird. Der Kontroll-Block CC besteht aus einem einzigen Daten-Paket, welches mit L0 bezeichnet ist.

Der Befehl TRDA-REQ löst im Funktionsblock 42 der Ebene DK der Sekundärstation TS2 einen Befehl DKDA-REQ aus, welcher veranlasst, dass das einzige im Kontroll-Block CC enthaltene Daten-Paket von der Sekundärstation TS2 über das Übertragungs-Netzwerk 1 zur Primärstation TS1 übertragen wird. Zu diesem Zweck löst der Befehl DKDA-REQ innerhalb der Funktionsanordnung 18c (siehe Fig. 7) in deren Funktionsblock 22 einen Befehl PHDA-REQ aus zur Übertragung in Bit-Gruppen BY0 bis BY7 des betreffenden Daten-Pakets. Auf die anlässlich der Beschreibung der Fig. 7 angegebene Weise erscheint dadurch eine Anzeige DKDAIND im Funktionsblock 26 (siehe Fig. 7). Der Empfang des Kontroll-Blocks CC in der Primärstation TS1 bzw. die Anzeige DKDA-IND löst über den ersten Ausgang 20 der Funktionsanordnung 18c im Funktionsblock 33 der Ebene TR der Primärstation TS1 eine Anzeige TRDA-IND aus als Zeichen, dass die erste Verfahrensstufe VS1 beendet ist. Der Informationsinhalt der Anzeige TRDA-IND wird daher als Empfangs-Bestätigung an die Ebene AP der Primärstation TS1 weitergeleitet zwecks Auslösung des nächsten Befehls in der Ebene AP, der, wie bereits erwähnt, der erste Befehl der Verfahrensstufe VS2 ist (siehe Fig. 9). Der gewählte und übertragene Wert L_{TS} der Blocklänge steht jetzt auch der Primärstation TS1 zur Verfügung, so dass diese weiss, welchen Wert der Blocklänge sie in der laufenden Übertragungs-Session zu verwenden hat. Ausserdem erscheint am zweiten Ausgang 21 der Funktionsanordnung 18c eine Empfangs-Bestätigung des Kontroll-Blocks CC in Gestalt eines Antwort-Kontroll-Rahmens RR, RNR oder FRMR. Beim Empfang eines Antwort-Kontroll-Rahmens RNR wird über den Eingang 60 des Funktionsblocks 42 der Ebene DK der Sekundärstation TS2 z. B. eine Sendewiederholung des Daten-Pakets des Kontroll-Blocks CC veranlasst. Beim Empfang eines Antwort-Kontroll-Rahmens RR wird dagegen der Ebene DK der Sekundärstation TS2 eine Bestätigung eines korrekten Empfangs des zuletzt gesendeten Befehls DKDA-REQ (siehe Funktionsblock 42) gegeben.

Im in der Fig. 9 dargestellten Signalfluss-Diagramm der Verfahrensstufe VS2 sind vorhanden:
- Ein Funktionsblock 61 in der Ebene AP der Primärstation TS1,
- zwei Funktionsblöcke 62 und 63 in der Ebene TR der Primärstation TS1,
- drei Funktionsblöcke 64, 65 und 66 in der Ebene DK der Primärstation TS1,
- ein Funktionsblock 67 in der Ebene DK der Sekundärstation TS2,
- zwei Funktionsblöcke 68 und 69 in der Ebene TR der Sekundärstation TS2,
- ein Funktionsblock 70 in der Ebene AP der Sekundärstation TS2 und
- vier Funktionsanordnungen 18d, 18e, 18f und 18g.

Ein erster Ausgang 71 des Funktionsblocks 61 ist auf einen ersten Eingang 72 des Funktionsblocks 62 und ein zweiter Ausgang 73 auf den Eingang des Funktionsblocks 63 geführt. Ein erster Ausgang 74 des Funktionsblocks 62 ist mit einem ersten Eingang 75 des Funktionsblocks 64 verbunden, dessen Ausgang auf den Eingang 19 der Funktionsanordnung 18d geführt ist, deren erster Ausgang 20 seinerseits mit der Ebene TR der Sekundärstation TS2 verbunden ist. Der zweite Ausgang 21 der Funktionsanordnung 18d ist über die Ebene DK der Primärstation TS1 einerseits auf einen zweiten Eingang 76 des Funktionsblocks 62 und andererseits auf einen zweiten Eingang 77 des Funktionsblocks 64 geführt. Ein zweiter Ausgang 78 des Funktionsblocks 62 ist mit einem ersten Eingang 79 des Funktionsblocks 65 verbunden, dessen Ausgang auf den Eingang 19 der Funktionsanordnung 18e geführt ist, deren erster Ausgang 20 seinerseits mit einem ersten Eingang des Funktionsblocks 68 verbunden ist. Ein erster Ausgang 80 des letzteren ist auf die Ebene AP der Sekundärstation TS2 geführt, während ein zweiter Ausgang 81 des Funktionsblocks 68 mit einem ersten Eingang 82 des Funktionsblocks 67 verbunden ist. Der zweite Ausgang 21 der Funktionsanordnung 18e ist einerseits über die DK- und die Ebene TR der Primärstation TS1 auf einen ersten Eingang 83 des Funktionsblocks 61 und andererseits in der DK-Ebene der Primärstation TS1 auf einen zweiten Eingang 84 des Funktionsblocks 65 geführt. Ein erster Ausgang des Funktionsblocks 67 ist mit dem Eingang 19 der Funktionsanordnung 18f verbunden, deren erster Ausgang 20 über die Ebene TR der Primärstation TS1 auf einen zweiten Eingang 85 des Funktionsblocks 61 geführt ist, während der zweite Ausgang 21 der Funktionsanordnung 18f in der Ebene DK der Sekundärstation TS2 mit einem zweiten Eingang 86 des Funktionsblocks 67 verbunden ist. Ein zweiter Ausgang 82a des Funktionsblocks 67 ist über die Ebenen TR und AP der Sekundärstation TS2 mit einem zweiten Eingang des Funktionsblocks 68 verbunden. Der Ausgang des Funktionsblocks 63 ist auf einen ersten Eingang 87 des Funktionsblocks 66 geführt, dessen Ausgang mit dem Eingang 19 der Funktionsanordnung 18g verbunden ist, deren erster Ausgang 20 seinerseits über den Funktionsblock 69 auf den Eingang des Funktionsblocks 70 geführt ist. Der zweite Ausgang 21 der Funktionsanordnung 18g ist einerseits über die Ebenen DK und TR mit einem dritten Eingang 88 des Funktionsblocks 61 und andererseits in der Ebene DK mit einem zweiten Eingang 89 des Funktionsblocks 66 verbunden.

Die Verfahrensstufe VS2 enthält folgende Verfahrensschritte:

Nachdem in der ersten Verfahrensstufe VS1 die Übertragungsverbindung zwischen den beiden Stationen TS1 und TS2 hergestellt worden ist, löst in der Verfahrensstufe VS2 eine erste zu übertragende Information im Funktionsblock 61 der Ebene AP der Primärstation TS1 einen ersten Befehl APDA-REQ aus zur zeitlich aufeinanderfolgenden Übertragung aller zu übertragenden Informationen INFO. Gemäss Annahme in der Fig. 6 veranlasst der erste Befehl APDA-REQ der AP-Ebene zuerst einmal, dass die zu umfangreichen Informationen INFO in zwei kürzere Informations-Blöcke BL2 und BL3 unterteilt werden, die dann in der angegebenen Reihenfolge zeitlich nacheinander übertragen werden.

Der erste Befehl APDA-REQ löst dazu in der Ebene TR der Primärstation TS1 zeitlich nacheinander mindestens soviele zweite Befehle TRDA-REQ aus, wie Informations-Blöcke BL2 und BL3 in den zu übertragenden Informationen INFO enthalten sind, d. h. in den beiden Funktionsblöcken 62 und 63 (siehe Fig. 9) wird zeitlich nacheinander je ein zweiter Befehl TRDA-REQ ausgelöst.
- Der im Funktionsblock 62 ausgelöste erste zweite Befehl TRDA-REQ veranlasst die Übertragung des Informations-Blocks BL2, dem als nichtletzter Block ein Kopfteil DB zugeordnet ist. Nach Auslösung dieses Befehls geht die Ebene TR der Primärstation TS1 in Wartestellung und wartet auf eine Bestätigung seitens der Sekundärstation TS2 einer korrekten Ausführung des Befehls. Erst nach Empfang dieser Bestätigung löst die Ebene AP der Primärstation TS1 den zweiten zweiten Befehl TRDA-REQ im Funktionsblock 63 der Ebene TR der Primärstation TS1 aus.
- Dieser im Funktionsblock 63 ausgelöste zweite zweite Befehl TRDA-REQ veranlasst die Übertragung des Informations-Blocks BL3, dem als letzter Block ein Kopfteil DL zugeordnet ist. Nach Auslösung dieses Befehls geht die Ebene TR der Primärstation TS1 wieder in Wartestellung und wartet auf eine Bestätigung seitens der Sekundärstation TS2 einer korrekten Ausführung des Befehls. Erst nach Empfang dieser Bestätigung startet die Ebene AP der Primärstation TS1, da alle Informations-Blöcke BL2 und BL3 der Informationen INFO übertragen worden sind, die nächste Verfahrensstufe VS3.

Ein jeder zweiter Befehl TRDA-REQ, der zu einem Informations-Block gehört, welcher länger ist als die maximal zugelassene Länge der Informations-Pakete, veranlasst dass der betreffende Informations-Block in Informations-Pakete unterteilt wird. Dementsprechend veranlasst der erste zweite Befehl TRDA-REQ der TR-Ebene (siehe Funktionsblock 62), dass der zu lange Informations-Block BL2 in mehrere kürzere Informations-Pakete, d. h. gemäss Annahme in der Fig. 6 in zwei Informations-Pakete D1 und L2, unterteilt wird. Der erste zweite Befehl TRDA-REQ löst in der Ebene DK der Primärstation TS1 in der angegebenen Reihenfolge zeitlich nacheinander soviele dritte Befehle DKDA-REQ aus, wie Informations-Pakete im zum betreffenden zweiten Befehl TRDA-REQ gehörenden Informations-Block BL2 enthalten sind, d. h. gemäss Annahme in der Fig. 6 zwei dritte Befehle DKDA-REQ.
- Der erste dritte Befehl DKDA-REQ
   im Funktionsblock 64 veranlasst die Übertragung des Informations-Pakets D1, welches als nichtletztes Paket seines Informations-Blocks BL2 einen Kopfteil D besitzt. Nach Auslösung dieses Befehls geht die DK-Ebene der Primärstation TS1 in Wartestellung und wartet auf eine Bestätigung eines korrekten Empfangs dieses Befehls seitens der Sekundärstation TS2. Erst nach Erhalt dieser Bestätigung löst die Ebene TR der Primärstation TS1 den zweiten dritten Befehl DKDA-REQ im Funktionsblock 65 der Ebene DK der Primärstation TS1 aus.
- Der zweite dritte Befehl DKDA-REQ
   im Funktionsblock 65 veranlasst die Übertragung des Informations-Pakets L2, welches als letztes Paket seines Informations-Blocks BL2 einen Kopfteil L besitzt. Nach Auslösung dieses Befehls geht die Ebene DK der Primärstation TS1 in Wartestellung und wartet auf eine Bestätigung eines korrekten Empfangs dieses Befehls seitens der Sekundärstation TS2. Erst nach Erhalt dieser Bestätigung veranlasst die Ebene TR der Primärstation TS1 die Ebene AP der Primärstation TS1 dazu, den zweiten zweiten Befehl TRDA-REQ im Funktionsblock 63 der Ebene TR der Primärstation TS1 auszulösen.

Der erste dritte Befehl DKDA-REQ (siehe Funktionsblock 64) veranlasst die Übertragung des Informations-Pakets D1 von der Primärstation TS1 über das Übertragungs-Netzwerk 1 zur Sekundärstation TS2, indem er innerhalb der Funktionsanordnung 18d (siehe Fig. 7) in deren Funktionsblock 22 einen Befehl PHDA-REQ auslöst zur Übertragung in Bit-Gruppen BY0 bis BY7 des Informations-Pakets D1. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18d, der seinerseits an die Ebene TR der Sekundärstation TS2 weitergeleitet wird. Ausserdem erscheint am zweiten Ausgang 21 der Funktionsanordnung 18d eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Primärstation TS1 über den Eingang 77 des Funktionsblocks 64 z. B. eine Sendewiederholung des Informations-Pakets D1 ausgelöst. Beim Empfang eines Antwort-Kontroll-Rahmens RR wird dagegen der Ebene TR der Primärstation TS1 über den Eingang 76 des Funktionsblocks 62 eine Bestätigung eines korrekten Empfangs des ersten dritten Befehls DKDA-REQ gegeben, so dass die Ebene TR im Funktionsblock 65 der Ebene DK den zweiten dritten Befehl DKDA-REQ auslösen kann.

Der zweite dritte Befehl DKDA-REQ (siehe Funktionsblock 65) veranlasst dann seinerseits die Übertragung des Informations-Pakets L2 von der Primärstation TS1 über das Übertragungs-Netzwerk 1 zur Sekundärstation TS2, indem er innerhalb der Funktionsanordnung 18e (siehe Fig. 7) in deren Funktionsblock 22 einen Befehl PHDA-REQ auslöst zur Übertragung in Bit-Gruppen BY0 bis BY7 des Informations-Pakets L2. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18e, der seinerseits im Funktionsblock 68 eine Anzeige TRDA-IND auslöst. Ausserdem erscheint am zweiten Ausgang 21 der Funktionsanordnung 18e eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Primärstation TS1 über den Eingang 84 des Funktionsblocks 65 z. B. eine Sendewiederholung des Informations-Pakets L2 ausgelöst. Beim Empfang eines Antwort-Kontroll-Rahmens RR wird dagegen über die Ebene TR und den Eingang 83 des Funktionsblocks 61 der Ebene AP der Primärstation TS1 eine Bestätigung eines korrekten Empfangs des zweiten dritten Befehls DKDA-REQ gegeben.

Nach dem Empfang in der Sekundärstation TS2 eines jeden letzten Pakets eines aus mehreren Informations-Paketen bestehenden Informations-Blocks wird von der Anzeige TRDA-IND in der Sekundärstation TS2 eine zusätzliche Bestätigung ausgelöst, da die Übertragung aller Pakete des betreffenden Informations-Blocks abgeschlossen ist und der korrekte Empfang des Informations-Blocks als ganzes der Primärstation TS1 bestätigt werden muss, bevor die letztere die Übertragung des nächsten Blocks beginnt. Daher löst die Anzeige TRDA-IND nach Empfang aller Informations-Pakete D1 und L2 des Informations-Blocks BL2 über den zweiten Ausgang 81 des Funktionsblocks 68 im Funktionsblock 67 der Ebene DK der Sekundärstation TS2 einen Befehl DKDA-REQ aus zwecks Start der Übertragung eines ersten Kontroll-Pakets A, wenn der Empfang des betreffenden Informations-Blocks BL2 fehlerfrei war, oder eines zweiten Kontroll-Pakets E, wenn der Empfang des betreffenden Informations-Blocks BL2 fehlerbehaftet war. Dieser Befehl DKDA-REQ veranlasst dann die Übertragung des Kontroll-Pakets A bzw. E, indem er innerhalb der Funktionsanordnung 18f (siehe Fig. 7) in deren Funktionsblock 22 einen Befehl PHDA-REQ auslöst zur Übertragung in Rückmelderichtung in Bit-Gruppen BY0 bis BY7 des Kontroll-Pakets A bzw. E. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18f, der seinerseits über die Ebene TR den zweiten Eingang 85 des Funktionsblocks 61 erreicht. Ausserdem erscheint am zweiten Ausgang 21 der Funktionsanordnung 18f eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Sekundärstation TS2 über den Eingang 86 des Funktionsblocks 67 z. B. eine Sendewiederholung des Kontroll-Pakets A bzw. E ausgelöst. Wenn nach dem Senden eines Kontroll-Pakets A von der Sekundärstation TS2 ein Antwort-Kontroll-Rahmen RR empfangen wird als Zeichen dafür, dass von der Primärstation TS1 ein korrektes Kontroll-Paket A empfangen wurde, dann wird diese Information vom Funktionsblock 67 über dessen zweiten Ausgang 82a und den zweiten Eingang 81a des Funktionsblocks 68 dem letzteren mitgeteilt, welcher dann seinen Informationsinhalt an die Ebene AP der Sekundärstation TS2 weiterleitet.

Nach Erhalt der Bestätigung des korrekten Empfangs aller Informations-Pakete D1 und L2 des Informations-Blocks BL2 seitens der Sekundärstation TS2, d. h. nach Empfang eines Kontroll-Pakets A, löst der Funktionsblock 61 in der Primärstation TS1 über seinen zweiten Ausgang 73 den zweiten zweiten Befehl TRDA-REQ (siehe Funktionsblock 63) aus. Beim Empfang eines Kontroll-Pakets E wird dagegen in der Ebene TR der Primärstation TS1 eine Anzeige TRAB-IND ausgelöst, was in der Fig. 9 aus Gründen der zeichnerischen Klarheit nicht dargestellt ist.

Dieser zweite zweite Befehl TRDA-REQ löst in der Ebene DK der Primärstation TS1 in der angegebenen Reihenfolge zeitlich nacheinander soviele Befehle DKDA-REQ aus wie Informations-Pakete im Informations-Block BL3 enthalten sind, d. h. gemäss Annahme in der Fig. 6 einen einzigen Befehl DKDA-REQ. Dieser Befehl DKDA-REQ veranlasst im Funktionsblock 66, dass die Übertragung des Informations-Pakets L3 ausgelöst wird, welches als einziges und letztes Paket seines Informations-Blocks BL3 ein Kopfteil L besitzt. Nach Auslösung dieses Befehls geht die Ebene DK der Primärstation TS1 in Wartestellung und wartet auf eine Bestätigung eines korrekten Empfangs dieses Befehls seitens der Sekundärstation TS2. Erst nach Erhalt dieser Bestätigung löst die Ebene TR der Primärstation TS1 über deren Ebene AP den Beginn der nächsten Verfahrensstufe VS3 aus.

Der Befehl DKDA-REQ im Funktionsblock 66 veranlasst die Übertragung des Informations-Pakets L3 des Informations-Blocks BL3 von der Primärstation TS1 über das Übertragungs-Netzwerk 1 zur Sekundärstation TS2, indem er innerhalb der Funktionsanordnung 18g (siehe Fig. 7) in deren Funktionsblock 22 einen Befehl PHDA-REQ auslöst zur Übertragung in Bit-Gruppen BY0 bis BY7 des Informations-Pakets L3. Auf die anlässlich der Beschreibung der Fig. 7 angegebene Weise erscheint dadurch eine Anzeige DKDA-IND im Funktionsblock 26 (siehe Fig. 7) und diese löst über den ersten Ausgang 20 der Funktionsanordnung 18g im Funktionsblock 69 eine Anzeige TRDA-IND aus, die ihrerseits im Funktionsblock 70 eine Anzeige APDA-IND auslöst. Ausserdem erscheint am zweiten Ausgang 21 der Funktionsanordnung 18g eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Primärstation TS1 über den Eingang 89 des Funktionsblocks 66 z. B. eine Sendewiederholung des Informations-Pakets L3 ausgelöst. Beim Empfang eines Antwort-Kontroll-Rahmens RR wird dagegen über die DK- und die Ebene TR sowie den Eingang 88 des Funktionsblocks 61 der Ebene AP der Primärstation TS1 eine Bestätigung eines korrekten Empfangs des letzten Informations-Pakets L3 des letzten Informations-Blocks BL3 gegeben, so dass die Ebene AP der Primärstation TS1 die nächste Verfahrensstufe VS3 auslösen kann. Eine zusätzliche Bestätigung eines korrekten Empfangs des gesamten Informations-Blocks BL3 mittels eines Kontroll-Pakets A ist hier nicht nötig, da der Informations-Block BL3 nur aus einem einzigen Informations-Paket L3 besteht.

Das Erscheinen in der Sekundärstation TS2 des empfangenen letzten Informations-Pakets L2 bzw. L3 eines jeden Informations-Blocks BL2 bzw. BL3 hat somit in der Ebene TR der Sekundärstation TS2 jeweils eine Anzeige TRDA-IND im Funktionsblock 68 bzw. 69 ausgelöst. Das Erscheinen in der Sekundärstation TS2 des empfangenen letzten Informations-Pakets L3 des letzten Informations-Blocks BL3 der Informationen INFO hat ausserdem in der Ebene AP der Sekundärstation TS2 eine Anzeige APDA-IND im Funktionsblock 70 ausgelöst zwecks Anzeige des Endes der Übertragung aller zu übertragenden Informationen INFO.

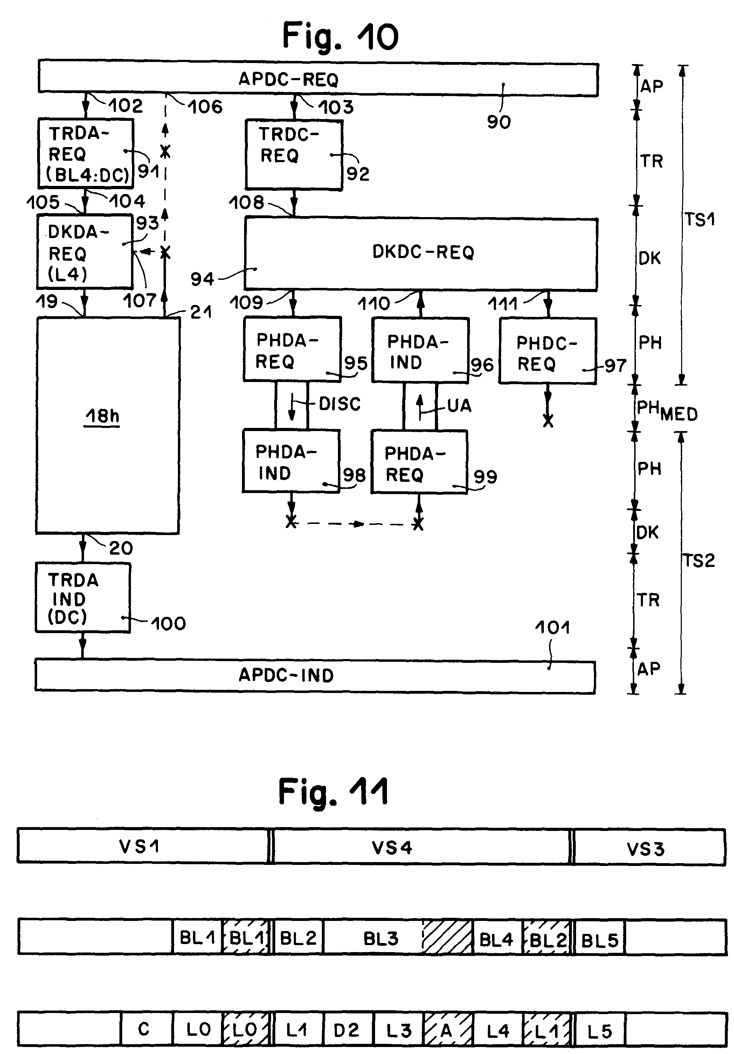

Im in der Fig. 10 dargestellten Signalfluss-Diagramm der letzten Verfahrensstufe VS3 sind vorhanden:
- Ein Funktionsblock 90 in der Ebene AP der Primärstation TS1,
- zwei Funktionsblöcke 91 und 92 in der Ebene TR der Primärstation TS1,
- zwei Funktionsblöcke 93 und 94 in der Ebene DK der Primärstation TS1,
- drei Funktionsblöcke 95, 96 und 97 in der Ebene PH der Primärstation TS1,
- zwei Funktionsblöcke 98 und 99 in der Ebene PH der Sekundärstation TS2,
- ein Funktionsblock 100 in der Ebene TR der Sekundärstation TS2,
- ein Funktionsblock 101 in der Ebene AP der Sekundärstation TS2 und
- eine Funktionsanordnung 18h.

Ein erster Ausgang 102 des Funktionsblocks 90 ist auf den Eingang des Funktionsblocks 91 und ein zweiter Ausgang 103 auf den Eingang des Funktionsblocks 92 geführt. Der Ausgang 104 des Funktionsblocks 91 ist mit einem ersten Eingang 105 des Funktionsblocks 93 verbunden, dessen Ausgang auf den Eingang 19 der Funktionsanordnung 18h geführt ist, deren erster Ausgang 20 seinerseits über den Funktionsblock 100 mit dem Eingang des Funktionsblocks 101 verbunden ist. Der zweite Ausgang 21 der Funktionsanordnung 18h ist einerseits über die DK- und die TR-Ebene der Primärstation TS1 auf den Eingang 106 des Funktionsblocks 90 und andererseits in der Ebene DK der Primärstation TS1 auf einen zweiten Eingang 107 des Funktionsblocks 93 geführt. Der Ausgang des Funktionsblocks 92 ist mit einem ersten Eingang 108 des Funktionsblocks 94 verbunden, dessen erster Ausgang 109 auf den Eingang des Funktionsblocks 95 geführt ist. Der Ausgang des letzteren ist über das physische Medium PH_{MED} mit dem Eingang des Funktionsblocks 98 verbunden, dessen Ausgang seinerseits mit der Ebene DK der Sekundärstation TS2 verbunden ist. Die letztere Ebene ist ausserdem mit dem Eingang des Funktionsblocks 99 verbunden. Der Ausgang des letzteren ist über das physische Medium PH_{MED} auf den Eingang des Funktionsblocks 96 geführt, dessen Ausgang seinerseits mit einem zweiten Eingang 110 des Funktionsblocks 94 verbunden ist. Ein zweiter Ausgang 111 des letzteren ist über den Funktionsblock 97 auf das physische Medium PH_{MED} geführt.

Die Verfahrensstufe VS3 enthält folgende Verfahrensschritte:

Nachdem in der zweiten Verfahrensstufe VS2 alle zu übertragenden Informationen INFO zwischen den beiden Stationen TS1 und TS2 übertragen worden sind, wird in der letzten Verfahrensstufe VS3 die zwischen den beiden Stationen TS1 und TS2 vorhandene Übertragungsverbindung wieder aufgelöst. Zu diesem Zweck löst z. B. der Benutzer der Primärstation TS1 in einem ersten Verfahrensschritt der letzten Verfahrensstufe VS3 im Funktionsblock 90 der Ebene AP der Primärstation TS1 einen Befehl APDC-REQ aus, der jeweils in der Ebene TR der Primärstation TS1 einen zweiten Befehl TRDA-REQ im Funktionsblock 91 und nach dessen Ausführung einen dritten Befehl TRDC-REQ im Funktionsblock 92 auslöst.
- Der zweite Befehl TRDA-REQ veranlasst zwecks Annullierung der Initiierung der Sekundärstation TS2 die Übertragung eines letzten Kontroll-Blocks DC. Nach Auslösung dieses Befehls geht die Ebene TR der Primärstation TS1 in Wartestellung und wartet auf eine Bestätigung seitens der Sekundärstation TS2 einer korrekten Ausführung des Befehls. Erst nach Empfang dieser Bestätigung löst die Ebene AP der Primärstation TS1 den dritten Befehl TRDC-REQ im Funktionsblock 92 der Ebene TR der Primärstation TS1 aus. Der letzte Kontroll-Block DC ist der in der Fig. 6 dargestellte Block BL4 und besteht nur aus einem einzigen Paket L4.
- Der dritte Befehl TRDC-REQ veranlasst dann die Auflösung aller vorhandenen Übertragungsverbindungen.

Der zweite Befehl TRDA-REQ (siehe Funktionsblock 91) löst seinerseits im Funktionsblock 93 der Ebene DK der Primärstation TS1 einen vierten Befehl DKDA-REQ aus zwecks Übertragung des einzigen im letzten Block BL4 enthaltenen Pakets L4, welches den Kontroll-Block DC enthält. Nach Auslösung dieses Befehls geht die Ebene DK der Primärstation TS1 in Wartestellung und wartet auf eine Bestätigung eines korrekten Empfangs dieses Befehls seitens der Sekundärstation TS2. Erst nach Erhalt dieser Bestätigung gibt die Ebene TR die Ebene AP der Primärstation TS1 frei zwecks Auslösung im Funktionsblock 92 des dritten Befehls TRDC-REQ.

Der vierte Befehl DKDA-REQ (siehe Funktionsblock 93) veranlasst seinerseits die Übertragung des Pakets L4, indem er innerhalb der Funktionsanordnung 18h (siehe Fig. 7) in deren Funktionsblock 22 einen Befehl PHDA-REQ auslöst zur Übertragung in Bit-Gruppen BY0 bis BY7 des Pakets L4. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18h. Diese Anzeige DKDA-IND bzw. der Empfang des letzten Kontroll-Blocks DC in der Sekundärstation TS2 veranlasst, dass die Initiierung der letzteren annulliert und in der Ebene TR sowie in der Ebene AP der Sekundärstation TS2 je eine Anzeige TRDA-IND im Funktionsblock 100 bzw. APDC-IND im Funktionsblock 101 ausgelöst wird. Ausserdem erscheint am zweiten Ausgang 21 der Funktionsanordnung 18h eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Primärstation TS1 über den Eingang 107 des Funktionsblocks 93 z. B. eine Sendewiederholung des Pakets L4 ausgelöst. Beim Empfang eines Antwort-Kontroll-Rahmens RR wird dagegen der Ebene TR der Primärstation TS1 eine Bestätigung einer korrekten Ausführung des vierten Befehls DKDA-REQ gegeben, so dass die Ebene TR der Primärstation TS1 im Funktionsblock 90 deren Ebene AP freigeben kann zwecks Auslösung des dritten Befehls TRDC-REQ (siehe Funktionsblock 92) in der Ebene TR der Primärstation TS1.

Der dritte Befehl TRDC-REQ löst seinerseits im Funktionsblock 94 der Ebene DK der Primärstation TS1 einen fünften Befehl DKDC-REQ aus, welcher seinerseits veranlasst, dass in der angegebenen Reihenfolge zeitlich nacheinander ein Befehl PHDA-REQ im Funktionsblock 95 und ein Befehl PHDC-REQ im Funktionsblock 97 jeweils der Ebene PH der Primärstation TS1 ausgelöst wird. Der Befehl PHDA-REQ dient dabei zur Auflösung der vorhandenen Logik-Verbindungen in der Ebene DK der Sekundärstation TS2. Nach Auslösung dieses Befehls geht die Ebene DK der Primärstation TS1 in Wartestellung und wartet auf eine Bestätigung eines korrekten Empfangs dieses Befehls seitens der Sekundärstation TS2. Erst nach Erhalt dieser Bestätigung löst die Ebene DK der Primärstation TS1 den Befehl PHDC-REQ in der Ebene PH der Primärstation TS1 aus.

Der Befehl PHDA-REQ (siehe Funktionsblock 95) der Ebene PH der Primärstation TS1 löst die Übertragung eines letzten Befehls-Kontroll-Rahmens DISC aus, welcher in Bit-Gruppen BY0 bis BY7 von der Primärstation TS1 über das Übertragungs-Netzwerk 1 zur Sekundärstation TS2 übertragen wird, wo sein Empfang im Funktionsblock 98 eine Anzeige PHDA-IND auslöst, welche ihrerseits veranlasst, dass in der Ebene DK der Sekundärstation TS2 einerseits die dort vorhandenen Logik-Verbindungen aufgelöst werden, was der Primärstation TS1 anschliessend mittels eines letzten Antwort-Kontroll-Rahmens UA mitgeteilt wird, welcher von der Sekundärstation TS2 über das Übertragungs-Netzwerk 1 zur Primärstation TS1 übertragen wird. Zu diesem Zweck löst die Ebene DK der Sekundärstation TS2 im Funktionsblock 99 der Ebene PH der Sekundärstation TS2 einen Befehl PHDA-REQ aus zum Start der Übertragung des letzten Antwort-Kontroll-Rahmens UA. Der letztere wird in Rückmelderichtung in Bit-Gruppen BY0 bis BY7 über das Übertragungsmedium PH_{MED} zur Primärstation TS1 übertragen und sein Empfang löst dann dort im Funktionsblock 96 der Ebene PH eine Anzeige PHDA-IND aus, deren Informationsinhalt anschliessend an den Funktionsblock 94 der Ebene DK der Primärstation TS1 weitergeleitet wird. Der fünfte Befehl DKDC-REQ veranlasst dann nach Empfang des letzten Antwort-Kontroll-Rahmens UA in der Primärstation TS1, dass im Funktionsblock 97 der PH-Ebene der Primärstation TS1 der Befehl PHDC-REQ ausgelöst wird, welcher seinerseits veranlasst, dass die zwischen den beiden Stationen TS1 und TS2 vorhandenen physischen Verbindungen aufgelöst werden. Damit kehrt die Übertragungs-Einrichtung wieder zu ihrem ursprünglichen Zustand zurück und steht für weitere Übertragungen wieder zur Verfügung.

In der Fig. 9 galt die Annahme, dass Informationen INFO zu übertragen waren. Statt dessen kann auch ein Dateiinhalt von der Primärstation TS1 zur Sekundärstation TS2 übertragen werden. In diesem Fall wird als zweite Verfahrensstufe eine Verfahrensstufe VS4 anstelle der bereits beschriebenen Verfahrensstufe VS2 verwendet (siehe Fig. 11).

Nachfolgend gelten die in der Fig. 11 dargestellten Annahmen, nämlich dass in der Verfahrensstufe VS4 drei Datei-Blöcke BL2, BL3 und BL4 in der Primärstation TS1 vorhanden sind, wobei der Datei-Block BL2 aus einem einzigen Datei-Paket L1, der Datei-Block BL3 aus zwei Datei-Paketen D2 und L3 sowie der Datei-Block BL4 aus einem einzigen Datei-Paket L4 besteht, die in der angegebenen Reihenfolge zeitlich nacheinander zu übertragen sind. Der Datei-Block BL2 enthält dabei den Namen FNA ("File Name") der zu übertragenden Datei und die Datei-Blöcke BL3 und BL4 den Inhalt dieser Datei. Dem Dateinamen FNA ist ein besonderes Kennzeichen bzw. Kopfteil FH zugeordnet, welches zusammen mit dem Dateinamen FNA das einzige Datei-Paket L1 des Datei-Blocks BL2 bildet. Der letzte Datei-Block BL4 der Datei ist mit einem besonderen Kennzeichen bzw. Kopfteil FL versehen, welches unterschiedlich ist vom betreffenden besonderen Kennzeichen bzw. Kopfteil DL des letzten Blocks der nicht in einer Datei enthaltenen zu übertragenden Informationen.

Die Funktionsblöcke 62 bis 69 und die Funktionsanordnungen 18d bis 18g bilden zusammen mit ihren sämtlichen in der Fig. 9 dargestellten Verbindungen eine Funktionsanordnung 112 (siehe Fig. 9).

Im in der Fig. 12 dargestellten Signalfluss-Diagramm der Verfahrensstufe VS4 sind vorhanden:
- Ein Funktionsblock 113 in der Ebene AP der Primärstation TS1,
- zwei Funktionsblöcke 114 und 115 in der Ebene TR der Primärstation TS1,
- ein Funktionsblock 116 in der Ebene DK der Primärstation TS1,
- ein Funktionsblock 117 in der Ebene DK der Sekundärstation TS2,
- zwei Funktionsblöcke 118 und 119 in der Ebene TR der Sekundärstation TS2,
- ein Funktionsblock 120 in der Ebene AP der Sekundärstation TS2 und
- drei Funktionsanordnungen 112, 18j und 18k, wobei die Funktionsanordnung 112 diesmal Datei-Blöcke behandelt, die mit Kopfteilen FB und FL versehen sind, statt Informations-Blöcke, welche mit Kopfteilen DB und DL versehen sind.

Der Funktionsblock 113 ähnelt dem Funktionsblock 61 (siehe Fig. 9) mit dem Unterschied, dass neben den drei Eingängen 83, 85 und 88 sowie den beiden Ausgängen 71 und 73 noch ein vierter Eingang 121 sowie ein dritter Ausgang 122 vorhanden sind. Die Eingänge 83, 85 und 88 sowie die Ausgänge 71 und 73 sind mit der Funktionsanordnung 112 genauso verbunden wie dies anlässlich der Beschreibung des in der Fig. 9 dargestellten Flussdiagramms angegeben wurde.

Der dritte Ausgang 122 des Funktionsblocks 113 ist auf den Eingang des Funktionsblocks 114 geführt. Der Ausgang des letzteren ist mit einem ersten Eingang 123 des Funktionsblocks 116 verbunden, dessen Ausgang auf den Eingang 19 der Funktionsanordnung 18j geführt ist, deren erster Ausgang 20 seinerseits über den Funktionsblock 118 mit der Ebene AP der Sekundärstation TS2 verbunden ist. Der zweite Ausgang 21 der Funktionsanordnung 18j ist einerseits über die DK- und die TR-Ebene der Primärstation TS1 auf den vierten Eingang 121 des Funktionsblocks 113 und andererseits in der Ebene DK der Primärstation TS1 auf einen zweiten Eingang 124 des Funktionsblocks 116 geführt. Derjenige Ausgang der Funktionsanordnung 112, der in der Fig. 9 mit dem Eingang des Funktionsblocks 70 verbunden ist, ist in der Fig. 12 auf den Eingang des Funktionsblocks 120 geführt. Der Ausgang des letzteren ist über den Funktionsblock 119 mit einem ersten Eingang 125 des Funktionsblocks 117 verbunden. Der Ausgang des letzteren ist auf den Eingang 19 der Funktionsanordnung 18k geführt, deren erster Ausgang 20 seinerseits über den Funktionsblock 115 mit der Ebene AP der Primärstation TS1 verbunden ist. Der zweite Ausgang 21 der Funktionsanordnung 18k ist in der Ebene DK der Sekundärstation TS2 auf einen zweiten Eingang 126 des Funktionsblocks 117 geführt.

Die Verfahrensstufe VS4 enthält folgende Verfahrensschritte: Nachdem in der ersten Verfahrensstufe VS1 die Übertragungsverbindung zwischen den beiden Stationen TS1 und TS2 hergestellt worden ist, löst in der Verfahrensstufe VS4 eine erste zu übertragende Information im Funktionsblock 113 der Ebene AP der Primärstation TS1 einen ersten Befehl APSENFI-REQ aus zur zeitlich aufeinanderfolgenden Übertragung zuerst des Dateinamens FNA im Datei-Block BL2, dann des Dateiinhalts in den Datei-Blöcken BL3 und BL4.

Der erste Befehl APSENFI-REQ löst vor der Auslösung der zweiten Befehle TRDA-REQ (siehe 62 und 63) im Funktionsblock 114 der Ebene TR der Primärstation TS1 einen vorangehenden Befehl TRDA-REQ aus. Der letztere veranlasst die Übertragung des Datei-Blocks BL2, welcher FH als Kopfteil und den Dateinamen FNA als Inhalt besitzt. Nach Auslösung dieses Befehls geht die Ebene TR der Primärstation TS1 in Wartestellung und wartet auf eine Bestätigung seitens der Sekundärstation TS2 einer korrekten Ausführung des Befehls. Erst nach Empfang dieser Bestätigung löst die Ebene AP der Primärstation TS1 den nächsten Befehl in der Funktionsanordnung 112 aus.

Der vorangehende Befehl TRDA-REQ (siehe Funktionsblock 114) löst seinerseits im Funktionsblock 116 der Ebene DK der Primärstation TS1 einen ersten zusätzlichen Befehl DKDA-REQ aus zwecks Übertragung des Namens FNA der zu übertragenden Datei im einzigen Datei-Paket L1, welches im Datei-Block BL2 enthalten ist. Nach Auslösung dieses Befehls geht die Ebene TR der Primärstation TS1 in Wartestellung und wartet auf eine Bestätigung eines korrekten Empfangs dieses Befehls seitens der Sekundärstation TS2. Erst nach Erhalt dieser Bestätigung gibt die Ebene TR die Ebene AP der Primärstation TS1 frei zwecks Auslösung des nächsten Befehls in der Funktionsanordnung 112.

Der erste zusätzliche Befehl DKDA-REQ (siehe Funktionsblock 116) veranlasst seinerseits, dass das Datei-Paket L1 anschliessend als erstes Datei-Paket der Verfahrensstufe VS4 von der Primärstation TS1 zur Sekundärstation TS2 übertragen wird, indem er innerhalb der Funktionsanordnung 18j (siehe Fig. 7) in deren Funktionsblock 22 einen Befehl PHDA-REQ auslöst zur Übertragung in Bit-Gruppen BY0 bis BY7 des Datei-Pakets L1. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18j. Diese Anzeige DKDA-IND bzw. der Empfang des Datei-Pakets PA1 löst im Funktionsblock 118 der TR-Ebene der Sekundärstation TS2 eine Anzeige TRDA-IND aus als Anzeige des Empfangs des übertragenen Dateinamens. Der Inhalt der Anzeige TRDA-IND wird seinerseits an die Ebene AP der Sekundärstation TS2 weitergeleitet. Ausserdem erscheint am zweiten Ausgang 21 der Funktionsanordnung 18j eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Primärstation TS1 über den Eingang 124 des Funktionsblocks 116 z. B. eine Sendewiederholung des Datei-Pakets L1 ausgelöst. Beim Empfang eines Antwort-Kontroll-Rahmens RR wird dagegen der Ebene TR der Primärstation TS1 eine Bestätigung einer korrekten Ausführung des Befehls DKDA-REQ gegeben, so dass die Ebene TR der Primärstation TS1 im Funktionsblock 113 deren Ebene AP freigeben kann zwecks Auslösung des nächsten Befehls in der Funktionsanordnung 112.

Anschliessend veranlasst die Funktionsanordnung 112, wie anlässlich der Beschreibung der Fig. 9 angegeben, dass zeitlich nacheinander die Blöcke BL3 und BL4 und damit der Inhalt der Datei übertragen wird. Das Erscheinen in der Sekundärstation TS2 des empfangenen letzten Datei-Pakets L4 des letzten Datei-Blocks BL4 (siehe Fig. 11) der in der Verfahrensstufe VS4 zu übertragenden Datei löst im Funktionsblock 120 der Ebene AP der Sekundärstation TS2 eine Anzeige APSENFI-IND aus zwecks Anzeige des Endes der Übertragung des gesamten Dateiinhaltes. Nach dem Empfang des letzten Datei-Pakets L4 des letzten Datei-Blocks BL4 der Datei in der Sekundärstation TS2 veranlasst die Anzeige APSENFI-IND eine Bestätigung des Empfangs der Datei zuhanden der Primärstation TS1, indem sie im Funktionsblock 119 der Ebene TR der Sekundärstation TS2 einen ersten zusätzlichen Befehl TRDA-REQ auslöst zwecks Start der Übertragung in Rückmelderichtung eines ersten Kontroll-Blocks FA, wenn der Empfang der Datei fehlerfrei war, oder eines zweiten Kontroll-Blocks FE, wenn der Empfang der Datei fehlerbehaftet war. Zu diesem Zweck löst der erste zusätzliche Befehl TRDA-REQ im Funktionsblock 117 der Ebene DK der Sekundärstation TS2 einen zweiten zusätzlichen Befehl DKDA-REQ aus zwecks Start der Übertragung von der Sekundärstation TS2 zur Primärstation TS1 eines einzigen im ersten bzw. zweiten Kontroll-Block FA bzw. FE enthaltenen Pakets L1.

Der zweite zusätzliche Befehl DKDA-REQ veranlasst die Übertragung des Kontroll-Blocks FA bzw. FE, indem er innerhalb der Funktionsanordnung 18k (siehe Fig. 7) in deren Funktionsblock 22 einen Befehl PHDA-REQ auslöst zur Übertragung in Rückmelderichtung in Bit-Gruppen BY0 bis BY7 des Kontroll-Blocks FA bzw. FE. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18k. Diese Anzeige DKDA-IND löst ihrerseits im Funktionsblock 115 eine Anzeige TRDA-IND aus, dass der Kontroll-Block FA bzw. FE in der Primärstation TS1 empfangen wurde. Ausserdem erscheint am zweiten Ausgang 21 der Funktionsanordnung 18k eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Sekundärstation TS2 über den Eingang 126 des Funktionsblocks 117 z. B. eine Sendewiederholung des Kontroll-Blocks FA bzw. FE ausgelöst. Der Inhalt der Anzeige TRDA-IND wird anschliessend an die Ebene AP der Primärstation TS1 weitergeleitet, so dass diese bereit ist die nächste Verfahrensstufe, z. B. VS3, auszulösen.

Die Primärstation TS1 kann die Verfahrensstufe VS4 aus eigener Initiative starten oder die zu übertragende Datei kann auch von der Sekundärstation TS2 aufgerufen werden mittels eines Dateiaufrufs APGETFI-REQ. Im letzteren Fall existiert nach der ersten Verfahrensstufe VS1 eine der Verfahrensstufe VS4 vorangehende Verfahrensstufe VS5, in der ein aus einem einzigen Paket Lx bestehender Block BLx in Rückmelderichtung von der Sekundärstation TS2 zur Primärstation TS1 übertragen wird.

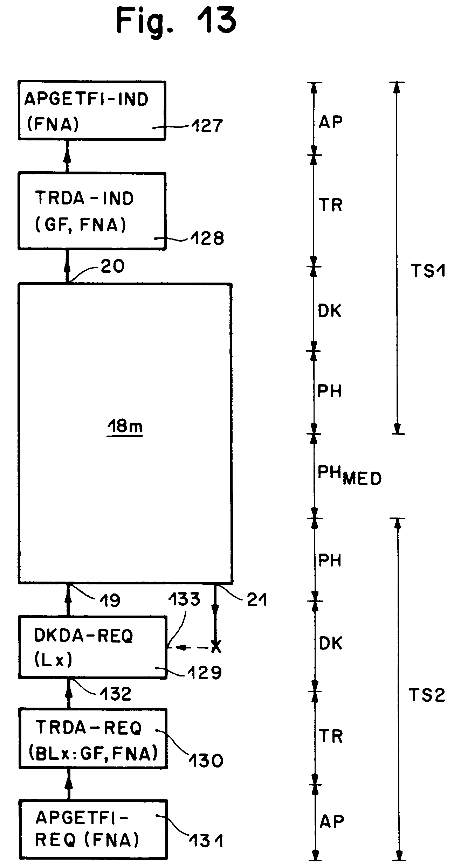

Im in der Fig. 13 dargestellten Signalfluss-Diagramm der Verfahrensstufe VS5 sind vorhanden:
- Ein Funktionsblock 127 in der Ebene AP der Primärstation TS1,
- ein Funktionsblock 128 in der Ebene TR der Primärstation TS1,
- ein Funktionsblock 129 in der Ebene DK der Sekundärstation TS2,
- ein Funktionsblock 130 in der Ebene TR der Sekundärstation TS2,
- ein Funktionsblock 131 in der Ebene AP der Sekundärstation TS2 und
- eine Funktionsanordnung 18m.

Der Ausgang des Funktionsblocks 131 ist über den Funktionsblock 130 mit einem ersten Eingang 132 des Funktionsblocks 129 verbunden, dessen Ausgang auf den Eingang 19 der Funktionsanordnung 18m geführt ist. Der erste Ausgang 20 der letzteren ist über den Funktionsblock 128 mit dem Eingang des Funktionsblocks 127 verbunden. Der zweite Ausgang 21 der Funktionsanordnung 18m ist in der Ebene DK der Sekundärstation TS2 auf einen zweiten Eingang 133 des Funktionsblocks 129 geführt.

Nachdem in der ersten Verfahrensstufe VS1 die Übertragungsverbindung zwischen den beiden Stationen TS1 und TS2 hergestellt worden ist, löst in einem ersten nachfolgenden Verfahrensschritt der Verfahrensstufe VS5 der Benutzer der Sekundärstation TS2 im Funktionsblock 131 von deren Ebene AP den Befehl APGETFI-REQ als Dateiaufruf aus.

Der Befehl APGETFI-REQ löst seinerseits im Funktionsblock 130 der Ebene TR der Sekundärstation TS2 einen Befehl TRDA-REQ aus, welcher die Übertragung in Rückmelderichtung des Blocks BLx veranlasst. Dem Namen FNA der Datei wird ein Kopfteil GF ("Get File") als besonderes Kennzeichen zugeordnet, welches zusammen mit dem Namen FNA der Datei den Block BLx bildet, der, wie bereits erwähnt, ein einziges Paket Lx enthält.

Der Befehl TRDA-REQ löst anschliessend im Funktionsblock 129 der Ebene DK der Sekundärstation TS2 einen Befehl DKDA-REQ aus, welcher veranlasst, dass das Paket Lx von der Sekundärstation (TS2) zur Primärstation (TS1) übertragen wird. Nach Auslösung dieses Befehls geht die Ebene DK der Sekundärstation TS2 in Wartestellung und wartet auf eine Bestätigung eines korrekten Empfangs dieses Befehls seitens der Primärstation TS1.

Der Befehl DKDA-REQ (siehe Funktionsblock 129) veranlasst seinerseits die Übertragung des Pakets Lx, indem er innerhalb der Funktionsanordnung 18m (siehe Fig. 7) in deren Funktionsblock 22 einen Befehl PHDA-REQ auslöst zur Übertragung in Bit-Gruppen BY0 bis BY7 des Pakets Lx. Auf die anlässlich der Beschreibung der Fig. 7 angegebene Weise erscheint dadurch der Informationsinhalt einer Anzeige DKDA-IND (siehe Funktionsblock 26) am ersten Ausgang 20 der Funktionsanordnung 18m. Diese Anzeige DKDA-IND löst ihrerseits im Funktionsblock 128 der TR-Ebene der Primärstation TS1 eine Anzeige TRDA-IND aus als Anzeige des Empfangs des übertragenen Dateinamens. Die Anzeige TRDA-IND löst ihrerseits im Funktionsblock 127 der Ebene AP der Primärstation TS1 eine Anzeige APGETFI-IND aus zur Anzeige des Endes der Übertragung des Namens FNA der aufgerufenen Datei. Der Empfang des Pakets Lx in der Primärstation TS1 löst somit dort sowohl die Anzeige TRDA-IND in der TR-Ebene als auch die Anzeige APGETFI-IND in der AP-Ebene aus. Ausserdem erscheint am zweiten Ausgang 21 der Funktionsanordnung 18m eine Empfangs-Bestätigung in Gestalt eines Antwort-Kontroll-Rahmens RR, RNR oder FRMR. Beim Empfang eines Antwort-Kontroll-Rahmens RNR wird in der Ebene DK der Sekundärstation TS2 über den Eingang 133 des Funktionsblocks 129 z. B. eine Sendewiederholung des Pakets Lx ausgelöst. Der Inhalt der Anzeige APGETFI-IND veranlasst anschliessend in der Ebene AP der Primärstation TS1, dass die Verfahrensstufe VS4 (siehe Fig. 12) gestartet wird, indem dort in der Ebene AP der Befehl APSENFI-REQ (siehe 113) einer nachfolgenden Verfahrensstufe VS4 ausgelöst wird, welcher veranlasst, dass die Datei mitsamt ihres Namens FNA von der Primärstation TS1 zur Sekundärstation TS2 übertragen wird.

In allen Fällen wird die Anzahl Sendewiederholungen mittels eines Zählers gezählt, ihr Wert mit einem vorgegebenen maximalen Wert, z. B. drei, verglichen und beim Überschreiten dieses vorgegebenen maximalen Wertes jede weitere Sendewiederholung verhindert unter gleichzeitiger Auslösung einer Meldung "Schwerwiegender Fehler" APAB-IND, TRAB-IND, DKAB-IND oder PHAB-IND in allen betroffenen Ebenen AP, TR, DK oder PH.

## Patentansprüche

1. Verfahren zum übersichtlichen Betrieb einer Übertragungs-Einrichtung zwecks Übertragung über ein Übertragungs-Netzwerk (1) von Informationen (INFO) und/oder Dateiinhalten (COFI)(COFI) zwischen zwei, je eine Computer-Anordnung (7) aufweisenden und als Sende/Empfangs-Stationen arbeitenden Teilnehmerstationen (TS1, TS2),
dadurch gekennzeichnet,
- dass in der Computer-Anordnung (7) einer jeden Teilnehmerstation (TS1, TS2) eine ranghöchste Ebene (AP), eine zweitranghöchste Ebene (TR), eine drittranghöchste Ebene (DK) und eine rangniedrigste Ebene (PH) vorhanden sind, in denen jeweils Befehle und/oder Anzeigen ausgelöst werden, wobei die Signalflussrichtung (SR_{TS1}, SR_{TS2}) der Befehle jeweils von einer ranghöheren zu einer rangniedrigeren Ebene und die Signalflussrichtung (SI_{TS1}, SI_{TS2}) der Anzeigen jeweils von einer rangniedrigeren zu einer ranghöheren Ebene verläuft,
- dass die Anwender der Übertragungs-Einrichtung und/oder die Anwendungen, in denen die Übertragungs-Einrichtung verwendet wird, Zugriff nur zu der ranghöchsten Ebene (AP) der Teilnehmerstationen (TS1, TS2) besitzen,
- dass die ranghöchste Ebene (AP) einer als Primärstation (TS1) arbeitenden Teilnehmerstation veranlasst, dass die zu übertragenden Informationen (INFO) und/oder Dateiinhalte (COFI) in Daten-Blöcke (BL2, BL3 bzw. BL2, BL3, BL4) unterteilt werden, die zeitlich nacheinander zu übertragen sind und die jeweils mindestens ein Daten-Paket enthalten,
- dass mindestens der letzte Daten-Block (BL3 bzw. BL4) der zu übertragenden Informationen (INFO) und/oder Dateiinhalte (COFI) mit einem ersten Kennzeichen (DL bzw. FL) versehen wird,
- dass die zweitranghöchste Ebene (TR) veranlasst, dass ein jeder Daten-Block (BL2 bzw. BL3), der mitsamt seinem ersten Kennzeichen (DB, DL bzw. FB, FL) länger ist als eine maximal zugelassene Länge des Daten-Pakets, mitsamt seinem ersten Kennzeichen (DB, DL bzw. FB, FL) in Daten-Pakete (D1, L2 bzw. D2, L3) unterteilt wird, die innerhalb einer dem betreffenden Daten-Block (BL2 bzw. BL3) zugeordneten Übertragungszeit zeitlich nacheinander zu übertragen sind,
- dass mindestens das letzte Daten-Paket (L2, L3 bzw. L1, L3, L4) innerhalb eines jeden Daten-Blocks (BL2, BL3 bzw. BL2, BL3, BL4) mit einem zweiten Kennzeichen (L) versehen wird, welches jeweils zusammen mit dem betreffenden Daten-Paket (L2, L3 bzw. L1, L3, L4) übertragen wird,
- dass nach Übertragung der Daten-Pakete (D1, L2, L3 bzw. L1, D2, L3, L4) die empfangenen Daten-Pakete in der Reihenfolge ihres Erscheinens in einer als Sekundärstation (TS2) arbeitenden Teilnehmerstation zu Daten-Blöcke (BL2, BL3 bzw. BL2, BL3, BL4) zusammengefügt werden und
- dass die zusammengefügten Daten-Blöcke (BL2, BL3 bzw. BL2, BL3, BL4) in der Reihenfolge ihres Erscheinens in der Sekundärstation (TS2) zu den übertragenen Informationen (INFO) beziehungsweise den übertragenen Dateiinhalten (COFI) zusammengefügt werden.

2. Verfahren nach Anspruch 1, dadurch gekennzeichnet, dass die Daten-Pakete (D1, L2, L3 bzw. L1, D2, L3, L4) in der zeitlichen Reihenfolge ihrer Übertragung mit einer fortlaufend durchnumerierten Paketnummer (1, 2, 3 bzw. 1, 2, 3, 4) versehen werden, welche jeweils zusammen mit dem betreffenden Daten-Paket übertragen wird.

3. Verfahren nach Anspruch 1 oder 2, dadurch gekennzeichnet,
- dass in der ranghöchsten Ebene (AP) der Primärstation (TS1) ein erster Befehl (APDA-REQ in 61 bzw. APSENFI-REQ in 113) ausgelöst wird, welcher veranlasst, dass die zu übertragenden Informationen (INFO) beziehungsweise Dateiinhalte (COFI) in Daten-Blöcke (BL2, BL3 bzw. BL2, BL3, BL4) unterteilt werden,
- dass der erste Befehl (APDA-REQ bzw. APSENFI-REQ) in der zweitranghöchsten Ebene (TR) der Primärstation (TS1) mindestens soviele zweite Befehle (TRDA-REQ in 62 und 63 von 112) auslöst, wie Daten-Blöcke (BL2, BL3 bzw. BL3, BL4) in den zu übertragenden Informationen (INFO) beziehungsweise Dateiinhalten (COFI) enthalten sind,
- dass ein jeder zweiter Befehl (TRDA-REQ), der zu einem Daten-Block (BL2 bzw. BL3) gehört, welcher mitsamt seinem ersten Kennzeichen (DB, DL bzw. FB, FL) länger ist als die maximal zugelassene Länge des Daten-Pakets, veranlasst, dass der betreffende Daten-Block (BL2 bzw. BL3) mitsamt seinem ersten Kennzeichen (DB, DL bzw. FB, FL) in Daten-Pakete (D1, L2 bzw. D2, L3) unterteilt wird, und
- dass ein jeder zweiter Befehl (TRDA-REQ) in der drittranghöchsten Ebene (DK) der Primärstation (TS1) mindestens soviele dritte Befehle (DKDA-REQ in 64, 65 oder 66 von 112) auslöst, wie Daten-Pakete (D1, L2 oder L3 bzw. D2, L3 oder L4) im zum betreffenden zweiten Befehl (TRDA-REQ) gehörenden Daten-Block (BL2 oder BL3 bzw. BL3 oder BL4) enthalten sind.

4. Verfahren nach einem der Ansprüche 1 bis 3, dadurch gekennzeichnet,
- dass das Erscheinen in der Sekundärstation (TS2) des empfangenen letzten Daten-Pakets (L2, L3 bzw. L3, L4) eines Daten-Blocks (BL2, BL3 bzw. BL3, BL4) in der zweitranghöchsten Ebene (TR) der Sekundärstation (TS2) jeweils eine Anzeige (TRDA-IND in 68 bzw. 69 von 112) auslöst und
- dass das Erscheinen in der Sekundärstation (TS2) des empfangenen letzten Daten-Pakets (L3 bzw. L4) des letzten Daten-Blocks (BL3 bzw. BL4) der Informationen (INFO) beziehungsweise Dateiinhalte (COFI) in der ranghöchsten Ebene (AP) der Sekundärstation (TS2) jeweils eine Anzeige (APDA-IND in 70 bzw. APSENFI-IND in 120) auslöst zwecks Anzeige des Endes der Übertragung aller zu übertragenden Informationen (INFO) beziehungsweise Dateiinhalte (COFI).

5. Verfahren nach einem der Ansprüche 1 bis 4 , dadurch gekennzeichnet, dass nach dem Empfang in der Sekundärstation (TS2) eines jeden letzten Daten-Pakets (L2 bzw. L3) eines aus mehreren Daten-Paketen (D1, L2 bzw. D2, L3) bestehenden Daten-Blocks (BL2 bzw. BL3) in der dritthöchsten Ebene (DK) der Sekundärstation (TS2) ein Befehl (DKDA-REQ in 67 von 112) ausgelöst wird zwecks Start der Übertragung eines ersten Kontroll-Pakets (A), wenn der Empfang des betreffenden Daten-Blocks (BL2 bzw. BL3) fehlerfrei war, oder eines zweiten Kontroll-Pakets (E), wenn der Empfang des betreffenden Daten-Blocks (BL2 bzw. BL3) fehlerbehaftet war.

6. Verfahren nach einem der Ansprüche 3 bis 5, dadurch gekennzeichnet,
- dass bei einem zu übertragenden Dateiinhalt (COFI), der erste Befehl (APSENFI-REQ in 113) vor der Auslösung der zweiten Befehle (TRDA-REQ in 62 und 63 von 112) in der zweitranghöchsten Ebene (TR) der Primärstation (TS1) einen vorangehenden zusätzlichen zweiten Befehl (TRDA-REQ in 114) auslöst, welcher in der drittranghöchsten Ebene (DK) der Primärstation (TS1) einen zusätzlichen dritten Befehl (DKDA-REQ in 116) auslöst zwecks Übertragung eines Namens (FNA) der zu übertragenden Datei, wobei dem Namen (FNA) der Datei ein drittes Kennzeichen (FH) zugeordnet wird, das zusammen mit dem Namen (FNA) der Datei einen Daten-Block (BL2) bildet, der ein einziges Daten-Paket (L1) enthält, welches anschliessend von der Primärstation (TS1) zur Sekundärstation (TS2) übertragen wird, wo sein Empfang in der zweitranghöchsten Ebene (TR) eine Anzeige (TRDA-IND in 118) auslöst, und
- dass der letzte Daten-Block (BL4) der Datei mit einem ersten Kennzeichen (FL) versehen wird, welches unterschiedlich ist vom ersten Kennzeichen (DL) des letzten Daten-Blocks (BL3) von nicht in einer Datei enthaltenen zu übertragenden Informationen (INFO).

7. Verfahren nach Anspruch 6, dadurch gekennzeichnet, dass nach dem Empfang in der Sekundärstation (TS2) des letzten Daten-Pakets (L4) des letzten Daten-Blocks (BL4) der Datei in der zweitranghöchsten Ebene (TR) der Sekundärstation (TS2) ein erster zusätzlicher Befehl (TRDA-REQ in 119) ausgelöst wird zwecks Start einer Übertragung eines ersten Kontroll-Blocks (FA), wenn der Empfang der Datei fehlerfrei war, oder eines zweiten Kontroll-Blocks (FE), wenn der Empfang der Datei fehlerbehaftet war, wobei der in der zweitranghöchsten Ebene (TR) ausgelöste erste zusätzliche Befehl (TRDA-REQ) in der drittranghöchsten Ebene (DK) der Sekundärstation (TS2) einen zweiten zusätzlichen Befehl (DKDA-REQ in 117) auslöst zwecks Start der Übertragung von der Sekundärstation (TS2) zur Primärstation (TS1) eines einzigen im ersten bzw. zweiten Kontroll-Block (FA bzw. FE) enthaltenen Pakets (L1).

8. Verfahren nach Anspruch 6 oder 7, dadurch gekennzeichnet,
- dass die zu übertragende Datei von der Sekundärstation (TS2) aufgerufen wird (siehe Fig. 13), indem in einer vorangehenden Verfahrensstufe (VS5) in der ranghöchsten Ebene (AP) der Sekundärstation (TS2) ein Befehl (APGETFI-REQ in 131) ausgelöst wird, der in der zweitranghöchsten Ebene (TR) der Sekundärstation (TS2) einen Befehl (TRDA-REQ in 130) auslöst, welcher seinerseits in der drittranghöchsten Ebene (DK) der Sekundärstation (TS2) einen Befehl (DKDA-REQ in 129) auslöst zum Start der Übertragung des Namens (FNA) der zu übertragenden Datei, wobei dem Namen (FNA) der Datei ein viertes Kennzeichen (GF) zugeordnet wird, das zusammen mit dem Namen (FNA) der Datei einen Daten-Block (BLx) bildet, der ein einziges Daten-Paket (Lx) enthält, welches anschliessend von der Sekundärstation (TS2) zur Primärstation (TS1) übertragen wird, wo sein Empfang sowohl in der zweitranghöchsten Ebene (TR) als auch in der ranghöchsten Ebene (AP) je eine Anzeige (TRDA-IND in 128 bzw. APGETFI-IND in 127) auslöst zur Anzeige des Endes der Übertragung des Namens (FNA) der aufgerufenen Datei, und
- dass anschliessend in der ranghöchsten Ebene (AP) der Primärstation (TS1) der erste Befehl (APSENFI-REQ in 113: Fig. 12) einer nachfolgenden Verfahrensstufe (VS4) ausgelöst wird, welcher veranlasst, dass die Datei mitsamt ihres Namens (FNA) von der Primärstation (TS1) zur Sekundärstation (TS2) übertragen wird.

9. Verfahren nach einem der Ansprüche 1 bis 8, dadurch gekennzeichnet, dass das Übertragungs-Netzwerk (1) ein schaltbares Netzwerk (z. B. ein Telefonnetz) ist und dass vor der Übertragung der Informationen (INFO) und/oder Dateiinhalte (COFI) in einer ersten Verfahrensstufe (VS1) eine Übertragungsverbindung zwischen den beiden Teilnehmerstationen (TS1, TS2) hergestellt wird.

10. Verfahren nach Anspruch 9, dadurch gekennzeichnet,
- dass jeweils in der ersten Verfahrensstufe (VS1) (siehe Fig. 8) in der ranghöchsten Ebene (AP) der Primärstation (TS1) ein erster Befehl (APCO-REQ in 30) ausgelöst wird, der jeweils in der zweitranghöchsten Ebene (TR) der Primärstation (TS1) einen zweiten Befehl (TRCO-REQ in 31) und nach dessen Ausführung einen dritten Befehl (TRDA-REQ in 32) auslöst,
- dass der zweite Befehl (TRCO-REQ) jeweils in der drittranghöchsten Ebene (DK) der Primärstation (TS1) einen vierten Befehl (DKCO-REQ in 34) und nach dessen Ausführung einen fünften Befehl (DKDA-REQ in 35) auslöst,
- dass der vierte Befehl (DKCO-REQ) veranlasst, dass einerseits physische Verbindungen zwischen der Primärstation (TS1) und einer mit einer Adresse (ADR) versehenen und als Sekundärstation (TS2) arbeitenden Teilnehmerstation hergestellt werden und dass danach andererseits ein Kontroll-Befehlsrahmen (SABM) von der Primärstation (TS1) zur Sekundärstation (TS2) übertragen wird zwecks dortiger Herstellung von Logik-Verbindungen,
- dass die Ausführung des vierten Befehls (DKCO-REQ) der Primärstation (TS1) mitgeteilt wird, indem ein Kontroll-Antwortrahmen (UA, DM oder FRMR) von der Sekundärstation (TS2) über das Übertragungs-Netzwerk (1) zur Primärstation (TS1) übertragen wird, der ein erster Antwort-Kontroll-Rahmen (UA) ist, wenn der Empfang des Befehls-Kontroll-Rahmens (SABM) fehlerfrei war, ein zweiter Antwort-Kontroll-Rahmen (DM) ist, wenn der Empfang des Befehls-Kontroll-Rahmens (SABM) fehlerhaft war, und ein dritter Antwort-Kontroll-Rahmen (FRMR) ist, wenn der Empfang des Befehls-Kontroll-Rahmens (SABM) schwerwiegend fehlerhaft war,
- dass nach Empfang des ersten Antwort-Kontroll-Rahmens (UA) der fünfte Befehl (DKDA-REQ in 35) veranlasst, dass ein Kontroll-Paket (C) von der Primärstation (TS1) über das Übertragungs-Netzwerk (1) zur Sekundärstation (TS2) übertragen wird zwecks Initiierung der letzteren,
- dass nach Ausführung des fünften Befehls (DKDA-REQ) der dritte Befehl (TRDA-REQ in 32) in der drittranghöchsten Ebene (DK) der Primärstation (TS1) einen sechsten Befehl (DKDA-REQ in 36) auslöst zwecks Start der Übertragung von der Primärstation (TS1) zur Sekundärstation (TS2) eines einzigen Daten-Pakets (L0) eines dritten Kontroll-Blocks (CO), der als Informationsinhalt mindestens einen Identifizierer (INI) der Primärstation (TS1) enthält, und
- dass der Empfang in der Sekundärstation (TS2) des dritten Kontroll-Blocks (CO) dort sowohl in der zweitranghöchsten Ebene (TR) als auch in der ranghöchsten Ebene (AP) je eine Anzeige (TRDA-IND in 43 bzw. APCO-IND in 45) auslöst.

11. Verfahren nach Anspruch 10, dadurch gekennzeichnet, dass der dritte Kontroll-Block (CO) als Informationsinhalt einen von der Primärstation (TS1) gewünschten maximalen Wert (L_{TS1}) der Blocklänge enthält.

12. Verfahren nach einem der Ansprüche 1 bis 10, dadurch gekennzeichnet, dass zu Beginn, vor der Übertragung der Informationen (INFO) beziehungsweise der Dateiinhalte (COFI), in einer ersten Verfahrensstufe (VS1) ein von der Primärstation (TS1) gewünschter maximaler Wert (L_{TS1}) der Blocklänge von der Primärstation (TS1) zur Sekundärstation (TS2) übertragen wird.

13. Verfahren nach Anspruch 11 oder 12, dadurch gekennzeichnet,
- dass der in der Sekundärstation (TS2) empfangene, von der Primärstation (TS1) gewünschte maximale Wert (L_{TS1}) der Blocklänge dort mit einem von der Sekundärstation (TS2) gewünschten maximalen Wert (L_{TS2}) der Bocklänge verglichen wird,
- dass die Sekundärstation (TS2) anschliessend der Primärstation (TS1) den niedrigsten der beiden gewünschten Werte (L_{TS1}, L_{TS2}) mitteilt und
- dass die beiden Teilnehmerstationen (TS1, TS2) bei der nachfolgenden Übertragung der Informationen (INFO) beziehungsweise der Dateiinhalte (COFI) den niedrigsten der beiden gewünschten Werte (L_{TS1}, L_{TS2}) als Wert (L_{TS}) der Blocklänge verwenden.

14. Verfahren nach Anspruch 13, dadurch gekennzeichnet, dass die Sekundärstation (TS2) der Primärstation (TS1) den niedrigsten der beiden gewünschten Werte (L_{TS1}, L_{TS2}) der Blocklänge mittels eines weiteren Kontroll-Blocks (CC) mitteilt.

15. Verfahren nach Anspruch 14, dadurch gekennzeichnet, dass der Empfang des von der Primärstation (TS1) gewünschten maximalen Wertes (L_{TS1}) der Blocklänge in der ranghöchsten Ebene (AP) der Sekundärstation (TS2) eine Anzeige (APCO-IND in 45) auslöst, die in der zweitranghöchsten Ebene (TR) der Sekundärstation (TS2) einen Befehl (TRDA-REQ in 44) auslöst, welcher veranlasst, dass der weitere Kontroll-Block (CC) übertragen wird, indem er in der drittranghöchsten Ebene (DK) der Sekundärstation (TS2) einen Befehl (DKDA-REQ in 42) auslöst, der veranlasst, dass ein einziges im weiteren Kontroll-Block (CC) enthaltenes Daten-Paket (L0) von der Sekundärstation (TS2) über das Übertragungs-Netzwerk (1) zur Primärstation (TS1) übertragen wird, wo der Empfang des weiteren Kontroll-Blocks (CC) in der zweitranghöchsten Ebene (TR) eine Anzeige (TRDA-IND in 33) auslöst als Zeichen, dass die erste Verfahrenstufe (VS1) beendet ist.

16. Verfahren nach einem der Ansprüche 9 bis 15, dadurch gekennzeichnet,
- dass nach Übertragung aller zur übertragenden Informationen (INFO) und/oder Dateiinhalte (COFI), jeweils in einer letzten Verfahrensstufe (VS3) (siehe Fig. 10), in der ranghöchsten Ebene (AP) der Primärstation (TS1) ein erster Befehl (APDC-REQ in 90) ausgelöst wird, der jeweils in der zweitranghöchsten Ebene (TR) der Primärstation (TS1) einen zweiten Befehl (TRDA-REQ in 91) zwecks Übertragung eines letzten Kontroll-Blocks (DC) und nach der Ausführung des zweiten Befehls (TRDA-REQ) einen dritten Befehl (TRDC-REQ in 92) auslöst,
- dass der zweite Befehl (TRDA-REQ) in der drittranghöchsten Ebene (DK) der Primärstation (TS1) einen vierten Befehl (DKDA-REQ in 93) auslöst zwecks Übertragung von der Primärstation (TS1) zur Sekundärstation (TS2) eines einzigen im letzten Kontroll-Block (DC) enthaltenen Daten-Pakets (L4), wobei der Empfang des letzten Kontroll-Blocks (DC) in der Sekundärstation (TS2) veranlasst, dass die Initiierung der letzteren annulliert und in der zweitranghöchsten Ebene (TR) sowie in der ranghöchsten Ebene (AP) der Sekundärstation (TS2) je eine Anzeige (TRDA-IND in 100 bzw. APDC-IND in 101) ausgelöst wird,
- dass nach Ausführung des vierten Befehls (DKDA-REQ) der dritte Befehl (TRDC-REQ in 92) in der drittranghöchsten Ebene (DK) der Primärstation (TS1) einen fünften Befehl (DKDC-REQ in 94) auslöst zur Übertragung eines letzten Befehls-Kontroll-Rahmens (DISC) von der Primärstation (TS1) über das Übertragungs-Netzwerk (1) zur Sekundärstation (TS2),
- dass der dortige Empfang des letzten Befehls-Kontroll-Rahmens (DISC) in der drittranghöchsten Ebene (DK) der Sekundärstation (TS2) die Auflösung von dort vorhandenen Logik-Verbindungen veranlasst, was der Primärstation (TS1) mitgeteilt wird mittels eines letzten Antwort-Kontroll-Rahmens (UA), der von der Sekundärstation (TS2) über das Übertragungs-Netzwerk (1) zur Primärstation (TS1) übertragen wird, und
- dass nach dortigem Empfang des letzten Antwort-Kontroll-Rahmens (UA) der fünfte Befehl (DKDC-REQ) veranlasst, dass zwischen den beiden Teilnehmerstationen (TS1, TS2) vorhandenen physischen Verbindungen aufgelöst werden.

17. Verfahren nach einem der Ansprüche 2 bis 16, dadurch gekennzeichnet,
- dass zu übertragenden Pakete (L0 bis L5, D1, D2, Lx, C, A, E, L0 von CC, L1 von FA, L1 von FE) mitsamt, falls vorhanden, ihrer Paketnummer (0 bis 5) und ihrem zweiten Kennzeichen (D, L) sowie zu übertragenden Befehls-Kontroll-Rahmen (SABM, DISC) vor ihrer Übertragung in der drittranghöchsten Ebene (DK) einer als Sendestation (TS1 bzw. TS2) arbeitenden Teilnehmerstation mit einem fehlerentdeckenden Code versehen werden zwecks Erzeugung je eines codierten Rahmens (13;14;15;16;FCS;17),
- dass nach dem Empfang des letzteren in einer als Empfangs-Station (TS2 bzw. TS1) arbeitenden Teilnehmerstation dort in der drittranghöchsten Ebene (DK) der empfangene codierte Rahmen (13;14;15;16;FCS;17) decodiert sowie mit Hilfe des fehlerentdeckenden Codes auf vorhandene Fehler kontrolliert wird und
- dass dann in der drittranghöchsten Ebene (DK) der Empfangs-Station (TS2 bzw. TS1) eine Anzeige (DKDA-IND in 26 von 18a bis 18m) ausgelöst wird.

18. Verfahren nach Anspruch 17, dadurch gekennzeichnet, dass der codierte Rahmen (13;14;15;16;FCS;17) gemäss HDLC-Norm codiert ist.

19. Verfahren nach Anspruch 17 oder 18, dadurch gekennzeichnet,
- dass die Übertragung eines jeden codierten Rahmens (13;14;15;16;FCS;17) erfolgt (siehe Fig. 7), indem in der rangniedrigsten Ebene (PH) der Sendestation (TS1 bzw. TS2) ein Befehl (PHDA-REQ in 22 von 18a bis 18m) ausgelöst wird zwecks Unterteilung des codierten Rahmens (13;14;15;16;FCS;17) in Bit-Gruppen (BY0 bis BY7), die innerhalb einer dem codierten Rahmen (13;14;15;16;FCS;17) zugeordneten Übertragungszeit zeitlich nacheinander von der Sendestation (TS1 bzw TS2) über das Übertragungs-Netzwerk (1) zu der Empfangsstation (TS2 bzw. TS1) übertragen werden, und
- dass die in der Empfangsstation (TS2 bzw. TS1) empfangenen Bit-Gruppen (BY0 bis BY7) dort in der Reihenfolge ihres Empfangs zu einem codierten Empfangs-Rahmen (13;14;15;16;FCS;17) zusammengefügt werden sowie dann in der rangniedrigsten Ebene (PH) der Empfangsstation (TS2 bzw. TS1) eine Anzeige (PHDA-IND in 24 von 18a bis 18m) auslösen.

20. Verfahren nach Anspruch 19, dadurch gekennzeichnet, dass als Bit-Gruppe (BY0 bis BY7) ein Byte gewählt wird, welches von einem Stopp-Bit (ST) gefolgt wird.

21. Verfahren nach einem der Ansprüche 17 bis 20, dadurch gekennzeichnet, dass nach der Kontrolle auf vorhandene Fehler jeweils in der rangniedrigsten Ebene (PH) der Empfangsstation (TS2 bzw. TS1) ein Befehl (PHDA-REQ in 25 von 18a bis 18m) ausgelöst wird zwecks Übertragung über das Übertragungs-Netzwerk (1) eines als Empfangs-Bestätigung dienenden Antwort-Kontroll-Rahmens (RR, RNR oder FRMR), dessen Empfang dann in der rangniedrigsten Ebene (PH) eine Anzeige (PHDA-IND in 23 von 18a bis 18m) auslöst, worauf der Informationsinhalt des zuletzt von der Sendestation (TS1 bzw. TS2) zur Empfangsstation (TS2 bzw. TS1) übertragene Pakets als korrekt empfangen gilt, wenn der Anwort-Kontroll-Rahmen (RR, RNR, FRMR) ein vierter Antwort-Kontroll-Rahmen (RR) ist, als fehlerhaft empfangen gilt, wenn der Antwort-Kontroll-Rahmen (RR, RNR, FRMR) ein fünfter Antwort-Kontroll-Rahmen (RNR) ist, und als schwerwiegend fehlerhaft empfangen gilt, wenn der Kontroll-Antwortrahmen (RR, RNR, FRMR) ein sechster Kontroll-Antwort-Rahmen (FRMR) ist.

22. Verfahren nach Anspruch 10 oder 21, dadurch gekennzeichnet, dass nach dem Senden eines Pakets durch eine Teilnehmerstation (TS1 bzw. TS2) ein anschliessender Empfang in der gleichen Teilnehmerstation (TS1 bzw. TS2) des fünften Antwort-Kontroll-Rahmens (RNR) eine Sendewiederholung des betreffenden Pakets veranlasst.

23. Verfahren nach einem der Ansprüche 1 bis 22, dadurch gekennzeichnet, dass, wenn Sendewiederholungen erfolgen, deren Anzahl gezählt und mit einem vorgegebenen maximalen Wert (z. B. drei) verglichen wird, und dass beim Überschreiten dieses vorgegebenen maximalen Wertes jede weitere Sendewiederholung verhindert wird unter gleichzeitiger Auslösung einer Meldung "Schwerwiegender Fehler" (APAB-IND, TRAB-IND, DKAB-IND oder PHAB-IND) in allen betroffenen Ebenen (AP, DK, TR oder PH).

## Claims

1. A process for the easily followed operation of a transmission apparatus for the purposes of transmission by way of a transmission network (1) of items of information (INFO) and/or file contents (COFI) between two subscriber stations (TS1, TS2) which each have a respective computer arrangement (7) and which operate as transmitting/receiving stations,
characterised in that
- provided in the computer arrangement (7) of each subscriber station (TS1, TS2) is a highest-rank plane (AP), a second highest-rank plane (TR), a third highest-rank plane (DK) and a lowest-rank plane (PH) in which commands and/or displays are respectively triggered, wherein the signal flow direction (SR_{TS1}, SR_{TS2}) of the commands respectively goes from a higher-rank to a lower-rank plane and the signal flow direction (SI_{TS1}, SI_{TS2}) of the displays respectively goes from a lower-rank to a higher-rank plane,
- the users of the transmission apparatus and/or the uses in which the transmission apparatus is used have access only to the highest-rank plane (AP) of the subscriber stations (TS1, TS2),
- the highest-rank plane (AP) of a subscriber station operating as a primary station (TS1) causes the items of information (INFO) and/or file contents (COFI) which are to be transmitted to be subdivided into data blocks (BL2, BL3 and BL2, BL3, BL4 respectively) which are to be transmitted in succession in respect of time and which each include at least one respective data packet,
- at least the last data block (BL3 and BL4 respectively) of the items of information (INFO) and/or file contents (COFI) which are to be transmitted are provided with a first identification (DL and FL respectively),
- the second highest-rank plane (TR) causes each data block (BL2 and BL3 respectively) which together with its first identification (DB, DL and FB, FL respectively) is longer than a maximum permitted length of the data packet, together with its first identification (DB, DL and FB, FL respectively), to be subdivided into data packets (D1, L2 and D2, L3 respectively) which are to be transmitted in succession in respect of time within a transmission time associated with the data block (BL2 and BL3 respectively) in question,
- at least the last data packet (L2, L3 and L1, L3, L4 respectively) within each data block (BL2, BL3 and BL2, BL3, BL4 respectively) is provided with a second identification (L) which is respectively transmitted together with the data packet (L2, L3 and L1, L3, L4 respectively) in question,
- after transmission of the data packets (D1, L2, L3 and L1, D2, L3, L4 respectively) the received data packets are assembled in the sequence of their appearance in a subscriber station operating as a secondary station (TS2) to constitute data blocks (BL2, BL3 and BL2, BL3, BL4 respectively), and
- the assembled data blocks (BL2, BL3 and BL2, BL3, BL4 respectively) are assembled in the sequence of their appearance in the secondary station (TS2) to constitute the transmitted items of information (INFO) or the transmitted file contents (COFI) respectively.

2. A process according to claim 1 characterised in that the data packets (D1, L2, L3 and L1, D2, L3, L4 respectively) are provided in the sequence in respect of time of their transmission with a consecutively serially numbered packet number (1, 2, 3, and 1, 2, 3, 4 respectively) which is respectively transmitted together with the data packet in question.

3. A process according to claim 1 or claim 2 characterised in that
- in the highest-rank plane (AP) of the primary station (TS1) a first command (APDA-REQ in 61 and APSENFI-REQ in 113 respectively) is triggered, which causes the items of information (INFO) or file contents (COFI) respectively which are to be transmitted to be subdivided into data blocks (BL2, BL3 and BL2, BL3, BL4 respectively),
- the first command (APDA-REQ and APSENFI-REQ respectively) triggers in the second highest-rank plane (TR) of the primary station (TS1) at least as many second commands (TRDA-REQ in 62 and 63 of 112) as there are data blocks (BL2, BL3 and BL3, BL4 respectively) contained in the items of information (INFO) or file contents (COFI) which are to be transmitted,
- each second command (TRDA-REQ) which belongs to a data block (BL2 and BL3 respectively) which together with its first identification (DB, DL and FB, FL respectively) is longer than the maximum permitted length of the data packet causes the data block (BL2 and BL3 respectively) in question together with its first identification (DB, DL and FB, FL respectively) to be subdivided into data packets (D1, L2 and D2, L3 respectively), and
- each second command (TRDA-REQ) in the third highest-rank plane (DK) of the primary station (TS1) triggers at least as many third commands (DKDA-REQ in 64, 65 or 66 of 112) as there are data packets (D1, L2 or L3 and D2, L3 or L4 respectively) contained in the data block (BL2 or BL3 and BL3 or BL4 respectively) belonging to the second command (TRDA-REQ) in question.

4. A process according to one of claims 1 to 3 characterised in that
- the appearance in the secondary station (TS2) of the received last data packet (L2, L3 and L3, L4 respectively) of a data block (BL2, BL3 and BL3, BL4 respectively) in the second highest-rank plane (TR) of the secondary station (TS2) triggers a respective display (TRDA-IND in 68 and 69 respectively of 112), and
- the appearance in the secondary station (TS2) of the received last data packet (L3 and L4 respectively) of the last data block (BL3 and BL4 respectively) of the items of information (INFO) and file contents (COFI) respectively in the highest-rank plane (AP) of the secondary station (TS2) triggers a respective display (APDA-IND in 70 and APSENFI-IND in 120 respectively) for the purposes of display of the end of transmission of all items of information (INFO) and file contents (COFI) to be transmitted.

5. A process according to one of claims 1 to 4 characterised in that after the reception in the secondary station (TS2) of each last data packet (L2 and L3 respectively) of a data block (B2 and BL3 respectively) comprising a plurality of data packets (D1, L2 and D2, L3 respectively) in the third-highest plane (DK) of the secondary station (TS2) a command (DKDA-REQ in 67 of 112) is triggered to start the transmission of a first check packet (A) if reception of the data block (BL2 and BL3 respectively) in question was error-free or a second check packet (E) if reception of the data block (BL2 and BL3 respectively) in question was defective.

6. A process according to one of claims 3 to 5 characterised in that
- in the case of a file content (COFI) to be transmitted the first command (APSENFI-REQ in 113), prior to triggering of the second commands (TRDA-REQ in 62 and 63 of 112) in the second highest-rank plane (TR) of the primary station (TS1) triggers a preceding additional second command (TRDA-REQ in 114) which in the third highest-rank plane (DK) of the primary station (TS1) triggers an additional third command (DKDA-REQ in 116) for the purposes of transmitting a name (FNA) of the file to be transmitted, wherein associated with the name (FNA) of the file is a third identification (FH) which together with the name (FNA) of the file forms a data block (BL2) which contains a single data packet (L1) which is then transmitted from the primary station (TS1) to the secondary station (TS2) where its reception in the second highest-rank plane (TR) triggers a display (TRDA-IND in 118), and
- the last data block (BL4) of the file is provided with a first identification (FL) which is different from the first identification (DL) of the last data block (BL3) of items of information (INFO) to be transmitted, which are not contained in a file.

7. A process according to claim 6 characterised in that after reception in the secondary station (TS2) of the last data packet (L4) of the last data block (BL4) of the file in the second highest-rank plane (TR) of the secondary station (TS2) a first additional command (TRDA-REQ in 119) is triggered to start a transmission of a first check block (FA) if the reception of the file was error-free or a second check block (FE) if the reception of the file was defective, wherein the first additional command (TRDA-REQ) triggered in the second highest-rank plane (TR), in the third highest-rank plane (DK) of the secondary station (TS2), triggers a second additional command (DKDA-REQ in 117) for the purposes of starting the transmission from the secondary station (TS2) to the primary station (TS1) of a single packet (L1) contained in the first and the second check block (FA, FE) respectively.

8. A process according to claim 6 or claim 7 characterised in that
- the file to be transmitted is called up (see Figure 13) by the secondary station (TS2) by a procedure whereby in a preceding process step (VS5) in the highest-rank plane (AP) of the secondary station (TS2) a command (APGETFI-REQ in 131) is triggered which in the second highest-rank plane (TR) of the secondary station (TS2) triggers a command (TRDA-REQ in 130) which in turn in the third highest-rank plane (DK) of the secondary station (TS2) triggers a command (DKDA-REQ in 129) to start transmission of the name (FNA) of the file to be transmitted, wherein associated with the name (FNA) of the file is a fourth identification (GF) which together with the name (FNA) of the file forms a data block (BLx) which includes a single data packet (Lx) which is then transmitted from the secondary station (TS2) to the primary station (TS1) where reception thereof both in the second highest-rank plane (TR) and also in the highest-rank plane (AP) triggers a respective display (TRDA-IND in 128 and APGETFI-IND in 127 respectively) to display the end of transmission of the name (FNA) of the called-up file, and
- then in the highest-rank plane (AP) of the primary station (TS1) the first command (APSENFI-REQ in 113: Figure 12) of a subsequent process step (VS4) is triggered, which causes the file together with its name (FNA) to be transmitted from the primary station (TS1) to the secondary station (TS2).

9. A process according to one of claims 1 to 8 characterised in that the transmission network (1) is a switchable network (for example a telephone network) and that prior to the transmission of the items of information (INFO) and/or file contents (COFI) in a first process step (VS1) a transmission connection is made between the two subscriber stations (TS1, TS2).

10. A process according to claim 9 characterised in that
- in each case in the first process step (VS1) (see Figure 8) in the highest-rank plane (AP) of the primary station (TS1) a first command (APCO-REQ in 30) is triggered, which respectively triggers in the second-highest rank plane (TR) of the primary station (TS1) a second command (TRCO-REQ in 31) and after the execution thereof a third command (TRDA-REQ in 32),
- the second command (TRCO-REQ) respectively triggers in the third highest-rank plane (DK) of the primary station (TS1) a fourth command (DKCO-REQ in 34) and after the execution thereof a fifth command (DKDA-REQ in 35),
- the fourth command (DKCO-REQ) causes on the one hand physical connections to be made between the primary station (TS1) and a subscriber station which is provided with an address (ADR) and which operates as a secondary station (TS2) and thereafter on the other hand a check command frame (SABM) to be transmitted from the primary station (TS1) to the secondary station (TS2) for the purposes of production there of logic connections,
- the execution of the fourth command (DKCO-REQ) is communicated to the primary station (TS1) by a procedure whereby a check answer frame (UA, DM or FRMR) is transmitted from the secondary station (TS2) by way of the transmission network (1) to the primary station (TS1), which is a first answer check frame (UA) if reception of the command check frame (SABM) was error-free, a second answer check frame (DM) if reception of the command check frame (SABM) was defective, and a third answer check frame (FRMR) if reception of the command check frame (SABM) was seriously defective,
- after reception of the first answer check frame (UA) the fifth command (DKDA-REQ in 35) causes a check packet (C) to be transmitted from the primary station (TS1) by way of the transmission network (1) to the secondary station (TS2) for the purposes of initiating the latter,
- after execution of the fifth command (DKDA-REQ) the third command (TRDA-REQ in 32) in the third highest-rank plane (DK) of the primary station (TS1) triggers a sixth command (DKDA-REQ in 36) for the purposes of starting transmission from the primary station (TS1) to the secondary station (TS2) of a single data packet (L0) of a third check block (CO) which as information content contains at least one identifier (INI) of the primary station (TS1), and
- reception in the secondary station (TS2) of the third check block (CO) triggers there both in the second highest-rank plane (TR) and also in the highest-rank plane (AP) a respective display (TRDA-IND in 43 and APCO-IND in 45 respectively).

11. A process according to claim 10 characterised in that the third check block (CO) as information content contains a maximum value (L_{TS1}) of the block length, which is wanted by the primary station (TS1).

12. A process according to one of claims 1 to 10 characterised in that at the beginning prior to transmission of the items of information (INFO) and the file contents (COFI) respectively, in a first process step (VS1) a maximum value (L_{TS1}) of the block length, which is wanted by the primary station (TS1), is transmitted from the primary station (TS1) to the secondary station (TS2).

13. A process according to claim 11 or claim 12 characterised in that
- the maximum value (L_{TS1}) of the block length, which is received in the secondary station (TS2) and which is wanted by the primary station (TS1), is there compared to a maximum value (L_{TS2}) of the block length, which is wanted by the secondary station (TS2),
- the secondary station (TS2) then communicates to the primary station (TS1) the lowest of the two wanted values (L_{TS1}, L_{TS2}), and
- the two subscriber stations (TS1, TS2), in subsequent transmission of the items of information (INFO) and the file contents (COFI) respectively, use the lowest of the two wanted values (L_{TS1}, L_{TS2}) as the value (L_{TS}) of the block length.

14. A process according to claim 13 characterised in that the secondary station (TS2) communicates to the primary station (TS1) the lowest of the two wanted values (L_{TS1}, L_{TS2}) of the block length, by means of a further check block (CC).

15. A process according to claim 14 characterised in that reception of the maximum value (L_{TS1}) of the block length, which is wanted by the primary station (TS1), in the highest-rank plane (AP) of the secondary station (TS2) triggers a display (APCO-IND in 45) which in the second highest-rank plane (TR) of the secondary station (TS2) triggers a command (TRDA-REQ in 44) which causes the further check block (CC) to be transmitted by a procedure whereby in the third highest-rank plane (DK) of the secondary station (TS2) it triggers a command (DKDA-REQ in 42) which causes a single data packet (L0) contained in the further check block (CC) to be transmitted from the secondary station (TS2) by way of the transmission network (1) to the primary station (TS1) where reception of the further check block (CC) in the second highest-rank plane (TR) triggers a display (TRDA-IND in 33), as a sign that the first process step (VS1) is terminated.

16. A process according to one of claims 9 to 15 characterised in that
- after transmission of all items of information (INFO) and/or file contents (COFI) to be transmitted, in each case in a last process step (VS3) (see Figure 10), in the highest-rank plane (AP) of the primary station (TS1) a first command (APDC-REQ in 90) is triggered, which in each case in the second highest-rank plane (TR) of the primary station (TS1) triggers a second command (TRDA-REQ in 91) for the purposes of transmission of a last check block (DC) and after execution of the second command (TRDA-REQ) triggers a third command (TRDC-REQ in 92),
- the second command (TRDA-REQ) in the third highest-rank plane (DK) of the primary station (TS1) triggers a fourth command (DKDA-REQ in 93) for the purposes of transmission from the primary station (TS1) to the secondary station (TS2) of a single data packet (L4) contained in the last check block (DC), wherein reception of the last check block (DC) in the secondary station (TS2) causes initiation of the latter to be nullified and a respective display (TRDA-IND in 100 and APDC-IND in 101 respectively) to be triggered in the second highest-rank plane (TR) and in the highest-rank plane (AP) of the secondary station (TS2),
- after execution of the fourth command (DKDA-REQ) the third command (TRDC-REQ in 92) in the third highest-rank plane (DK) of the primary station (TS1) triggers a fifth command (DKDC-REQ in 94) for the transmission of a last command check frame (DISC) from the primary station (TS1) by way of the transmission network (1) to the secondary station (TS2),
- the reception there of the last command check frame (DISC) in the third highest-rank plane (DK) of the secondary station (TS2) causes breaking of logic connections present there, that being communicated to the primary station (TS1) by means of a last answer check frame (UA) which is transmitted from the secondary station (TS2) by way of the transmission network (1) to the primary station (TS1), and
- after reception there of the last answer check frame (UA) the fifth command (DKDC-REQ) causes physical connections present between the two subscriber stations (TS1, TS2) to be broken.

17. A process according to one of claims 2 to 16 characterised in that
- packets (L0 to L5, D1, D2, Lx, C, A, E, L0 of CC, L1 of FA, L1 of FE) which are to be transmitted together with, if present, their packet number (0 to 5) and their second identification (D, L) and command check frames (SABM, DISC) to be transmitted, prior to transmission thereof, in the third highest-rank plane (DK) of a subscriber station operating as a transmitting station (TS1 and TS2 respectively), are provided with an error-detecting code for the purposes of producing a respective encoded frame (13;14;15;16;FCS;17),
- after reception of the latter in a subscriber station operating as a receiving station (TS2 and TS1 respectively) there in the third highest-rank plane (DK) the received encoded frame (13;14;15;16;FCS;17) is decoded and checked for the presence of errors by means of the error-detecting code and
- then in the third highest-rank plane (DK) of the receiving station (TS2 and TS1 respectively) a display (DKDA-IND in 26 of 18a to 18m) is triggered.

18. A process according to claim 17 characterised in that the encoded frame (13;14;15;16;FCS;17) is encoded in accordance with a HDLC-standard.

19. A process according to claim 17 or claim 18 characterised in that
- the transmission of each encoded frame (13;14;15;16;FCS;17) is effected (see Figure 7) by a procedure whereby in the lowest-rank plane (PH) of the transmitting station (TS1 and TS2 respectively) a command (PHDA-REQ in 22 of 18a to 18m) is triggered for the purposes of subdividing the encoded frame (13;14;15;16;FCS;17) into bit groups (BY0 to BY7) which are transmitted in time succession within a transmission time associated with the encoded frame (13;14;15;16;FCS;17) from the transmitting station (TS1 and TS2 respectively) by way of the transmission network (1) to the receiving station (TS2 and TS1 respectively), and
- the bit groups (BY0 to BY7) received in the receiving station (TS2 and TS1 respectively) are assembled there in the sequence of their reception to constitute an encoded reception frame (13;14;15;16;FCS;17) and then in the lowest-rank plane (PH) of the receiving station (TS2 and TS1 respectively) trigger a display (PHDA-IND in 24 of 18a to 18m).

20. A process according to claim 19 characterised in that the bit group (BY0 to BY7) selected is a byte which is followed by a stop bit (ST).

21. A process according to one of claims 17 to 20 characterised in that after checking for the presence of errors in each case in the lowest-rank plane (PH) of the receiving station (TS2 and TS1 respectively) a command (PHDA-REQ in 25 of 18a to 18m) is triggered for the purposes of transmission by way of the transmission network (1) of an answer check frame (RR, RNR or FRMR) serving as a reception acknowledgement, the reception of which in the lowest-rank plane (PH) then triggers a display (PHDA-IND in 23 of 18a to 18m) whereupon the information content of the packet last transmitted from the transmitting station (TS1 and TS2) to the receiving station (TS2 and TS1 respectively) is deemed to be correctly received if the answer check frame (RR, RNR, FRMR) is a fourth answer check frame (RR), it is deemed to be defectively received if the answer check frame (RR, RNR, FRMR) is a fifth answer check frame (RNR), and it is deemed to be seriously defectively received if the check answer frame (RR, RNR, FRMR) is a sixth check answer frame (FRMR).

22. A process according to claim 10 or claim 21 characterised in that after the transmission of a packet by a subscriber station (TS1 and TS2 respectively) subsequent reception in the same subscriber station (TS1 and TS2 respectively) of the fifth answer check frame (RNR) causes transmission repetition of the packet in question.

23. A process according to one of claims 1 to 22 characterised that, when transmission repetitions occur, the number thereof is counted and compared to a predetermined maximum value (for example three) and that when said predetermined maximum value is exceeded any further transmission repetition is prevented with simultaneous triggering of a message "serious error" (APAB-IND, TRAB-IND, DKAB-IND or PHAB-IND) in all planes (AP, DK, TR or PH) affected.

## Revendications

1. Procédé d'exploitation transparente d'un dispositif de transmission destiné à transmettre, par un réseau de transmissions (1), des informations (INFO) et/ou des contenus de fichiers de données (COFI), appelés simplement fichiers dans ce qui suit, entre deux stations participantes (TS1, TS2) qui comportent toutes deux un agencement d'ordinateur (7) et interviennent toutes deux comme stations émettrices/réceptrices,
caractérisé
en ce qu'il existe, dans l'agencement d'ordinateur (7) de chacune des stations participantes (TS1, TS2) un plan du rang le plus élevé, ou de premier rang (AP), un plan de rang inférieur au précédent ou de deuxième rang (TR), un plan de rang inférieur au précédent ou de troisième rang (DK) et un plan de rang inférieur au précédent ou de dernier rang (PH) dans lesquels des ordres et/ou des indications sont déclenchés, la direction de passage des signaux (SR_{TS1}, SR_{TS2}) des ordres va respectivement d'un plan de rang supérieur vers un plan de rang inférieur et la direction de passage des signaux (SI_{TS1}, SI_{TS2}) des indications va respectivement d'un plan de rang inférieur vers un plan de rang supérieur,
en ce que les utilisateurs du dispositif de transmission et/ou les applications dans lesquelles le dispositif de transmission est utilisé n'accèdent qu'au plan de premier rang (AP) des stations participantes (TS1, TS2),
en ce que le plan de premier rang (AP) d'une station participante intervenant comme station primaire (TS1) provoque la division des informations (INFO) et/ou des contenus de fichiers (COFI), à transmettre, en blocs de données (BL2, BL3 ou bien BL2, BL3, BL4) qui doivent être transmis chronologiquement l'un après l'autre et qui contiennent chacun au moins un paquet de données,
en ce qu'au moins le dernier bloc de données (BL3 ou bien BL4) des informations (INFO) et/ou des contenus de fichiers (COFI) à transmettre est pourvu d'une première étiquette (DL ou bien FL),
en ce que le plan de deuxième rang (TR) amène chacun des blocs de données (BL2 ou bien BL3) qui est avec sa première étiquette (DB, DL ou bien FB, FL) plus long qu'une longueur maximale admissible du paquet de données à être divisé avec sa première étiquette (DB, DL ou bien FB, FL) en paquets de données (D1, L2 ou bien D2, L3) qui doivent être transmis chronologiquement l'un après l'autre à l'intérieur d'un temps de transmission associé au bloc de données concerné (BL2 ou bien BL3),
en ce qu'au moins le dernier paquet de données (L2, L3 ou bien L1, L3, L4) est pourvu à l'intérieur de chaque bloc de données (BL2, BL3, ou bien BL2, BL3, BL4) d'une deuxième étiquette (L) qui est respectivement transmise simultanément avec le paquet de données concerné (L2, L3, ou bien L1, L3, L4),
en ce que les paquets de données reçus sont assemblés, après la transmission des paquets de données (D1, L2, L3 ou bien L1, D2, L3, L4) en blocs de données (BL2, BL3 ou bien BL2, BL3, BL4) selon la succession de leur apparition dans une station participante intervenant comme station secondaire (TS2), et
en ce que les blocs de données assemblés (BL2, BL3, ou bien BL2, BL3, BL4) sont assemblés selon la succession de leur apparition dans la station secondaire TS2), pour former les informations transmises (INFO) ou les contenus de fichiers transmis (COFI).

2. Procédé selon la revendication 1, caractérisé en ce que les paquets de données (D1, L2, L3 ou bien L1, D2, L3, L4) sont pourvus, selon la succession chronologique de leur transmission, d'un numéro de paquet à numérotation en sens croissant (1, 2, 3 ou bien 1, 2, 3, 4) qui est respectivement transmis en même temps que le paquet de données concerné.

3. Procédé selon la revendication 1 ou 2, caractérisé
en ce qu'un premier ordre (APDA-REQ en 61 ou bien APSENFI-REQ en 113) qui provoque la division, en blocs de données (BL2, BL3 ou bien BL2, BL3, BL4), des informations (INFO) ou des contenus des fichiers (COFI) à transmettre est déclenché dans le plan de premier rang (AP) de la station primaire (TS1),
en ce que le premier ordre (APDA-REQ ou bien APSENFI-REQ) déclenche dans le plan de deuxième rang (TR) de la station primaire (TS1) au moins autant de deuxièmes ordres (TRDA-REQ en 62 et 63 de 112) qu'il existe de blocs de données (BL2, BL3, ou bien BL3, BL4) dans les informations (INFO) ou les contenus de fichiers (COFI) à transmettre,
en ce chaque deuxième ordre (TRDA-REQ) qui appartient à un bloc de données (BL2 ou bien BL3) qui est avec sa première étiquette (DB, DL ou bien FB, FL) plus long que la longueur maximale admissible du paquet de données provoque la division, en paquets de données (D1, L2, ou bien D2, L3), du bloc de données concerné (BL2 ou bien BL3) avec sa première étiquette (DB, DL, ou bien FB, FL), et
en ce que chaque deuxième ordre (TRDA-REQ) déclenche dans le plan de troisième rang (DK) de la station primaire (TS1) au moins autant de troisièmes ordres (DKDA-REQ en 64, 65 ou 66 de 112) qu'il existe de paquets de données (D1, L2 ou L3 ou bien D2, L3 ou L4) contenus dans le bloc de données (BL2 ou BL3 ou bien BL3 ou BL4) appartenant au deuxième ordre concerné (TRDA-REQ).

4. Procédé selon l'une des revendications 1 à 3, caractérisé
en ce que l'apparition, dans la station secondaire (TS2), du dernier paquet de données (L2, L3 ou bien L3, L4) d'un bloc de données (BL2, BL3 ou bien BL3, BL4) reçu dans le plan de deuxième rang (TR) de la station secondaire (TS2) déclenche respectivement une indication (TRDA-IND en 68 ou bien 69 de 112) et
en ce que l'apparition, dans la station secondaire (TS2), du dernier paquet de données reçu (L3 ou bien L4) du dernier bloc de données (BL3 ou bien BL4) des informations (INFO) ou des contenus de fichiers (COFI) déclenche dans le plan de premier rang (AP) de la station secondaire (TS2) une indication respective (APDA-IND en 70 ou bien APSENFI-IND en 120) destinée à indiquer la fin de la transmission de toutes les informations (INFO) ou bien de tous les contenus de fichiers (COFI) à transmettre.

5. Procédé selon l'une des revendications 1 à 4, caractérisé en ce qu'un ordre (DKDA-REQ en 67 de 112) est déclenché dans le plan de troisième rang (DK) de la station secondaire (TS2), après la réception dans la station secondaire de chaque dernier paquet de données (L2 ou bien L3) d'un bloc de données (BL2 ou bien BL3) qui se compose de plusieurs paquets de données (D1, L2 ou bien D2, L3), ordre qui est déclenché en vue de débuter la transmission d'un premier paquet de contrôle (A), si la réception du bloc de données concerné (BL2 ou bien BL3) est exempte de défauts, ou d'un deuxième paquet de contrôle (E) si la réception du bloc de données concerné (BL2 ou bien BL3) est défectueuse.

6. Procédé selon l'une des revendications 3 à 5, caractérisé
en ce que, dans le cas d'un contenu de fichier (COFI) à transmettre, le premier ordre (APENSI-REQ en 113) déclenche, avant le déclenchement des deuxièmes ordres (TRDA-REQ en 62 et 63 dans 112) dans le plan de deuxième rang (TR) de la station primaire (TS1), un deuxième ordre additionnel précédent (TRDA-REQ en 114) qui déclenche dans le plan de troisième rang (DK) de la station primaire (TS1) un troisième ordre additionnel (DKDA-REQ en 116) en vue de transmettre un nom (FNA) du fichier à transmettre, une troisième étiquette (FH) étant associée au nom (FNA), étiquette qui constitue avec le nom (FNA) du fichier un bloc de données (BL2) qui contient un paquet unique de données (Ll) qui est ensuite transmis de la station primaire (TS1) à la station secondaire (TS2) où sa réception déclenche une indication (TRDA-IND en 118) dans le plan de deuxième rang (TR), et
en ce que le dernier bloc de données (BL4) du fichier est pourvu d'une première étiquette (FL) qui est différente de la première étiquette (DL) du dernier bloc de données (BL3) d'informations (INFO) à transmettre, non contenues dans un fichier.

7. Procédé selon la revendication 6, caractérisé en ce que, après la réception, dans la station secondaire (TS2), du dernier paquet de données (L4) du dernier bloc de données (BL4) du fichier dans le plan de deuxième rang (TR) de la station secondaire (TS2), un premier ordre additionnel (TRDA-REQ en 119) est déclenché en vue de débuter une transmission d'un premier bloc de contrôle (FA) si la réception du fichier est exempte de défauts, ou d'un deuxième bloc de contrôle (FE) si la réception du fichier est défectueuse, le premier ordre additionnel (TRDA-REQ) déclenché dans le plan de deuxième rang (TR) déclenchant dans le plan de troisième rang (DK) de la station secondaire (TS2) un deuxième ordre additionnel (DKDA-REQ en 117) en vue de débuter la transmission à partir de la station secondaire (TS2) vers la station primaire (TS1) d'un paquet unique (L1) contenu dans le premier ou bien le deuxième blocs de données (FA ou FE).

8. Procédé selon la revendication 6 ou 7, caractérisé
en ce que le fichier à transmettre est appelé par la station secondaire (TS2) (voir Fig. 13) tandis qu'un ordre (APGEFTI-REQ en 131) est déclenché dans une étape précédente du procédé (VS5) dans le plan de premier rang (AP) de la station secondaire (TS2), ordre qui déclenche dans le plan de deuxième rang (TR) de la station secondaire (TS2) un ordre (TRDR-REQ en 130) qui déclenche lui-même dans le plan de troisième rang (DK) de la station secondaire (TS2) un ordre (DKDA-REQ en 129) de débuter la transmission du nom (FNA) du fichier à transmettre, une quatrième étiquette (GF) étant associée au nom (FNA) du fichier, étiquette qui constitue avec le nom (FNA) du fichier un bloc de données (BLx), qui contient un paquet unique de données (Lx), qui est ensuite transmis de la station secondaire (TS2) à la station primaire (TS1) où sa réception déclenche tant dans le plan de deuxième rang (TR) que dans le plan de premier rang (AP) une indication respective (TRDA-IND en 128 ou APGEFTI-IND en 127) destinée à indiquer la fin de la transmission du nom (FNA) du fichier appelé, et
en ce que le premier ordre (APSENFI-REQ en 113: Fig. 12) d'une étape suivante (VS4) du procédé est ensuite déclenché dans le plan de premier rang (AP) de la station primaire (TS1), ordre qui provoque la transmission du fichier ainsi que de son nom (FNA), à partir de la station primaire (TS1) vers la station secondaire (TS2).

9. Procédé selon l'une des revendications 1 à 8, caractérisé en ce que le réseau de transmission (1) est un réseau commutable (par exemple un réseau téléphonique) et en ce qu'une connexion de transmission est établie entre les deux stations participantes (TS1, TS2) dans une première étape (VS1) du procédé, avant la transmission des informations (INFO) et/ou des contenus de fichiers (COFI).

10. Procédé selon la revendication 9, caractérisé
en ce qu'un premier ordre (APCO-REQ en 30) est déclenché respectivement à la première étape (VS1) du procédé (voir Fig. 8) dans le plan de premier rang (AP) de la station primaire (TS1), ordre qui déclenche respectivement dans le plan de deuxième rang (TR) de la station primaire (TS1) un deuxième ordre (TRCO-REQ en 31) et, après son exécution, un troisième ordre (TRDA-REQ en 32),
en ce que le deuxième ordre (TRCO-REQ) déclenche respectivement dans le plan de troisième rang (DK) de la station primaire (TS1) un quatrième ordre (DKCO-REQ en 34) et après l'exécution de celui-ci un cinquième ordre (DKDA-REQ en 35),
en ce que le quatrième ordre (DKCO-REQ) provoque d'une part la réalisation de liaisons physiques entre la station primaire (TS1) et une deuxième station participante pourvue d'une adresse (ADR) et intervenant comme station secondaire (TS2) et ensuite, d'autre part, la transmission à partir de la station primaire (TS1) vers la station secondaire (TS2) d'un cadre d'ordre (SABM) de contrôle destiné à y établir des liaisons logiques,
en ce que l'exécution du quatrième ordre (DKCO-REQ) de la station primaire est communiquée tandis qu'un cadre de réponse (UA, DM ou FRMR) de contrôle est transmis de la station secondaire (TS2) par le réseau de transmission (1) à la station primaire (TS1), cadre qui est un premier cadre de contrôle (UA) de réponse si la réception du cadre de contrôle (SABM) d'ordre a été exempte de défauts, est un deuxième cadre de contrôle (DM) de réponse si la réception du cadre de contrôle (SABM) d'ordre a été défectueuse et est un troisième cadre de contrôle (FRMR) de réponse si la réception du cadre de contrôle (SABM) d'ordre a été sévèrement défectueuse,
en ce que, le cinquième ordre (DKDA-REQ en 35) provoque, après la réception du premier cadre de contrôle (UA) de réponse, la transmission d'un paquet de contrôle (C) à partir de la station primaire (TS1) par le réseau de transmission (1) à la station secondaire (TS2) en vue d'un lancement de cette dernière,
en ce que le troisième ordre (TRDA-REQ en 32) déclenche dans le plan de troisième rang (DK) de la station primaire (TS1), après l'exécution du cinquième ordre (DKDA-REQ), un sixième ordre (DKDA-REQ en 36) pour débuter la transmission à partir de la station primaire (TS1) vers la station secondaire (TS2) d'un paquet unique de données (L0) d'un troisième bloc de contrôle (CO) qui contient comme contenu d'informations au moins un identifiant (INI) de la station primaire (TS1), et
en ce que la réception du troisième bloc de contrôle (CO dans la station secondaire (TS2) y déclenche, ainsi que dans le plan de deuxième rang (TR) et dans le plan de premier rang (AP), une indication respective (TRDA-IND en 43 ou bien APCO-IND en 45).

11. Procédé selon la revendication 10, caractérisé en ce que le troisième bloc de contrôle (CO) contient comme contenu d'informations une valeur maximale (L_{TS1}) de la longueur de bloc, souhaitée par la station primaire (TS1).

12. Procédé selon l'une des revendications 1 à 10, caractérisé en ce qu'une valeur maximale (R_{TS1}) de la longueur de bloc souhaitée par la station primaire (TS1) est transmise de la station primaire (TS1) à la station secondaire (TS2) dans une première étape (VS1) du procédé, au commencement, avant la transmission des informations (INFO) ou du contenu de fichiers (COFI).

13. Procédé selon la revendication 11 ou 12, caractérisé
en ce que la valeur maximale (L_{TS1}) de la longueur de bloc souhaitée par la station primaire (TS1), reçue dans la station secondaire (TS2), y est comparée à une valeur maximale (L_{TS2}) de la longueur de bloc souhaitée par la station secondaire (TS2),
en ce que la station secondaire (TS2) communique ensuite à la station primaire (TS1) la plus basse des deux valeurs souhaitées (L_{TS1}, L_{TS2}) et
en ce que les deux stations participantes (TS1, TS2) utilisent comme valeur (L_{TS}) de la longueur de bloc, lors de la transmission ultérieure des informations (INFO) ou des contenus de fichiers (COFI), la valeur la plus basse des deux valeurs souhaitées (L_{TS1} et L_{TS2}).

14. Procédé selon la revendication 13, caractérisé en ce que la station secondaire (TS2) communique à la station primaire (TS1) la plus basse des deux valeurs souhaitées (L_{TS1}, L_{TS2}) de longueur de bloc au moyen d'un bloc de contrôle additionnel (CC).

15. Procédé selon la revendication 14, caractérisé en ce que la réception, dans le plan de premier rang (AP) de la station secondaire (TS2), de la valeur maximale (L_{TS1}) de la longueur de bloc souhaitée par la station primaire (TS1) déclenche une indication (APCO-IND en 45) qui déclenche dans le plan de deuxième rang (TR) de la station secondaire (TS2) un ordre (TRDA-REQ en 44) qui provoque la transmission du bloc additionnel de contrôle (CC) tout en déclenchant dans le plan de troisième rang (DK) de la station secondaire (TS2) un ordre (DKDA-REQ en 42) qui provoque la transmission d'un paquet unique de données (L0) contenu dans le bloc additionnel de contrôle (CC), à partir de la station secondaire (TS2) par le réseau de transmission (1) vers la station primaire (TS1) où la réception du bloc additionnel de contrôle (CC) déclenche dans le plan de deuxième rang (TR) une indication (TRDA-IND en 33) qui termine la première étape (VS1) du procédé.

16. Procédé selon l'une des revendications 9 à 15, caractérisé
en ce qu'un premier ordre (APDC-REQ en 90) est déclenché respectivement dans le plan de premier rang (AP) de la station primaire (TS1), dans une dernière étape (VS3) du procédé (voir Fig. 10), après la transmission de toutes les informations (INFO) ou tous les contenus de fichiers (COFI) à transmettre, ordre qui déclenche respectivement dans le plan de deuxième rang (TR) de la station primaire (TS1) un deuxième ordre (TRDA-REQ en 91) en vue d'une transmission d'un dernier bloc de contrôle (DC) et, après l'exécution du deuxième ordre (TRDA-REQ), un troisième ordre (TRDC-REQ en 92),
en ce que le deuxième ordre (TRDA-REQ) déclenche dans le plan de troisième rang (DK) de la station primaire (TS1) un quatrième ordre (DKDA-REQ en 93) en vue d'une transmission d'un dernier paquet unique de données (L4) contenu dans le dernier bloc de contrôle (DC), à partir de la station primaire (TS1) vers la station secondaire (TS2), la réception du dernier bloc de commande (DC) dans la station secondaire (TS2) provoquant une annulation du lancement de cette dernière et le déclenchement, dans le plan de deuxième rang (TR) ainsi que dans le plan de premier rang (AP) de la station secondaire (TS2), d'une indication respective (TRDA-IND en 100 ou bien PADC-IND en 101),
en ce que le troisième ordre (TRDC-REQ en 92) déclenche dans le plan de troisième ordre (DK) de la station primaire (TS1), après l'exécution du quatrième ordre (DKDA-REQ), un cinquième ordre (DKDC-REQ en 94) en vue de la transmission d'un dernier cadre de commande (DISC) d'ordre à partir de la station primaire (TS1) vers la station secondaire (TS2) par le réseau de transmission (1),
en ce que la réception à la station secondaire (TS2) du dernier cadre de contrôle (DISC) d'ordre provoque dans le plan de troisième rang (DK) de la station secondaire (TS2) le déclenchement de connexions logiques qui y sont présentes, ce qui est communiqué à la station primaire (TS1) au moyen d'un dernier cadre de contrôle (UA) de réponse qui est transmis de la station secondaire (TS2) par le réseau de transmission (1) à la station primaire (TS1), et
en ce que le cinquième ordre (DKDC-REQ) provoque, après la réception du dernier cadre de contrôle (UA) de réponse à la station primaire, l'interruption des connexions physiques existantes entre les deux stations participantes (TS1, TS2).

17. Procédé selon l'une des revendications 2 à 16, caractérisé
en ce que des paquets à transmettre (L0 à L5, D1, D2, Lx, C, A, E, L0 de CC, L1 de FA, L1 de FE) accompagnés, si ceux-ci existent, de leur numéro de paquets (0 à 5) et de leur deuxième étiquette (D, L) ainsi que des cadres de contrôle (SABM, DISC) d'ordre à transmettre, sont avant leur transmission pourvus, dans le plan de troisième rang (DK) d'une station participante intervenant comme station émettrice (TS1 ou bien TS2), d'un code de détection de défauts en vue de créer dans chacun un cadre codé respectif (13; 14; 15; 16; FCS; 17),
en ce que le cadre codé (13; 14; 15; 16; FCS; 17) reçu dans une station participante intervenant comme station réceptrice (TS2 ou bien TS1) y est décodé, après sa réception, dans le plan de troisième rang (DK) et y est de plus contrôlé à l'aide du code de détection de défauts quant à des défauts présents, et
en ce qu'une indication est ensuite déclenchée (DKDA-IND en 26 de 18a à 18m) dans le plan de troisième rang (DK) de la station réceptrice (TS2 ou bien TS1).

18. Procédé selon la revendication 17, caractérisé en ce que le cadre codé (13; 14; 15; 16; FCS; 17) est codé selon une norme de procédure de commande de liaison de haut niveau, ou norme HDLC .

19. Procédé selon la revendication 17 ou 18, caractérisé
en ce que la transmission de chaque cadre codé (13; 14; 15; 16; FCS; 17) se produit (voir Fig. 7) tandis qu'un ordre (PHDA-REQ en 22 de 18a à 18m) est déclenché dans le plan de dernier rang (PH) de la station émettrice (TS1 ou bien TS2) en vue de diviser le cadre codé (13; 14; 15; 16; FCS; 17) en groupes de bits (BY0 à BY7) qui sont transmis chronologiquement l'un après l'autre, de la station émettrice (TS1 ou bien TS2) à la station réceptrice (TS2 ou bien TS1) par le réseau de transmission (1), à l'intérieur d'un temps de transmission associé au cadre codé (13; 14; 15; 16; FCS; 17) et
en ce que les groupes de bits (BY0 à BY7) reçus à la station réceptrice (TS2 ou bien TS1) y sont assemblés, selon la succession de leur réception, en un cadre de réception codé (13; 14; 15; 16; FCS; 17) et déclenchent ensuite dans le plan de dernier rang (PH) de la station réceptrice (TS2 ou bien TS1) une indication (PHDA-IND en 24 de 18a à 18m).

20. Procédé selon la revendication 19, caractérisé en ce que c'est un octet, qui est suivi par un bit d'arrêt (ST), qui est choisi comme groupe de bits (BY0 à BY7).

21. Procédé selon l'une des revendications 17 à 20, caractérisé en ce qu'un ordre (PHDA-REQ en 25 de 18a et 18m) est déclenché, après le contrôle quant à la présence de défauts respectivement effectué dans le plan de dernier rang (PF) de la station réceptrice (TS2 ou bien TS1), en vue de la transmission par le réseau de transmission (1) d'un cadre de contrôle (RR, RNR ou FRMR) de réponse qui sert d'accusé de réception, dont la réception déclenche ensuite dans le plan de dernier rang (PH) une indication (PHDA-IND en 23 de 18a à 18m) à la suite de quoi le contenu d'information du paquet transmis en dernier lieu de la station émettrice (TS1 ou bien TS2) à la station réceptrice (TS2 ou bien TS1) est considéré comme correctement reçu si le cadre de contrôle (RR, RNR, FRMR) de réponse est un quatrième cadre de contrôle (RR, RNR, FRMR) de réponse, est évalué comme reçu de façon défectueuse si le cadre de contrôle (RR, RNR, FRMR) de réponse est un cinquième cadre de contrôle (RNR) de réponse, et est évalué comme reçu de façon sévèrement défectueuse si le cadre de contrôle (RR, RNR, FRMR) de réponse est un sixième cadre de contrôle (FRMR) de réponse.

22. Procédé selon la revendication 10 ou 21, caractérisé en ce qu'une réception, dans une station participante (TS1 ou bien TS2), du cinquième cadre de contrôle (RNR) de réponse, après l'expédition d'un paquet par cette même station participante (TS1 ou bien TS2), provoque la répétition de l'envoi du paquet concerné.

23. Procédé selon l'une des revendications 1 à 22, caractérisé en ce que, lorsque des répétitions d'envoi sont effectuées, leur nombre est compté et est comparé à une valeur maximale prédéterminée, (par exemple trois) et en ce qu'un dépassement de cette valeur maximale prédéterminée empêche toute répétition additionnelle de l'envoi et déclenche simultanément un message "défaut sévère" (APAB-IND, TERAB-IND, DKAB-IND ou PHAB-IND) dans tous les plans concernés (AP, DK, TR ou PH).
